# EUROPÄISCHE PATENTSCHRIFT

(11) **EP 3 983 179 B1**
(45) Veröffentlichungstag und Bekanntmachung des Hinweises auf die Patenterteilung: **16.11.2022**
(21) Anmeldenummer: 20747370.3
(22) Anmeldetag: 24.07.2020
(51) Int. Cl.: B25J 9/08, B25J 19/00

(54) **AKTIVES UND PASSIVES ARMMODUL, ENDMODUL, ROBOTERARM UND INDUSTRIEROBOTER**
ACTIVE AND PASSIVE ARM MODULE, END MODULE, ROBOTIC ARM AND INDUSTRIAL ROBOT
MODULE DE BRAS ACTIF ET PASSIF, MODULE D'EXTRÉMITÉ, BRAS DE ROBOT ET ROBOT INDUSTRIEL

(30) Priorität: 25.07.2019 DE 102019120116
(43) Veröffentlichungstag der Anmeldung: 20.04.2022
(73) Patentinhaber: Beckhoff Automation GmbH, 33415 Verl (DE)
(72) Erfinder: PFISTER, Michael, 97840 Hafenlohr (DE); BECKHOFF, Hans, 33415 Verl (DE); JANSSEN, Dirk, 33415 Verl (DE); PRÜSSMEIER, Uwe, 32657 Lemgo (DE); ZECH, Christoph, 1130 Wien (AT); BÜCHINGER, Leo, 2560 Berndorf (AT); MORSCHER, Thomas, 1080 Wien (AT); PEHLIVAN, Armin, 6714 Nüziders (AT); KASTLER, Peter, 1220 Wien (AT); MAIER, Clemens, 6700 Bludenz (AT)
(74) Vertreter: Patentanwaltskanzlei WILHELM & BECK
(86) Internationale Anmeldenummer: PCT/EP2020/070972
(87) Internationale Veröffentlichungsnummer: WO 2021/013994

(56) Entgegenhaltungen:
- EP-A1- 0 054 454
- EP-A1- 3 372 354
- EP-A1- 3 476 548
- EP-A2- 0 901 877
- EP-A2- 1 123 784
- EP-B1- 0 054 454
- CN-A- 106 541 398
- DE-U1-202014 010 032
- US-A1- 2013 340 560
- US-A1- 2018 111 275
- US-B1- 6 628 338

## Beschreibung

Die Erfindung betrifft ein aktives Armmodul und einen Industrieroboter.

Diese Patentanmeldung beansprucht die Priorität der deutschen Patentanmeldung DE 10 2019 120 116.0 vom 25. Juli 2019.

Die technische Disziplin der Automatisierungstechnik (Implementieren, Messen, Steuern/Regeln, Kommunikation, Mensch-Maschine-Schnittstelle, Sicherheit etc.) hat zur Aufgabe, Maschinen inkl. Industrieroboter und/oder Anlagen zu automatisieren, d. h. aus sich heraus selbständig und ohne Mitwirkung eines Menschen betreiben zu können. Ein Grad der Automatisierung (Verhältnis der automatisierten Fertigungsschritte zu allen Fertigungsschritten) in einem Automatisierungssystem ist umso höher, je unabhängiger eine jeweilige Maschine in einer Anlage und/oder eine betreffende Anlage von menschlichen Eingriffen ist bzw. sind.

Ziele der Automatisierungstechnik sind eine Entlastung des Menschen von gefährlichen, anstrengenden und/oder eintönigen Tätigkeiten, eine Verbesserung einer Qualität der produzierten Güter durch die technische Anlage, eine höhere Leistungsfähigkeit der Anlage und eine Kostenreduktion durch die Anlage. Durch allgemeine Fortschritte bei Maschinen, einer Signalerfassung, einer Signalverarbeitung und/oder einer Kommunikation (Vernetzung) von Komponenten innerhalb des Automatisierungssystems, kann der Automatisierungsgrad einer bestehenden oder einer neuen Anlage im Vergleich mit dem Stand der Technik deutlich gesteigert werden.

Für eine Kommunikation weist ein Automatisierungssystem entsprechende Komponenten auf, die meist in einem sogenannten Local Area Network (LAN) miteinander kommunizieren, welches ein räumlich begrenztes Netzwerk ist, in welchem die verschiedenen Netzwerkkomponenten kabellos, optisch, elektrisch und/oder optoelektrisch miteinander gekoppelt sind. Bei den Netzwerkkomponenten kann es sich um einen oder mehrere Server und eine oder mehrere Arbeitsstationen (Maschinen), sogenannte Netzwerkelemente bzw. topologisch: Netzwerkknoten, handeln, welche z. B. über Funkstrecken, Lichtwellenleiter, Koaxialkabel und/oder Twisted-Pair-Kabel (Netzwerkkanten) miteinander verbunden sind und über diese kommunizieren können. Ein in der Automatisierungstechnik eingesetztes Automatisierungs-Kommunikationsnetzwerk entspricht in der Regel einem sogenannten Feldbussystem. Ein Feldbussystem ist ein Bussystem, bei welchem dezentral angeordnete Komponenten einer Maschinenperipherie wie Eingangsmodule, Ausgangsmodule, Antriebe, Bedienterminals etc. über das Feldbussystem mit Steuereinheiten verbunden sind. Für die Datenübertragung steht ein gemeinsamer Übertragungskanal, z. B. in Form des Feldbusses oder als eine Funkstrecke, zur Verfügung. Die Kommunikation zwischen den Netzwerkkomponenten innerhalb des LANs erfolgt auf Basis von Netzwerkprotokollen.

Anwendungsspezifische Industrieroboter (Manipulatoren) sind ein fester Bestandteil von solchen automatisierten Anlagen. Ein Industrieroboter ist eine programmierbare Maschine zur Handhabung, Montage und/oder Bearbeitung von Werkstücken. Der Industrieroboter umfasst im Allgemeinen eine Roboterbasis, einen Roboterarm (Manipulator) mit einer Mehrzahl von gegeneinander schwenkbaren und/oder drehbaren (Drehwinkel beschränkt) proximalen (zu einer Roboterbasis hin) und distalen (von der Roboterbasis entfernt) Armgliedern, einem Endeffektor (beispielsweise einer Roboterhand, Werkzeug, Greifer etc.), einer lokalen Steuerung/Regelung und ggf. einer globalen Steuerung/Regelung. Oft sind Industrieroboter mit unterschiedlichen Sensoren ausgerüstet. Programmiert ist der Industrieroboter in der Lage, einen Arbeitsablauf autonom durchzuführen, oder eine Durchführung einer Aufgabe in Abhängigkeit von Informationen eines Sensors zu variieren.

Die US 2018/0111 275 A1 offenbart ein aktives Armmodul für einen Roboterarm eines modularen Industrieroboters, aufweisend ein erstes Gehäuse, eine erste Anschlussseite, eine zu der ersten Anschlussseite versetzt angeordnete zweite Anschlussseite und eine Antriebseinrichtung, wobei die erste Anschlussseite rotierbar um eine Rotationsachse gegenüber dem ersten Gehäuse gelagert ist und mit der Antriebseinrichtung drehmomentschlüssig verbunden ist, wobei die zweite Anschlussseite drehfest mit dem ersten Gehäuse verbunden ist und bezogen auf eine Anschlussachse orientiert ist, die senkrecht zu der Rotationsachse ausgerichtet ist und in einer Rotationsebene der Rotationsachse verläuft" wobei die Antriebseinrichtung in dem ersten Gehäuse angeordnet und ausgebildet ist, die erste Anschlussseite relativ gegenüber dem ersten Gehäuse steuerbar um die Rotationsachse zu verdrehen, wobei an der ersten und der zweiten Anschlussseite ein weiteres Modul des Roboterarms anschließbar ist, wobei im ersten Gehäuse Mittel zur elektrischen und datentechnischen Verbindung der ersten Anschlussseite mit der zweiten Anschlussseite angeordnet sind, die die erste Anschlussseite elektrisch und leistungselektrisch mit der zweiten Anschlussseite verbunden ist und über die erste Anschlussseite und über die zweite Anschlussseite hinweg ein elektrisches Signal und eine elektrische Leistung mit dem weiteren Modul austauschbar ist. Die US 2018/0111 275 A1 beschreibt weiter die Möglichkeit einen hohlen Zylinder mit Kabeln für Strom und Kommunikation bereitzustellen.

Die EP 3 476 548 A1 und die EP 3 372 354 A1 offenbart aktive Armmodule für einen Roboterarm mit elektrischen, optischen und fluidischen Verbindungen, wobei eine zentralen hohlen Durchführung vorgesehen ist.

Aus der CN 106541398 A ist ein aktives Roboter-Armmodul mit zwei senkrecht zueinander am Gehäuse angeordnete Anschlussseiten bekannt, wobei die radial am Gehäuse angebrachte Anschlussseite mit Hilfe eines im Gehäuse angeordneten Motor drehbar ist. Aus der D1 (US 2018/0111275 A1) ist zwar bekannt, eine Übertragung eines elektrischen Signals bzw. eines Fluids zwischen einer drehfesten und einer drehbaren Anschlussseite in einem aktiven Armmodul auszuführen.

US 2013/340560 A1 offenbart zwei gelagerte Hohlwellen. EP 0 901 877 A2, DE 20 2014 010032 U1, EP 0 054 454 A1 und die EP 1 123 784 A2 offenbaren fluidische und elektrische Übergabevorrichtungen.

Es ist Aufgabe der Erfindung ein besonders einfach herzustellendes und robustes aktives und passives Armmodul, ein Endmodul, einen besonders einfach und flexibel zu montierenden Roboterarm und einen Industrieroboter bereitzustellen.

Diese Aufgabe wird mittels eines aktiven Armmoduls gemäß Patentanspruch 1 und eines Industrieroboters gemäß Patentanspruch 9 gelöst. Vorteilhafte Ausführungsformen sind in den abhängigen Ausführungsformen angegeben.

Es wurde erkannt, dass ein besonders einfach und in Großserienfertigung für einen modularen Roboterarm herstellbares aktives Armmodul dadurch bereitgestellt werden kann, dass das aktive Armmodul ein erstes Gehäuse, eine erste Anschlussseite, eine zu der ersten Anschlussseite versetzt angeordnete zweite Anschlussseite und eine Antriebseinrichtung aufweist. Die erste Anschlussseite ist rotierbar um eine Rotationsachse gegenüber dem ersten Gehäuse gelagert und mit der Antriebseinrichtung drehmomentschlüssig verbunden, wobei die zweite Anschlussseite drehfest mit dem ersten Gehäuse verbunden ist. Die Antriebseinrichtung ist in dem ersten Gehäuse angeordnet und ausgebildet, die erste Anschlussseite relativ gegenüber dem ersten Gehäuse steuerbar um die Rotationsachse zu verdrehen. An der ersten und/oder der zweiten Anschlussseite ist ein weiteres Modul anschließbar, wobei die erste Anschlussseite optisch und/oder elektrisch und/oder leistungselektrisch und/oder fluidisch mit der zweiten Anschlussseite verbunden ist, und über die erste Anschlussseite und/oder über die zweite Anschlussseite hinweg ein optisches Signal und/oder ein elektrisches Signal und/oder eine elektrische Leistung und/oder ein Fluid mit dem weiteren Modul austauschbar ist.

Diese Ausgestaltung hat den Vorteil, dass die Führung des Fluids und/oder der elektrischen Leistung und/oder des optischen und/oder elektrischen Signals innenseitig des aktiven Armmoduls erfolgt und dadurch das aktive Armmodul besonders schnell und automatisch in Großserie gefertigt werden kann. Dadurch kann das aktive Armmodul besonders kostengünstig hergestellt werden. Das aktive Armmodul kann in Verbindung mit weiteren Armmodulen einen Modulbaukasten bilden. Durch Kombination wenigstens zweier Armmodule aus dem Modulbaukasten und Montage aneinander kann ein Roboterarm ausgebildet werden.

Durch die Führung des Fluids und/oder der elektrischen Leistung und/oder des optischen und/oder elektrischen Signals innenseitig des aktiven Armmoduls ist außenseitig des aktiven Armmoduls keine weitere Fluidleitung und/oder Datenleitung und/oder kein weiteres Stromkabel angeordnet und eine ungewollte Beschädigung des aktiven Armmoduls, beispielsweise durch ein Hängenbleiben und/oder ein Verhaken an der Fluidleitung und/oder Datenleitung und/oder dem Stromkabel kann zuverlässig vermieden werden. Auch ist dadurch das aktive Armmodul an einem weiteren aktiven Armmodul besonders schnell und einfach zu einem modularen Roboterarm montierbar.

In einer weiteren Ausführungsform weist das aktive Armmodul eine im ersten Gehäuse angeordnete erste Steuereinrichtung zur Steuerung der Antriebseinrichtung auf, wobei die erste Anschlussseite wenigstens eine erste Kontakteinrichtung und die zweite Anschlussseite eine zweite Kontakteinrichtung zur Datenübertragung aufweist, wobei die erste Kontakteinrichtung zur Übertragung des elektrischen Signals und/oder des optischen Signals mit der zweiten Kontakteinrichtung datentechnisch verbunden ist, wobei die erste Steuereinrichtung mit der ersten Kontakteinrichtung und/oder der zweiten Kontakteinrichtung datentechnisch verbunden ist, wobei die erste Steuereinrichtung ausgebildet ist, auf Grundlage des optischen und/oder elektrischen Signals die Antriebseinrichtung zu steuern. Vorzugsweise sind die erste Kontakteinrichtung und die zweite Kontakteinrichtung korrespondierend zueinander ausgebildet und/oder an der ersten und zweiten Anschlussseite angeordnet.

Durch die Integration der ersten Steuereinrichtung in das aktive Armmodul kann auf weitere Steuergeräte zur Steuerung des aktiven Armmoduls, die beispielsweise in einem separat zu dem Roboterarm aufgestellten Schaltschrank untergebracht sind, verzichtet werden.

In einer weiteren Ausführungsform weisen die erste Anschlussseite eine erste Fluidkontakteinrichtung und die zweite Anschlussseite eine zweite Fluidkontakteinrichtung auf, wobei die erste Fluidkontakteinrichtung fluidisch mit der zweiten Kontakteinrichtung verbunden ist. Über die erste Fluidkontakteinrichtung und die zweite Fluidkontakteinrichtung hinweg ist das Fluid übertragbar. Vorzugsweise sind die erste Fluidkontakteinrichtung und die zweite Fluidkontakteinrichtung korrespondierend zueinander ausgebildet und/oder an der ersten und zweiten Anschlussseite angeordnet. Dadurch wird die Fluidübertragung zwischen den aktiven Armmodulen zu dem Endeffektor sichergestellt.

In einer weiteren Ausführungsform weist die erste Anschlussseite eine erste Leistungskontakteinrichtung sowie eine Anschlussplatte, und die zweite Anschlussseite eine zweite Leistungskontakteinrichtung auf, wobei die erste Leistungskontakteinrichtung und/oder die zweite Leistungskontakteinrichtung mit einer elektrischen Energiequelle zur Leistungsversorgung der Antriebseinrichtung verbindbar ist, wobei die Anschlussplatte zur mechanischen Befestigung des weiteren Moduls (beispielsweise eines weiteren aktiven Armmoduls oder des passiven Armmoduls und/oder des Endmoduls) ausgebildet ist und sich zumindest abschnittsweise in einer Radialebene zur Rotationsachse erstreckt, wobei die Anschlussplatte rotierbar um die Rotationsachse gelagert ist und die erste Leistungskontakteinrichtung an der Anschlussplatte mechanisch befestigt ist, wobei die erste Leistungskontakteinrichtung elektrisch zur Übertragung der elektrischen Leistung mit der zweiten Leistungskontakteinrichtung verbunden ist. Vorzugsweise sind die erste Leistungskontakteinrichtung und die zweite Leistungskontakteinrichtung korrespondierend zueinander ausgebildet und/oder an der ersten und zweiten Anschlussseite angeordnet. Durch die Leistungsübertragung innerhalb des aktiven Armmoduls kann eine (nahezu idealerweise) unbegrenzte Rotierbarkeit der ersten Anschlussseite sichergestellt werden. Ferner kann durch die Anschlussplatte eine gute Befestigungsmöglichkeit bereitgestellt werden.

In einer weiteren Ausführungsform ist die erste Steuereinrichtung mit der ersten Leistungskontakteinrichtung und/oder der zweiten Leistungskontakteinrichtung elektrisch eingangsseitig und ausgangsseitig mit der Antriebseinrichtung verbunden. Die Leistungsversorgung der Antriebseinrichtung kann somit aus der zwischen der ersten und der zweiten Anschlussseite übertragenen elektrischen Leistung erfolgen, so dass keine zusätzliche Leistungsversorgung notwendig ist. Dies reduziert die Komplexität des aktiven Armmoduls weiter.

In einer weiteren Ausführungsform weist das aktive Armmodul eine im ersten Gehäuse, vorzugsweise axial auf einer der ersten Anschlussseite abgewandten Seite der Antriebseinrichtung, angeordnete Übergabeeinrichtung auf, wobei die Übergabeeinrichtung einen drehfest mit dem ersten Gehäuse verbundenen Abnehmer und einen rotierbar um die Rotationsachse gelagerten Übergaberotor aufweist, wobei der Übergaberotor drehfest mit der ersten Anschlussseite mechanisch und elektrisch mit der ersten Leistungskontakteinrichtung verbunden ist, wobei der Übergaberotor elektrisch mit dem Abnehmer verbunden ist, wobei die zweite Leistungskontakteinrichtung mit dem Abnehmer elektrisch verbunden ist. Dadurch wird die im Wesentlichen unbeschränkte Rotierbarkeit der ersten Anschlussseite sichergestellt.

In einer weiteren Ausführungsform weist das aktive Armmodul eine Sensoreinrichtung auf, wobei die Sensoreinrichtung wenigstens einen Sensor und ein drehfest mit der ersten Anschlussseite verbundenes Signalelement aufweist und der Sensor ausgebildet ist, das Signalelement zu erfassen und in Abhängigkeit einer erfassten Position des Signalelements ein Positionssignal bereitzustellen, wobei die Sensoreinrichtung axial auf einer der ersten Anschlussseite abgewandten Seite der Antriebseinrichtung angeordnet ist. Dadurch kann besonders präzise eine Ausrichtung der ersten Anschlussseite relativ zum Gehäuse bestimmt werden, sodass die erste Anschlussseite besonders genau gesteuert werden kann. Ferner weist das aktive Armmodul eine besonders kompakte Ausgestaltung auf.

Ein besonders steifes aktives Armmodul kann dadurch bereitgestellt werden, dass das erste Gehäuse zumindest abschnittsweise röhrenförmig ausgebildet ist, wobei vorzugsweise von der zweiten Anschlussseite hin zu der ersten Anschlussseite sich das erste Gehäuse verjüngt. Durch die verjüngte Ausgestaltung kann eine Verbindungsmöglichkeit zwischen zwei unterschiedlich groß ausgebildeten Armmodulen bereitgestellt werden.

In einer weiteren Ausführungsform sind die erste Anschlussseite und die zweite Anschlussseite jeweils in axialer Richtung versetzt zueinander angeordneten Radialebenen zu der Rotationsachse angeordnet. Diese Ausgestaltung eignet sich insbesondere bei einer I-förmigen Ausgestaltung des aktiven Armmoduls.

Vorteilhafterweise ist die zweite Anschlussseite schräg geneigt oder parallel zu der Rotationsachse verlaufend angeordnet. Zusätzlich oder alternativ ist das erste Gehäuse T-förmig oder I-förmig- oder J-förmig oder L-förmig ausgebildet, wobei an einem Ende des ersten Gehäuses die erste Anschlussseite und an einem anderen Ende des ersten Gehäuses die zweite Anschlussseite angeordnet sind.

In einer weiteren Ausführungsform ist in axialer Richtung angrenzend an die erste Anschlussseite die Antriebseinrichtung angeordnet, wobei die Antriebseinrichtung einen Stator und einen Rotor umfasst, wobei der Rotor drehmomentschlüssig mit der ersten Anschlussseite verbunden und rotierbar um die Rotationsachse gelagert ist, wobei der Stator umfangsseitig durch das erste Gehäuse umgriffen ist und drehfest mit dem ersten Gehäuse verbunden ist. Dadurch können die auf die Antriebseinrichtung wirkenden Kräfte geringgehalten werden, sodass die Antriebseinrichtung besonders kompakt und leicht ausgebildet sein kann. Ferner wird ein erhöhter Verschleiß vermieden.

In einer weiteren Ausführungsform weist die Antriebseinrichtung ein Getriebe auf, wobei das Getriebe axial bezogen auf die Rotationsachse zwischen dem Rotor und der ersten Anschlussseite angeordnet ist, wobei das Getriebe wenigstens eine erste Eingangsseite und eine Ausgangsseite aufweist, wobei die erste Eingangsseite mit dem Rotor und die Ausgangsseite mit der ersten Anschlussseite jeweils drehmomentschlüssig verbunden sind, wobei das Getriebe ausgebildet ist, eine Antriebsdrehzahl von der ersten Eingangsseite zu einer Abtriebsdrehzahl an der Ausgangsseite zu reduzieren. Durch das Getriebe kann ein besonders hohes Drehmoment mit einem kompakten Antriebsmotor an der ersten Anschlussseite zur Verdrehung der ersten Anschlussseite bereitgestellt werden. Dadurch kann der Antriebsmotor besonders kompakt ausgebildet sein, sodass auch in Axialrichtung bezogen auf die Rotationsachse das aktive Armmodul besonders kompakt ausgebildet ist.

In einer weiteren Ausführungsform weist die Antriebseinrichtung eine erste Hohlwelle, eine zweite Hohlwelle und eine Lageranordnung auf, wobei die erste Hohlwelle und die zweite Hohlwelle rotierbar um die Rotationsachse durch die Lageranordnung gelagert sind, wobei die erste Hohlwelle die zweite Hohlwelle aufnimmt und die Lageranordnung die erste Hohlwelle gegenüber der zweiten Hohlwelle rotierbar lagert, wobei die erste Hohlwelle den Rotor drehfest mit der ersten Eingangsseite des Getriebes verbindet, wobei die zweite Hohlwelle die Ausgangsseite des Getriebes mit der ersten Anschlussseite verbindet. Durch die beiden Hohlwellen kann ein besonders hohes Drehmoment bei einem geringen Gewicht der Antriebseinrichtung übertragen werden.

In einer weiteren Ausführungsform weist das Getriebe eine zweite Eingangsseite auf, wobei die zweite Eingangsseite drehfest mit dem ersten Gehäuse verbunden ist, und/oder wobei das Getriebe wenigstens ein Planetengetriebe und/oder ein Exzentergetriebe, insbesondere ein Zykloidgetriebe und/oder ein Spannungswellengetriebe (auch unter dem Namen Harmonic Drive Getriebe bekannt), aufweist. Diese Getriebearten sind besonders geeignet, um ein besonders hohes Übersetzungsverhältnis in einer Stufe bereitzustellen. Dadurch wird eine Verdrehung der Ausgangsseite gegenüber der ersten und/oder der zweiten Eingangsseite stark erschwert.

Es wurde auch erkannt, dass mittels eines passiven Armmoduls zur Kombination mit einem oben beschriebenen aktiven Armmodul besonders einfach ein modularer Roboterarm eines modularen Industrieroboters hergestellt werden kann, wobei das passive Armmodul ein sich entlang einer Längsachse erstreckendes zweites Gehäuse, eine stirnseitig des zweiten Gehäuses angeordnete dritte Anschlussseite und eine zu der dritten Anschlussseite versetzt angeordnete vierte Anschlussseite aufweist, wobei das zweite Gehäuse die dritte Anschlussseite mechanisch mit der vierten Anschlussseite verbindet, wobei an der dritten Anschlussseite und/oder an der vierten Anschlussseite eine erste oder zweite Anschlussseite des oben beschriebenen aktiven Armmoduls anschließbar ist, wobei über die dritte Anschlussseite und/oder über die vierte Anschlussseite hinweg ein optisches Signal und/oder ein elektrisches Signal und/oder eine elektrische Leistung und/oder ein Fluid mit dem aktiven Armmodul austauschbar ist, und die dritte Anschlussseite optisch und/oder elektrisch und/oder leistungselektrisch und/oder fluidisch mit der vierten Anschlussseite verbunden ist.

Diese Ausgestaltung hat den Vorteil, dass die Führung des Fluids und/oder der elektrischen Leistung und/oder des optischen und/oder elektrischen Signals innenseitig des passiven Armmoduls erfolgt und das passive Armmodul dadurch automatisiert in Großserie gefertigt werden kann. Dadurch kann das passive Armmodul für den Modulbaukasten des modularen Roboters besonders kostengünstig bereitgestellt werden.

Ferner kann durch das passive Armmodul das aktive Armmodul in seinem Arbeitsraum verlängert werden. Auch kann dadurch das passive Armmodul an dem oben beschriebenen aktiven Armmodul besonders schnell und einfach montiert werden, um den modularen Roboterarm auszubilden.

In einer weiteren Ausführungsform sind die dritte Anschlussseite und die vierte Anschlussseite jeweils senkrecht zu der Längsachse angeordnet, wobei das zweite Gehäuse hohlkörperartig ausgebildet ist und innenseitig in dem zweiten Gehäuse wenigstens eine elektrische Leitung und/oder ein Lichtleiter und/oder eine fluidische Leitung zur Verbindung der dritten Anschlussseite mit der vierten Anschlussseite angeordnet ist. Durch die innenseitige Führung des Fluids und/oder der elektrischen Leistung und/oder des optischen und/oder elektrischen Signals ist außenseitig des passiven Armmoduls keine Fluidleitung und/oder Datenleitung und/oder kein Stromkabel angeordnet und eine ungewollte Beschädigung des passiven Armmoduls, beispielsweise durch ein Hängenbleiben und/oder ein Verhaken an der Fluidleitung und/oder Datenleitung und/oder dem Stromkabel, kann zuverlässig vermieden werden.

In einer weiteren Ausführungsform weist das passive Armmodul ein Steuergerät mit einer zweiten Steuereinrichtung, einen mit der zweiten Steuereinrichtung verbundenen Datenspeicher und ein mit der zweiten Steuereinrichtung verbundenen Schnittstelle auf, wobei die Schnittstelle mit der dritten Anschlussseite und/oder der vierten Anschlussseite zumindest datentechnisch verbunden ist, wobei in dem Datenspeicher ein vordefiniertes Steuerprogramm, insbesondere ein computerimplementierter Algorithmus, abgespeichert ist, wobei die zweite Steuereinrichtung ausgebildet ist, auf Grundlage des vordefinierten Steuerprogramms ein Steuersignal zu ermitteln und über die Schnittstelle an der dritten Anschlussseite und/oder an der vierten Anschlussseite bereitzustellen. Dadurch kann das Steuergerät zur Steuerung des modularen Roboterarms genutzt werden, insbesondere wenn dieses beispielsweise als Industrie-PC ausgebildet ist. Dadurch kann auf einen zusätzlichen Industrie-PC und/oder Schaltschrank verzichtet werden.

In einer weiteren Ausführungsform sind die dritte Anschlussseite und die vierte Anschlussseite korrespondierend zueinander ausgebildet und an der dritten Anschlussseite ist die erste Anschlussseite des aktiven Armmoduls des Roboterarms und an der vierten Anschlussseite ist die zweite Anschlussseite des aktiven Armmoduls anschließbar.

Alternativ sind die dritte Anschlussseite und die vierte Anschlussseite identisch zueinander ausgebildet, wobei an der dritten Anschlussseite die erste Anschlussseite des aktiven Armmoduls des Roboterarms und an der vierten Anschlussseite die erste Anschlussseite eines weiteren aktiven Armmoduls anschließbar sind.

Alternativ sind die dritte Anschlussseite und die vierte Anschlussseite identisch zueinander ausgebildet, wobei an der dritten Anschlussseite die zweite Anschlussseite des aktiven Armmoduls des Roboterarms und an der vierten Anschlussseite die zweite Anschlussseite eines weiteren aktiven Armmoduls anschließbar sind. Diese Ausgestaltungen des passiven Armmoduls des Modulbaukastens eignen sich vorteilhafterweise, um mehrere aktive Armmodule wie gewünscht zu dem modularen Roboterarm miteinander kombinieren zu können.

Es wurde erkannt, dass ein besonders einfach und in Großserienfertigung für einen modularen Roboterarm herstellbares Endmodul dadurch bereitgestellt werden kann, dass das Endmodul eine Endanschlussseite und ein Endgehäuse aufweist, wobei die Endanschlussseite drehfest mit dem Endgehäuse verbunden ist, wobei die Endanschlussseite korrespondierend zu einer ersten Anschlussseite eines aktiven Armmoduls oder zu einer zweiten Anschlussseite des aktiven Armmoduls des Roboterarms ausgebildet und mit der ersten Anschlussseite oder der zweiten Anschlussseite verbindbar ist, und/oder wobei die Endanschlussseite korrespondierend zu einer dritten und/oder vierten Anschlussseite eines passiven Armmoduls ausgebildet und/oder mit der dritten und/oder der vierten Anschlussseite verbindbar ist, wobei über die Endanschlussseite hinweg wenigstens ein elektrisches und/oder optisches Signal und/oder ein Fluid und/oder eine elektrische Leistung mit dem passiven Armmodul und/oder dem aktiven Armmodul austauschbar ist.

Diese Ausgestaltung hat den Vorteil, dass mittels des Endmoduls des Modulbaukastens eine Möglichkeit der zusätzlichen Einspeisung oder zur Versorgung von zusätzlichen, am modularen Roboterarm angeordneten Komponenten, beispielsweise von Peripheriegeräten, auf einfache Weise bereitgestellt werden kann. Ferner kann das Endmodul besonders schnell und einfach an dem aktiven oder passiven Armmodul zu dem modularen Roboterarm montiert als auch selbst in Großserienfertigung gefertigt werden.

In einer weiteren Ausführungsform weist das Endmodul wenigstens eine versetzt zu der Endanschlussseite angeordnete dritte Kontakteinrichtung auf, wobei die dritte Kontakteinrichtung an dem Endgehäuse befestigt ist, wobei die dritte Kontakteinrichtung mit der Endanschlussseite datentechnisch verbunden und über die dritte Kontakteinrichtung hinweg das elektrische und/oder das optische Signal mit der Endanschlussseite austauschbar ist.

In einer weiteren Ausführungsform weist das Endmodul eine versetzt zu der Endanschlussseite angeordnete und an dem Endgehäuse befestigte Eingabeeinheit und/oder eine Ausgabeeinheit, insbesondere einen berührungssensitiven Bildschirm, auf, wobei die Eingabeeinheit und/oder die Ausgabeeinheit, insbesondere der berührungssensitive Bildschirm, mit der Endanschlussseite verbunden und ausgebildet ist, das elektrische und/oder optische Signal zu erfassen und/oder zu erzeugen und das elektrische und/oder das optische Signal mit der Endanschlussseite auszutauschen. Dadurch können mittels des Endmoduls Signale für einen Nutzer ausgegeben werden oder mittels der Eingabeeinheit eine manuelle Steuerung des modularen Roboterarms, beispielsweise bei einer Programmierung des Roboterarms, erfolgen.

In einer weiteren Ausführungsform weist das Endmodul wenigstens eine versetzt zu der Endanschlussseite angeordnete dritte Leistungskontakteinrichtung auf, wobei die dritte Leistungskontakteinrichtung an dem Endgehäuse befestigt ist, wobei die dritte Leistungskontakteinrichtung mit der Endanschlussseite elektrisch verbunden ist und über die dritte Leistungskontakteinrichtung hinweg elektrische Leistung mit der Endanschlussseite austauschbar ist. Mittels eines solchen Endmoduls kann entweder elektrische Leistung in den modularen Roboterarm eingespeist werden oder beispielsweise der Endeffektor und/oder das Peripheriegerät mit elektrischer Leistung versorgt werden.

In einer weiteren Ausführungsform weist das Endmodul eine versetzt zu der Endanschlussseite angeordnete vierte Fluidkontakteinrichtung auf, wobei die vierte Fluidkontakteinrichtung an dem Endgehäuse befestigt ist, wobei die vierte Fluidkontakteinrichtung mit der Endanschlussseite fluidisch verbunden und über die vierte Fluidkontakteinrichtung hinweg das Fluid, insbesondere eine Hydraulikflüssigkeit oder Druckluft, mit der Endanschlussseite austauschbar ist.

Ein Roboterarm für einen Industrieroboter kann besonders einfach und flexibel an das Anwendungsszenario angepasst werden, wenn der Roboterarm modular aufgebaut ist und wenigstens ein erstes aktives Armmodul und ein zweites aktives Armmodul aufweist, wobei das erste und/oder zweite aktive Armmodul wie oben beschrieben ausgebildet sind. Die erste Anschlussseite des zweiten aktiven Armmoduls ist mit der zweiten Anschlussseite des ersten aktiven Armmoduls mechanisch verbunden und die Antriebseinrichtung des zweiten aktiven Armmoduls ist ausgebildet, das zweite aktive Armmodul oder das erste aktive Armmodul um die Rotationsachse zu rotieren, wobei die erste Anschlussseite des zweiten aktiven Armmoduls mit der zweiten Anschlussseite des ersten aktiven Armmoduls fluidisch und/oder elektrisch und/oder optisch derart gekoppelt sind, dass über die erste Anschlussseite des zweiten aktiven Armmoduls und über die zweite Anschlussseite des ersten aktiven Armmoduls hinweg das optische Signal und/oder das elektrische Signal und/oder die elektrische Leistung und/oder das Fluid mit dem weiteren Armmodul austauschbar ist.

Diese Ausgestaltung hat den Vorteil, dass durch die Montage des ersten Armmoduls und des zweiten Armmoduls an den Anschlussseiten neben der mechanischen Verbindung auch eine fluidische und/oder elektrische und/oder optische Kopplung erfolgt, wodurch keine weiteren Anschlüsse miteinander verbunden werden müssen, sodass die beiden aktiven Armmodule besonders schnell und kostengünstig zu dem modularen Roboter montiert werden können. Ferner kann durch die Auswahl der verschiedenen aktiven Armmodule und die Ausrichtung zueinander der modulare Roboterarm auf einfache Weise individuell ohne weiteren Aufwand an die Applikation angepasst werden. Ferner kann bei einem Defekt eines der aktiven Armmodule der modulare Roboter auf einfache Weise dadurch repariert werden, dass nur das defekte aktive Armmodul getauscht wird. Dadurch ist eine Reparaturzeit und damit eine Stillstandzeit des modularen Roboterarms besonders kurz.

Durch die Kombination wenigstens zweier Armmodule, kann je nach Ausgestaltung und Kombination unterschiedliche kinematische Ketten zur Ausbildung des Roboterarms ausgebildet werden. Dabei können die Armmodule sowohl in serieller als auch paralleler Anordnung einfach miteinander kombiniert werden.

Von besonderem Vorteil ist hierbei, wenn der modulare Roboterarm ein oben beschriebenes passives Armmodul zusätzlich aufweist, wobei das passive Armmodul mit dem ersten und/oder zweiten aktiven Armmodul verbunden ist. Dadurch kann der modulare Roboter kostengünstig an die Anwendung angepasst werden.

In einer weiteren Ausführungsform weist der modulare Roboterarm das oben beschriebene Endmodul auf, wobei die Endanschlussseite mit der zweiten Anschlussseite des ersten aktiven Armmoduls verbunden ist, wobei über die zweite Anschlussseite des ersten aktiven Armmoduls und über die Endanschlussseite hinweg das optische Signal und/oder das elektrische Signal und/oder die elektrische Leistung und/oder das Fluid zwischen dem Endmodul und dem ersten aktiven Armmodul austauschbar ist. Dadurch kann über die Endanschlussseite das optische Signal und/oder das elektrische Signal und/oder die elektrische Leistung eingespeist oder ausgespeist werden.

In einer weiteren Ausführungsform weist der modulare Roboterarm einen Endeffektor auf, wobei der Endeffektor mit dem zweiten aktiven Armmodul auf einer dem ersten aktiven Armmodul abgewandten Seite gekoppelt ist, wobei über das zweite aktive Armmodul hinweg das optisches Signal und/oder das elektrische Signal und/oder die elektrische Leistung und/oder das Fluid zwischen dem Endeffektor und dem ersten aktiven Armmodul austauschbar ist.

Von besonderem Vorteil ist, wenn ein Industrieroboter eine Roboterbasis und einen oben beschriebenen Roboterarm aufweist, wobei das erste aktive Armmodul des Roboterarms mit der Roboterbasis verbunden ist, wobei vorzugsweise die Roboterbasis ausgebildet ist, ein Fluid und/oder ein optisches und/oder elektrisches Signal und/oder eine elektrische Leistung mit dem ersten aktiven Armmodul auszutauschen.

Nachfolgend wird die Erfindung anhand von Figuren näher erläutert. Dabei zeigen:
Figur 1 eine perspektivische Ansicht eines Industrieroboters gemäß einer ersten Ausführungsform für ein Automatisierungssystem;
Figur 2 eine perspektivische Darstellung eines in Figur 1 gezeigten aktiven Armmoduls gemäß einer ersten Ausführungsform;
Figur 3 eine vergrößerte perspektivische Ansicht auf eine erste Anschlussseite des in den Figuren 1 und 2 gezeigten ersten aktiven Armmoduls;
Figur 4 eine Seitenansicht auf das in den Figuren 1 bis 3 gezeigte aktive Armmodul mit Blick auf eine zweite Anschlussseite;
Figur 5 eine Seitenansicht auf zwei aktive Armmodule des in Figur 1 gezeigten Roboterarms,
Figur 6 einen in Figur 5 markierten Ausschnitt einer Schnittansicht entlang einer in Figur 1 gezeigten Schnittebene A-A durch ein erstes aktives Armmodul und ein an dem ersten aktiven Armmodul montiertes zweites aktives Armmodul;
Figur 7 eine Schnittansicht durch das in den Figuren 1 bis 5 gezeigte aktive Armmodul;
Figur 8 eine perspektivische Darstellung eines aktiven Armmoduls gemäß einer zweiten Ausführungsform;
Figur 9 eine perspektivische Darstellung eines in Figur 1 gezeigten passiven Armmoduls gemäß einer ersten Ausführungsform;
Figur 10 eine perspektivische Darstellung eines passiven Armmoduls gemäß einer fünften Ausführungsform;
Figur 11 eine perspektivische Darstellung eines passiven Armmoduls gemäß einer sechsten Ausführungsform
Figur 12 eine perspektivische Darstellung eines passiven Armmoduls gemäß einer siebten Ausführungsform;
Figur 13 eine perspektivische Darstellung eines passiven Armmoduls gemäß einer achten Ausführungsform;
Figur 14 eine perspektivische Darstellung eines passiven Armmoduls gemäß einer neunten Ausführungsform;
Figur 15 eine perspektivische Darstellung eines Endmoduls gemäß einer ersten Ausführungsform;
Figur 16 eine perspektivische Darstellung eines Endmoduls gemäß einer zweiten Ausführungsform;
Figur 17 eine perspektivische Ansicht auf ein Endmodul gemäß einer dritten Ausführungsform;
Figur 18 ein Endmodul gemäß einer vierten Ausführungsform;
Figur 19 eine perspektivische Darstellung eines aktiven Armmoduls gemäß einer dritten Ausführungsform;
Figur 20 einen Längsschnitt durch das erste aktive Armmodul und das zweite aktive Armmodul jeweils gemäß der dritten Ausführungsform in montiertem Zustand;
Figur 21 eine Seitenansicht auf ein aktives Armmodul gemäß einer vierten Ausführungsform; und
Figur 22 einen Industrieroboter gemäß einer zweiten Ausführungsform.

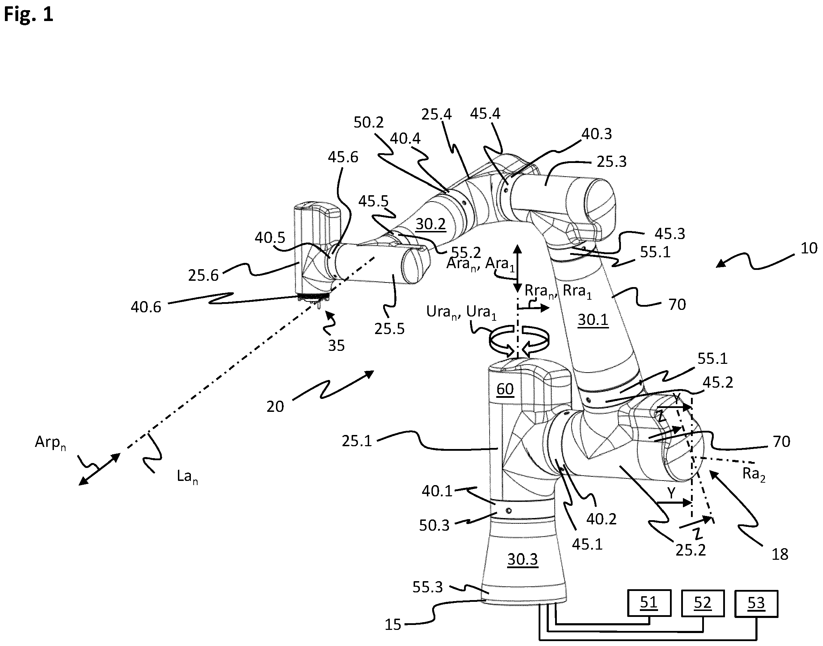

Figur 1 zeigt eine perspektivische Ansicht eines Industrieroboters 10 für ein Automatisierungssystem.

Unter dem Industrieroboter 10 wird eine (automatische) Maschine mit mehreren Freiheitsgraden (in Figur 1 beispielhaft sechs rotatorische Freiheitsgrade) für die Automatisierungstechnik bezeichnet, welche durch eine vorprogrammierte Steuerung/Regelung verschiedene Funktionen in einer Arbeitsumgebung in (bedingter) Eigenleistung durchführen kann. Der Industrieroboter 10 umfasst eine Roboterbasis 15, einen Roboterarm 20 und einen, bevorzugt auswechselbaren, Endeffektor (in Figur 1 nicht dargestellt), auch als Roboterhand bezeichenbar, mit z. B.: einem Werkzeug, einem Greifer etc., welcher an einem freien Ende des Roboterarms 20 angeordnet ist.

Der vorliegende Roboterarm 20 des Industrieroboters 10 ist insbesondere modular aus einem Modulbaukasten mit einer Mehrzahl von Armmodulen 18 ausgebildet. Das Armmodul 18 kann als aktives Armmodulen 25, als passives Armmodul 30, als Endmodul oder als Endeffektor beispielhaft aufgebaut sein. Der Modulbaukasten kann ferner weitere (Arm- und/oder End-) Module aufweisen. Prinzipiell ist der Aufbau des Roboterarms 20 mit aktiven Armmodulen 25, passiven Armmodulen 30, Endmodulen und/oder Endeffektor beliebig wählbar und ist nur hinsichtlich einer maximalen Tragkraft der Armmodule 18 beschränkt.

In Figur 1 sind die aktiven Armmodule 25 nummeriert, wobei in Figur 1 von der Roboterbasis 15 in Richtung des Endeffektors nummeriert ist. Auch die passiven Armmodule 30 sind zur besseren Unterscheidung nummeriert. So ist beispielsweise ein drittes passives Armmodul 30.3 mit der Roboterbasis 15 an einem Ende und an einem anderen Ende mit einem ersten aktiven Armmodul 25.1 verbunden. Das erste aktive Armmodul 25.1 ist an seinem zweiten Ende mit einem zweiten aktiven Armmodul 25.2 verbunden. Zwischen dem zweiten aktiven Armmodul 25.2 und einem dritten aktiven Armmodul 25.3 ist ein erstes passives Armmodul 30.1 angeordnet. Das dritte aktive Armmodul 25.3 ist auf einer dem ersten passiven Armmodul 30.1 abgewandten Seite mit einem vierten aktiven Armmodul 25.4 verbunden, welches auf einer zum dritten aktiven Armmodul 25.3 abgewandten Seite mit einem zweiten passiven Armmodul 30.2 verbunden ist. Das zweite passive Armmodul 30.2 ist mit einem fünften aktiven Armmodul 25.5 verbunden. Auf der zum zweiten passiven Armmodul 30.2 abgewandten Seite ist ein sechstes aktives Armmodul 25.6 angeordnet, an dem auf einer zum fünften aktiven Armmodul 25.5 abgewandten ersten Anschlussseite 40.6 der Endeffektor angeordnet ist. Die erste Anschlussseite 40.6 des sechsten aktiven Armmoduls 25.6 bildet somit eine Endeffektoranschlussseite 35 auf, an der der Endeffektor angeschlossen werden kann.

Die aktiven Armmodule 25 weisen jeweils eine Antriebseinrichtung auf, mittels welcher ein daran anschließbares weiteres aktives Armmodul 25 oder ein passives Armmodul 30 um eine zugeordnete Rotationsachse Raₙ des aktiven Armmoduls 25 rotiert werden kann.

Analog dazu wird bei den passiven Armmodulen 30 auf die Antriebseinrichtung verzichtet. Sie sind also als eine Art Verlängerungsteil ausgebildet.

Der Roboterarm 20 umfasst in Abhängigkeit einer Anzahl von aktiven Armmodulen 25 auch eine entsprechende Anzahl von Rotationsachsen Raₙ. D. h., bevorzugt lassen sich eine beliebige Anzahl von vollständigen Umdrehungen eines betreffenden aktiven Armmoduls 25 des Roboterarms 20 in bevorzugt beide Umfangsrichtungen Uraₙ einer betreffenden Rotationsachse Raₙ durchführen.

Ferner bezieht sich die Erläuterung im Folgenden auf ein polares Koordinatensystem jeweils eines aktiven Armmoduls 25. Das polare Koordinatensystem weist dabei jeweils eine im Allgemeinen und nicht auf ein bestimmtes aktives Armmodul 25 verweisende Rotationsachse Raₙ auf. Entlang der Rotationsachse Raₙ verläuft eine Axialrichtung Araₙ des aktiven Armmoduls 25. Senkrecht nach außen bezogen auf die jeweilige Rotationsachse Raₙ verläuft eine Radialrichtung Rraₙ des jeweiligen aktiven Armmoduls 25. Eine Umfangsrichtung Uraₙ des jeweiligen aktiven Armmoduls 25 verläuft auf einer (Kreis-)Bahn um die Rotationsachse Raₙ des aktiven Armmoduls 25. Die allgemeine Nomenklatur wird verwendet, um im Allgemeinen den Aufbau des aktiven Armmoduls 25 zu erläutern.

Im Speziellen sind in Figur 1 die Rotationsachsen Raₙ, die Axialrichtungen Araₙ und die Umfangsrichtungen Uraₙ des jeweiligen aktiven Armmoduls 25 gemäß ihrer Nummerierung bezeichnet. So trägt beispielsweise eine erste Rotationsachse Ra₁ des ersten aktiven Armmoduls 25.1 als Index an der Stelle von n den Index 1. Eine zweite Ra₂ des zweiten aktiven Armmoduls 25.2 ist entsprechend in Figur 1 beschriftet. Analog sind entsprechend auch die Axialrichtungen Araₙ, die Radialrichtungen Rraₙ und die Umfangsrichtungen Uraₙ der aktiven Armmodule 25 bezeichnet. In Figur 1 sind aus Übersichtlichkeitsgründen nur alle Richtungsangaben (die erste Rotationsachse Ra₁, die erste Axialrichtung Arai und die erste Umfangsrichtung Ura₁) für das erste aktive Armmodul 25.1 eingezeichnet.

Ferner bezieht sich die Erläuterung im Folgenden auf ein weiteres polares Koordinatensystem jeweils eines passiven Armmoduls 30. Das weitere polare Koordinatensystem weist jeweils eine Längsachse Laₙ auf. Entlang der Längsachse Laₙ verläuft eine Axialrichtung Arpₙ des jeweiligen passiven Armmoduls 30.

Einer jeweiligen Rotationsachse Raₙ des aktiven Armmoduls 25 ist bevorzugt ein Kraft- und/oder Drehmomentsensor sowie ggf. eine erste und/oder zweite Sensoreinrichtung jeweils eines aktiven Armmoduls 25 zugeordnet, mit dem eine Kraft und/oder ein Drehmoment auf das aktive Armmodul 25 sowie eine Position des aktiven Armmoduls 25 gegenüber der Rotationsachse Raₙ erfassbar ist. Die Rotationsachse Raₙ ist beispielhaft als ideelles "Gelenk" (Rotationsgelenk, Drehgelenk und/oder Schwenkgelenk) des mehrgliedrigen bzw. bevorzugt modular aufgebauten Roboterarms 20, z. B. gegenüber der Roboterbasis 15, ausgebildet.

Für die jeweilige Rotationsachse Raₙ kann ein Kraft-, Drehmoment- und/oder Positionssensor für eine von am Roboterarm 20 auftretenden Kräften und/oder Drehmomenten und/oder einer Relativposition der Armmodule 18 zueinander vorgesehen sein. Dies kann auch auf einen Abschnitt des Roboterarms 20 beschränkbar sein.

Vorliegend weist ein bestimmter Modulbaukasten für einen Roboterarm 20 wenigstens einen Typ eines beispielweise I-, J-, L- bzw. T-förmig ausgebildeten, aktiven Armmoduls 25 und vorzugsweise wenigstens einen Typ eines beispielsweise I-, J-, L- bzw. T-förmig ausgebildeten, passiven Armmoduls 30 auf. Beispielhaft sind in Figur 1 die aktiven Armmodule 25 J- oder L-förmig ausgebildet, während hingegen die passiven Armmodule 30 beispielhaft I-förmig ausgebildet sind.

In Figur 1 sind bevorzugt sämtliche Armmodule 18 des Modulbaukastens für Roboterarme 20 derart ausgebildet, dass jedes der Armmodule 18 jeweils wenigstens zwei erste, zweite, dritte und/oder vierte Anschlussseiten 40, 45, 50, 55 aufweist. Die ersten bis vierten Anschlussseiten 40, 45, 50, 55 der Armmodule 18 können miteinander korrespondieren und miteinander verbunden werden. Dabei weist beispielhaft jedes aktive Armmodul 25 eine erste Anschlussseite 40 und eine zweite Anschlussseite 45 auf. Jedes passive Armmodul 30 weist eine dritte Anschlussseite 50 und eine vierte Anschlussseite 55 auf. Es ist jedoch auch möglich, dass jedes aktive Armmodul 25 zwei erste Anschlussseiten 40 oder zwei zweite Anschlussseiten 45 aufweist. Analog ist es auch möglich, dass jedes passive Armmodul 30 zwei dritte Anschlussseiten 50 oder zwei vierte Anschlussseiten 55 aufweist.

Zur eindeutigen Identifizierung der jeweiligen ersten bis vierten Anschlussseite 40, 45, 50, 55 erfolgt die Zuordnung der ersten bis vierten Anschlussseiten 40, 45, 50, 55 korrespondierend zu der Nummerierung der aktiven Armmodule 25 oder der passiven Armmodule 30. So ist die erste Anschlussseite des ersten aktiven Armmoduls 25.1 mit dem Bezugszeichen 40.1 in Figur 1 bezeichnet.

Die erste Anschlussseite 40, die zweite Anschlussseite 45, die dritten Anschlussseiten 50 und die vierten Anschlussseiten 55 sind korrespondierend zueinander ausgebildet. D. h., dass an jede erste Anschlussseite 40 eines aktiven Armmoduls 25 eine zweite Anschlussseite 45 eines anderen aktiven Armmoduls 25 oder eine dritte Anschlussseite 50 eines passiven Armmoduls 30 anschließbar wäre. Ebenso wäre an jede zweite Anschlussseite 45 eines aktiven Armmoduls 25 eine erste Anschlussseite 40 eines anderen aktiven Armmoduls 25 oder eine vierte Anschlussseite 55 eines passiven Armmoduls 30 anschließbar.

In Figur 1 ist beispielhaft die vierte Anschlussseite 55.3 des dritten passiven Armmoduls 30.3 mit der Roboterbasis 15 verbunden. Neben der mechanischen Verbindung der vierten Anschlussseite 55.3 des dritten passiven Armmoduls 30.3 zur Abstützung von Kräften und Drehmomenten aus dem Roboterarm 20 an der Roboterbasis 15 wird über die vierte Anschlussseite 55.3 des dritten passiven Armmoduls 30.3 der Roboterarm 20 mit einem (Druck-)Fluid 51, insbesondere mit Druckluft oder einer mit Druck beaufschlagten Hydraulikflüssigkeit, beispielsweise eine Kühlflüssigkeit zur Kühlung eines spanenden Materialabtrags, versorgt, das über die vierte Anschlussseite 55.3 des dritten passiven Armmoduls 30.3 in den Roboterarm 20 eingeleitet wird. Das Fluid 51 kann aber in entgegengesetzter Richtung von der Endanschlussseite 35 hin zur Roboterbasis 15 strömen. Das Fluid 51 kann beispielsweise als Absaugung, beispielsweise von Partikeln oder Fluiden im Reinraum oder in explosionsgeschützten Bereichen, dienen.

Ferner ist über die vierte Anschlussseite 55.3 des dritten passiven Armmoduls 30.3 der Roboterarm 20 mit einer elektrischen Energiequelle 52 leistungstechnisch elektrisch und mit einem Datennetzwerk 53 datentechnisch verbunden.

Eine zweite Anschlussseite 45.1 des ersten aktiven Armmoduls 25.1 ist mit einer ersten Anschlussseite 40.2 des zweiten aktiven Armmoduls 25.2 verbunden. Zwischen einer zweiten Anschlussseite 45.2 des zweiten aktiven Armmoduls 25.2 und einer zweiten Anschlussseite 45.3 des dritten aktiven Armmoduls 25.3 ist das erste passive Armmodul 30.1 angeordnet, wobei eine vierte Anschlussseite 55.1 des ersten passiven Armmoduls 30.1 mit der zweiten Anschlussseite 45.2 des zweiten aktiven Armmoduls 25.2 an einem Ende und am anderen Ende eine weitere vierte Anschlussseite 55.1 des ersten passiven Armmoduls 30.1 mit einer zweiten Anschlussseite 45.3 des dritten aktiven Armmoduls 25.3 verbunden ist. In der Ausführungsform sind somit beispielhaft beide Anschlussseiten des ersten passiven Armmoduls 30.1 als vierte Anschlussseiten 55.1 des ersten passiven Armmoduls 30.1 und somit korrespondierend und/oder komplementär zu der zweiten Anschlussseite 45.2 des zweiten aktiven Armmoduls 25.2 und der zweiten Anschlussseite 45.3 des dritten aktiven Armmoduls 25.3 ausgebildet. Dadurch kann die zweite Anschlussseite 45.2 des zweiten aktiven Armmoduls 25.2 zu der zweiten Anschlussseite 45.3 des dritten aktiven Armmoduls 25.3 auf einfache Weise beabstandet angeordnet sein und eine vordefinierte Gestaltung des Roboterarms 20 auf einfache Weise umgesetzt werden. Beispielhaft ist in Figur 1 eine erste Anschlussseite 40.3 des dritten aktiven Armmoduls 25.3 mit einer zweiten Anschlussseite 45.4 eines vierten aktiven Armmoduls 25.4 verbunden.

Ein zweites passives Armmodul 30.2 ist beispielhaft unterschiedlich in dem Modulbaukasten zu dem ersten passiven Armmodul 30.1 ausgebildet. In Axialrichtung des zweiten passiven Armmoduls 30.2 ist das zweite passive Armmodul 30.2 kürzer als das erste passive Armmodul 30.1 ausgebildet. Ferner ist eine dritte Anschlussseite 50.2 des zweiten passiven Armmoduls 30.2 identisch zu der zweiten Anschlussseite 45.4 des vierten aktiven Armmoduls 25.4 und eine vierte Anschlussseite 55.2 des zweiten passiven Armmoduls 30.2 korrespondierend und/oder komplementär zu der zweiten Anschlussseite 45.5 des fünften aktiven Armmoduls 25.5 und somit identisch zu der ersten Anschlussseite 40.5 des fünften aktiven Armmoduls 25.5 ausgebildet. Somit weist im Unterschied zu dem ersten passiven Armmodul 30.1 das zweite passive Armmodul 30.2 an seinen Enden jeweils die dritte Anschlussseite 50.2 und die vierte Anschlussseite 55.2 des zweiten passiven Armmoduls 30.2 auf, die zueinander unterschiedlich sind.

An der ersten Anschlussseite 40.5 des fünften aktiven Armmoduls 25.5 ist das fünfte aktive Armmodul 25.5 mit einer zweiten Anschlussseite 45.6 des sechsten aktiven Armmoduls 25.6 verbunden. Eine erste Anschlussseite 40.6 des sechsten aktiven Armmoduls 25.6 ist mit dem Endeffektor verbunden.

Über die Armmodule 18 und deren ersten bis vierten Anschlussseiten 40, 45, 50, 55 wird der Endeffektor wie im Weiteren noch ausführlich beschrieben mit dem Fluid 51 versorgt und ist mit der elektrischen Energiequelle 52 elektrisch und mit dem Datennetzwerk 53 datentechnisch verbunden. Ebenso sind die aktiven und passiven Armmodule 25, 30 über ihre ersten bis vierten Anschlussseiten 40, 45, 50, 55 mit dem Datennetzwerk 53, beispielsweise mit einem Feldbus oder einem EtherCAT-Netzwerk, datentechnisch und mit der elektrischen Energiequelle 52 leistungstechnisch verbunden.

Jedes der aktiven Armmodule 25 weist ein erstes Gehäuse 60 auf, wobei jedes der ersten Gehäuse 60 jeweils einen ersten Gehäuseinnenraum 65 innenseitig begrenzt. An einem Ende des ersten Gehäuses 60 ist jeweils die erste Anschlussseite 40 angeordnet. Die erste Anschlussseite 40 ist drehbar um die Rotationsachse Raₙ gegenüber dem ersten Gehäuse 60 gelagert und wird steuerbar durch die Antriebseinrichtung des jeweiligen aktiven Armmoduls 25 angetrieben. Die zweite Anschlussseite 45 ist beispielsweise geneigt, vorzugsweise senkrecht gegenüber der ersten Anschlussseite 40 ausgerichtet und drehfest mit dem ersten Gehäuse 60 verbunden. Im ersten Gehäuseinnenraum 65 sind Mittel zur fluidischen, elektrischen und datentechnischen Verbindung der ersten Anschlussseite 40 mit der zweiten Anschlussseite 45 angeordnet, auf die detailliert an späterer Stelle eingegangen wird.

Bei Aktivierung der Antriebseinrichtung des aktiven Armmoduls 25 verdreht die Antriebseinrichtung die erste Anschlussseite 40 relativ zum ersten Gehäuse 60. Je nach Ausgestaltung des Roboterarms 20 verschwenkt die Antriebseinrichtung somit das aktive Armmodul 25 mit Ausnahme der eigenen ersten Anschlussseite 40 um die zugeordnete Rotationsachse Raₙ oder nur die erste Anschlussseite 40 um die zugeordnete Rotationsache Raₙ.

In Figur 1 verschwenkt beispielsweise die Antriebseinrichtung des ersten aktiven Armmoduls 25.1 das erste aktive Armmodul 25.1 und die an der zweiten Anschlussseite 45.1 des ersten aktiven Armmoduls 25.1 weiter befestigten Armmodule 18 und den Endeffektor um die erste Rotationsachse Ra₁. Das sechste aktive Armmodul 25.6 ist beispielhaft gegenüber dem ersten aktiven Armmodul 25.1 identisch ausgerichtet montiert. Die Antriebseinrichtung des sechsten aktiven Armmoduls 25.6 treibt beispielsweise die erste Anschlussseite 40.6 an und rotiert den an der ersten Anschlussseite 40.6 des sechsten aktiven Armmoduls 25.6 befestigten Endeffektor. Das erste Gehäuse 60 und die zweite Anschlussseite 45.6 des sechsten aktiven Armmoduls 25.6 sind dabei ortsfest.

Bei dem in Figur 1 gezeigten Roboterarm 20 ist die erste Rotationsachse Ra₁ beispielhaft nicht beschränkt, d.h. dass der Roboterarm 10 dauerhaft in die gleiche Umfangsrichtung Ura₁ rotiert werden kann. Dadurch kann mittels der in Figur 1 gezeigten Armmmodule 18 ein beliebig ausgebildeter Roboterarm 15 ausgebildet werden, der zahlreiche gängigen Kinematiken abbilden kann.

Es ist natürlich möglich, die jeweilige Rotationsachse Raₙ auch nur als eine Schwenkachse auszubilden, d. h. eine Bewegung des betreffenden aktiven Armmoduls 25 ist auf einen bestimmten Winkel beschränkt, wie z. B. auf Winkel kleiner als: 720°, 540°, 360°, 270°, 180°, 90° oder 45°. In Figur 1 ist vorzugweise beispielsweise die zweite Rotationsachse Ra₂ auf einen vordefinierten Winkel von beispielsweise 180° beschränkt, um ein Anschlagen des Roboterarms 20 an der Roboterbasis 15 zu verhindern. Auch kann eine Beschränkung der Bewegung der aktiven Armmodule 25 dahingehend erfolgen, dass die Armmodule 18 nicht aneinander kollidieren. Die Beschränkung kann mechanisch oder steuertechnisch, insbesondere softwaretechnisch, erfolgen.

Die passiven Armmodule 30 weisen jeweils ein zweites Gehäuse 70 auf, wobei das zweite Gehäuse 70 hohlkörperartig ausgebildet ist und sich entlang der Längsachse Laₙ in Axialrichtung Arpₙ erstreckt. In Figur 1 ist beispielhaft das zweite Gehäuse 70 kegelstumpfartig mit einem kreisförmigen Querschnitt ausgebildet. Die dritte Anschlussseite 50 des passiven Armmoduls 30 ist drehfest mit dem zweiten Gehäuse 70 an einem stirnseitigen Ende des zweiten Gehäuses 70 angeordnet und drehfest mit dem zweiten Gehäuse 70 verbunden. An einem anderen stirnseitigen Ende des zweiten Gehäuses 70 ist die vierte Anschlussseite 55 des passiven Armmoduls 30 angeordnet und drehfest mit dem zweiten Gehäuse 70 verbunden. Dabei weist durch die hohlkörperartige Ausgestaltung des zweiten Gehäuses 70 das zweite Gehäuse 70 eine besonders hohe Biege- und Torsionssteifigkeit auf, sodass das passive Armmodul 30 eine hohe Last übertragen kann.

Im Modulbaukasten kann das Armmodul 18 unterschiedliche Größen aufweisen. Insbesondere kann das erste oder zweite Gehäuse 60, 70 verschiedene Längen und/oder unterschiedliche Querschnittsflächen der Anschlussseiten 40, 45, 50, 55 aufweisen, um so eine gewünschte geometrische Ausgestaltung des Roboterarms 20 bei der Kombination der Armmodule 18 aus dem Modulbaukasten auf einfache Weise zu erhalten.

Der Modulbaukasten kann dabei derart gestaltet sein, dass die Armmodule 18 jeweils unterschiedlichen Baugruppen angehören, die unterschiedliche geometrische Ausgestaltungen aufweisen, jedoch funktionell identisch zueinander aufgebaut sind.

In der Ausführungsform sind das erste aktive Armmodul 25.1 und das zweite aktive Armmodul 25.2 identisch ausgebildet und weisen in konstruktiver Ausgestaltung die gleiche geometrische Ausgestaltung auf. In Figur 1 gehören das erste aktive Armmodul 25.1 und das zweite aktive Armmodul 25.2 zu einer ersten Baugruppe, die geometrisch die größte Ausgestaltung und die größte Erstreckung aufweist.

Das dritte aktive Armmodul 25.3 und das vierte aktive Armmodul 25.4 sind geometrisch in der konstruktiven Ausgestaltung kleiner ausgebildet als das erste und zweite aktive Armmodul 25.1, 25.2, damit Momente und Kräfte für das erste und zweite aktive Armmodul 25.1 und 25.2 reduziert sind. Sie gehören einer zweiten Baugruppe an. Ebenso sind das fünfte aktive Armmodul 25.5 und das sechste aktive Armmodul 25.6 einer dritten Baugruppe zugehörig, die die kleinste Ausgestaltung aufweist. Dadurch, dass die Armmodule 18 mit zunehmendem Abstand von der Roboterbasis 15 kleineren Baugruppen zugehören, wird das an der Roboterbasis 15 angeschlossene passive Armmodul 30, in der Ausführungsform das dritte passive Armmodul 30.3, mechanisch entlastet.

Die oben beschriebene Ausgestaltung des Modulbaukastens hat den Vorteil, dass auf einfache Weise mittels der einzelnen aktiven Armmodule 25 und gegebenenfalls mindestens einem passiven Armmodul 30 ein mehrachsiger Roboterarm 20 individuell auf die Bedürfnisse aus den aktiven bzw. passiven Armmodulen 25, 30 des Modulbaukastens maßgeschneidert zusammengestellt werden kann.

Durch die Fertigung der Armmodule 18 unabhängig von dem Roboterarm 20 kann der in Figur 1 gezeigte Industrieroboter 10 in besonders kurzer Zeit (innerhalb weniger Minuten) montiert werden. Auch kann nach Fertigstellung des Industrieroboters 10 der Industrieroboter 10 durch weitere (Arm-)Module des Modulbaukastens zur Anpassung des Industrieroboters 10 an eine andere Aufgabe flexibel angepasst und gegebenenfalls erweitert oder reduziert werden. So kann ein bestehender vier Rotationsachsen Raₙ aufweisender Roboterarm (nicht in Figur 1 gezeigt) durch zwei zusätzlich (gegebenenfalls nachträglich) zwischen dem Endeffektor und den bestehenden Armmodulen 18 montierte aktive Armmodule 25, beispielsweise auf den in Figur 1 gezeigten Industrieroboter 10, umgebaut werden.

Ferner kann auf die Anordnung von Leitungen, Kabeln oder anderen Verbindungsmitteln außenseitig an dem Industrieroboter 10 durch die innenseitige Führung des Fluids 51, der elektrischen Energie und die datentechnische
Verbindung verzichtet werden, sodass eine ungewollte Beschädigung des Industrieroboters 10 vermieden werden kann.

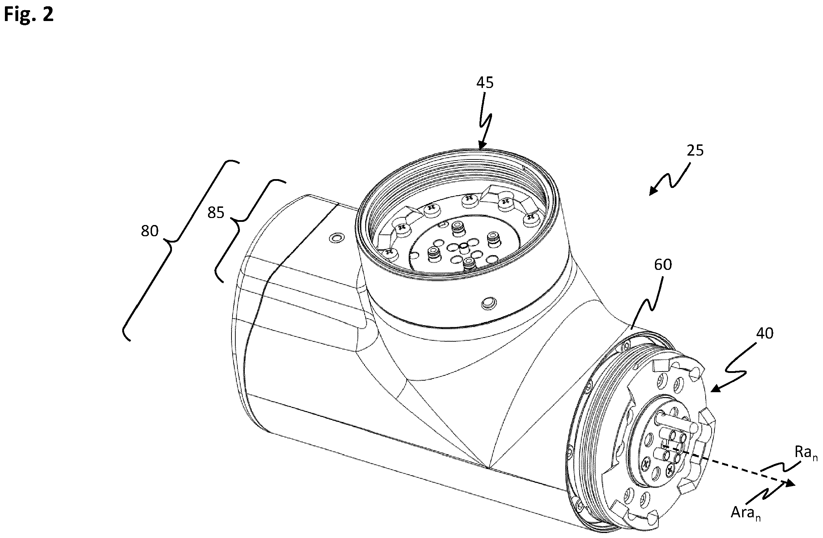

Figur 2 zeigt eine perspektivische Darstellung des in Figur 1 gezeigten aktiven Armmoduls 25.

Das aktive Armmodul 25 ist auch über die Baugruppen hinweg jeweils identisch aufgebaut, wobei jedoch abweichend dadurch nur die geometrische Erstreckungen der einzelnen aktiven Armmodule 25 verändert sind. Mit anderen Worten sind die aktiven J-förmig ausgebildeten aktiven Armmodule 25 der unterschiedlichen Baugruppen gegenüber einander skaliert ausgebildet.

In der Ausführungsform ist die erste Anschlussseite 40 in einer Rotationsebene senkrecht zu der Rotationsachse Raₙ angeordnet. Die zweite Anschlussseite 45 ist geneigt radial außen zu der Rotationsachse Raₙ angeordnet und geneigt, vorzugsweise senkrecht, zu der ersten Anschlussseite 40 ausgerichtet.

Das erste Gehäuse 60 weist einen im Wesentlichen zylinderförmig ausgebildeten ersten Gehäuseabschnitt 80 auf. Der erste Gehäuseabschnitt 80 erstreckt sich im Wesentlichen um die Rotationsachse Raₙ. Seitlich an einer ersten Umfangsseite des ersten Gehäuseabschnitts 80 ist am ersten Gehäuseabschnitt 80 ein zweiter Gehäuseabschnitt 85 angeordnet, wobei in Axialrichtung Araₙ der zweite Gehäuseabschnitt 85 schmaler ausgebildet ist als der erste Gehäuseabschnitt 80. Der zweite Gehäuseabschnitt 85 ist im Wesentlichen wannenförmig ausgebildet. An einer dem ersten Gehäuseabschnitt 80 abgewandten Seite ist die zweite Anschlussseite 45 am zweiten Gehäuseabschnitt 85 angeordnet. Dabei ragt die zweite Anschlussseite 45 über den zweiten Gehäuseabschnitt 85 heraus. Die zweite Anschlussseite 45 kann außermittig bezogen auf eine maximale Längserstreckung in Axialrichtung Araₙ angeordnet sein. Eine besonders günstige Kraftübertragung zwischen der ersten Anschlussseite 40 und der zweiten Anschlussseite 45 ist gegeben, wenn in Axialrichtung Araₙ die zweite Anschlussseite 45 anschließend an die erste Anschlussseite 40 am ersten Gehäuse 60 angeordnet ist. Insbesondere ist dadurch eine Biegebeanspruchung des ersten Gehäuses 60 zur Kraftübertragung besonders gering.

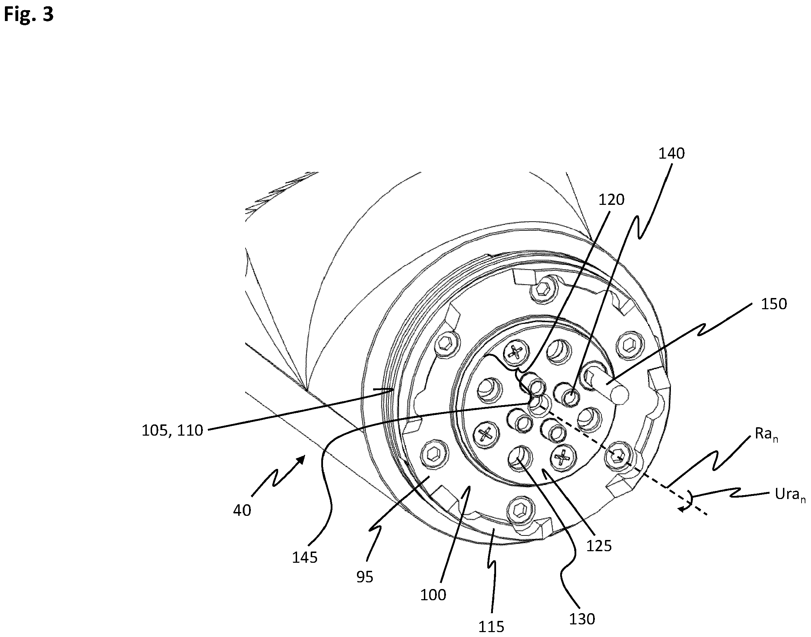

Figur 3 zeigt eine vergrößerte perspektivische Ansicht auf die erste Anschlussseite 40 des in den Figuren 1 und 2 gezeigten ersten aktiven Armmoduls 25.

Die erste Anschlussseite 40 weist eine Anschlussplatte 95 auf, wobei die Anschlussplatte 95 sich im Wesentlichen (in ihrer Haupterstreckung) in einer Rotationsebene senkrecht zur Rotationsachse Raₙ erstreckt. Die Anschlussplatte 95 weist eine erste Stirnseite 100 auf. Die erste Stirnseite 100 ist in einer Rotationsebene senkrecht zur Rotationsachse Raₙ angeordnet. An einer äußeren zweiten Umfangsseite 105, die sich auf einer Kreisbahn um die Rotationsachse Raₙ erstreckt, weist die Anschlussplatte 95 ein Außengewinde 110 auf. Radial außen angrenzend an die äußere zweite Umfangsseite 105 ist an der ersten Stirnseite 100 eine erste Stirnverzahnung 115 angeordnet, wobei die erste Stirnverzahnung 115 beispielsweise als Hirth-Verzahnung ausgebildet ist.

Radial innenseitig weist die Anschlussplatte 95 einen Anschlussabschnitt 120 auf. Der Anschlussabschnitt 120 ist beabstandet in Radialrichtung Rraₙ zu der ersten Stirnverzahnung 115 angeordnet und hohlzylindrisch ausgebildet. Der Anschlussabschnitt 120 weist eine zweite Stirnseite 125 auf, wobei die zweite Stirnseite 125 parallel zu der ersten Stirnseite 100 angeordnet ist. Rückseitig liegt der Anschlussabschnitt 120 an der ersten Stirnseite 100 an und ist mechanisch mit der Anschlussplatte 95 verbunden.

Die erste Anschlussseite 40 weist an dem Anschlussabschnitt 120 eine erste Fluidkontakteinrichtung 130, eine erste Leistungskontakteinrichtung 135 und eine erste Kontakteinrichtung 145 zur Datenverbindung auf.

Die erste Fluidkontakteinrichtung 130 ist konzentrisch um die Rotationsachse Raₙ angeordnet. Radial innenseitig zu der ersten Fluidkontakteinrichtung 130 ist die erste Leistungskontakteinrichtung 135 angeordnet. Die erste Leistungskontakteinrichtung 135 weist wenigstens ein erstes Leistungskontaktelement 140 auf. Vorzugsweise sind mehrere, vorzugsweise elektrisch zueinander isoliert angeordnete, erste Leistungskontaktelemente 140 vorgesehen, die in Umfangsrichtung Uraₙ versetzt zueinander, beispielsweise in einem Winkel von 90°, konzentrisch um die Rotationsachse Raₙ angeordnet sind. Die erste Kontakteinrichtung 145 ist auf der Rotationsachse Raₙ angeordnet.

Zusätzlich kann in Umfangsrichtung ein Stift 150 an der ersten Anschlussseite 40 angeordnet sein, wobei der Stift 150 über die zweite Stirnseite 125 herausragt.

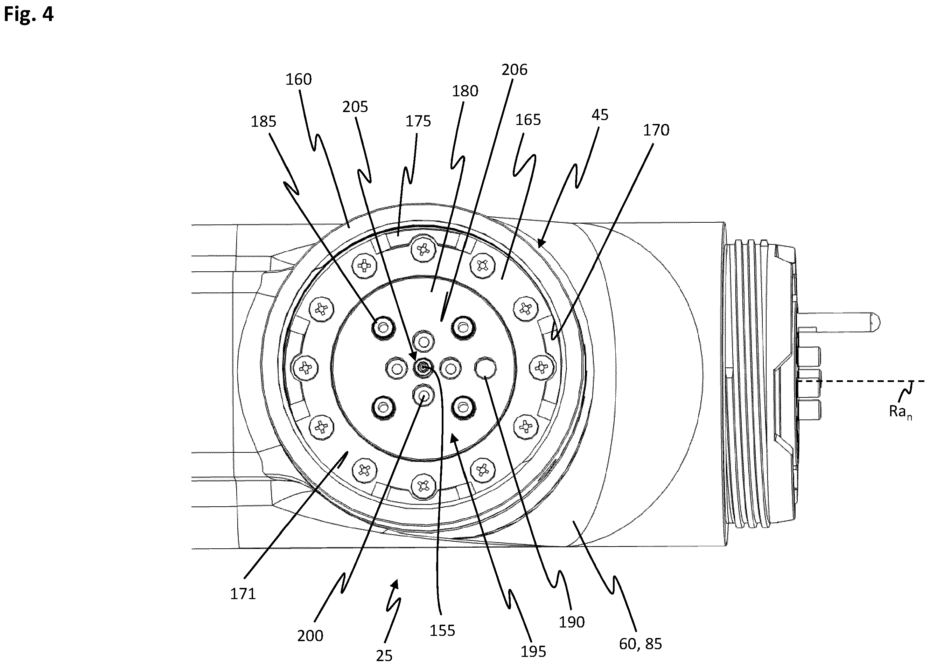

Figur 4 zeigt eine Seitenansicht auf das in den Figuren 1 bis 3 gezeigte aktive Armmodul 25 mit Blick auf die zweite Anschlussseite 45.

Die zweite Anschlussseite 45 ist bezogen auf eine Anschlussachse 155 orientiert, wobei die Anschlussachse 155 senkrecht zu der Rotationsachse Raₙ ausgerichtet ist. In montiertem Zustand überlappen die Anschlussachse 155 und die Rotationsachse Raₙ des an der zweiten Anschlussseite 45 mit der ersten Anschlussseite montierten aktiven Armmoduls 25 oder die Längsachse des an der zweiten Anschlussseite 45 mit der ersten Anschlussseite montierten passiven Armmoduls. Die Anschlussachse 155 verläuft somit in einer Rotationsebene zu der Rotationsachse Raₙ oder Längsachse des an der zweiten Anschlussseite 45 angeordneten passiven oder aktiven Armmoduls 25.

Die zweite Anschlussseite 45 weist radial außenseitig einen Befestigungsring 160 auf, der ringförmig auf einer Kreisbahn um die Anschlussachse 155 verläuft. Der Befestigungsring 160 ist axial mit dem ersten Gehäuse 60 verbunden und auf einer zum ersten Gehäuseabschnitt abgewandten Seite des zweiten Gehäuseabschnitts 85 angeordnet. Innenseitig begrenzt der Befestigungsring 160 eine Aufnahme 165, wobei die Aufnahme 165 im Wesentlichen zylinderförmig in ihrer Grundform ausgebildet ist. An einer inneren Umfangsseite weist der Befestigungsring 160 ein Innengewinde 170 auf, wobei das Innengewinde 170 korrespondierend zum Außengewinde der ersten Anschlussseite ausgebildet ist. In Axialrichtung bezogen auf die Anschlussachse 155 auf einer zur Rotationsachse Raₙ zugewandten Seite wird die Aufnahme 165 durch eine dritte Stirnseite 171 begrenzt, wobei die dritte Stirnseite 171 in einer Ebene senkrecht zu der Anschlussachse 155 verläuft.

Radial innenseitig schließt sich in der Aufnahme 165 an das Innengewinde 170 eine zweite Stirnverzahnung 175 an. Die erste Stirnverzahnung und die zweite Stirnverzahnung 175 sind zumindest komplementär, vorzugsweise korrespondierend, zueinander ausgebildet, sodass in montiertem Zustand die erste Stirnverzahnung und die zweite Stirnverzahnung 175 ineinander eingreifen können und so in Umfangsrichtung bezogen auf die Anschlussachse 155 bzw. auf die Rotationsachse Raₙ ein Drehmoment austauschen können.

Radial innenseitig zu der zweiten Stirnverzahnung 175 weist die zweite Anschlussseite 45 eine Vertiefung 180 auf, wobei die Vertiefung 180 korrespondierend zu dem Anschlussabschnitt der ersten Anschlussseite in radialer Richtung bezogen auf die Anschlussachse 155 ausgebildet ist. In der Vertiefung 180 weist die zweite Anschlussseite 45 wenigstens eine zweite Fluidkontakteinrichtung 185, eine zweite Leistungskontakteinrichtung 195 und eine zweite Kontakteinrichtung 205 auf. Ferner kann an einem Grund 206 der Vertiefung 180 eine Zentrieraufnahme 190 angeordnet sein, wobei die Zentrieraufnahme 190 korrespondierend zum Stift ausgebildet ist. Die zweite Fluidkontakteinrichtung 185 ist korrespondierend zu der ersten Fluidkontakteinrichtung ausgebildet, wobei beispielhaft die erste Fluidkontakteinrichtung als Steckkontakt und die zweite Fluidkontakteinrichtung 185 als Buchsenkontakt ausgebildet ist.

Radial innenseitig zu der zweiten Fluidkontakteinrichtung 185 ist in der Vertiefung 180 die zweite Leistungskontakteinrichtung 195 angeordnet, wobei die zweite Leistungskontakteinrichtung 195 korrespondierend zur ersten Leistungskontakteinrichtung ausgebildet ist.

Die erste Leistungskontakteinrichtung 195 ist beispielhaft als Steckkontakt ausgebildet. Die zweite Leistungskontakteinrichtung 195 weist wenigstens ein zweites Kontaktelement 200 auf, wobei das zweite Kontaktelement 200 buchsenartig ausgebildet sein kann. Vorzugsweise sind mehrere auf einer Kreisbahn um die Anschlussachse 155 angeordnete zweite Kontaktelemente 200 vorgesehen, die zueinander elektrisch isoliert sind.

Auf der Anschlussachse 155 ist die zweite Kontakteinrichtung 205 angeordnet, die korrespondierend zu der ersten Kontakteinrichtung ausgebildet ist.

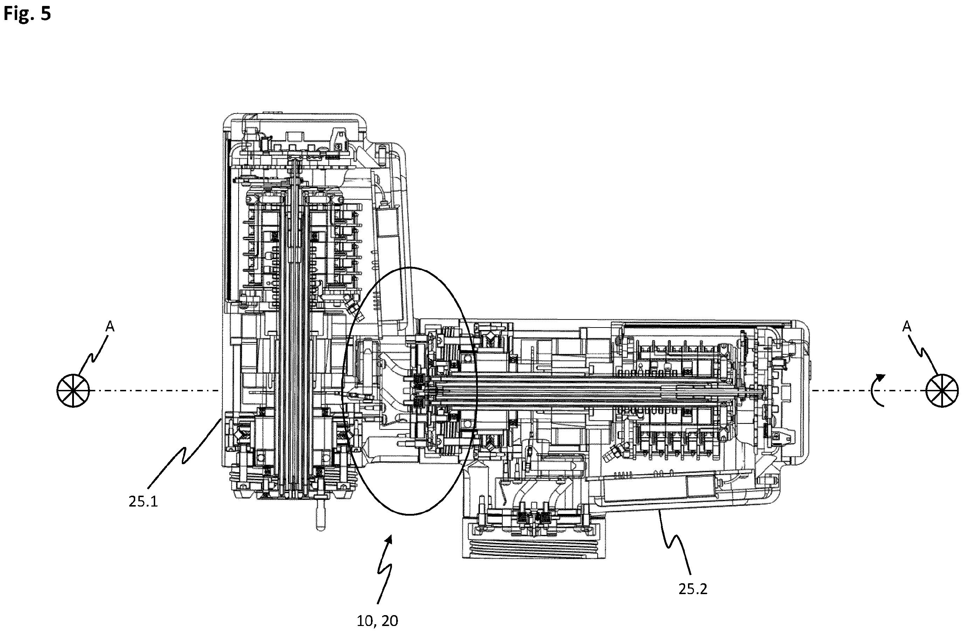

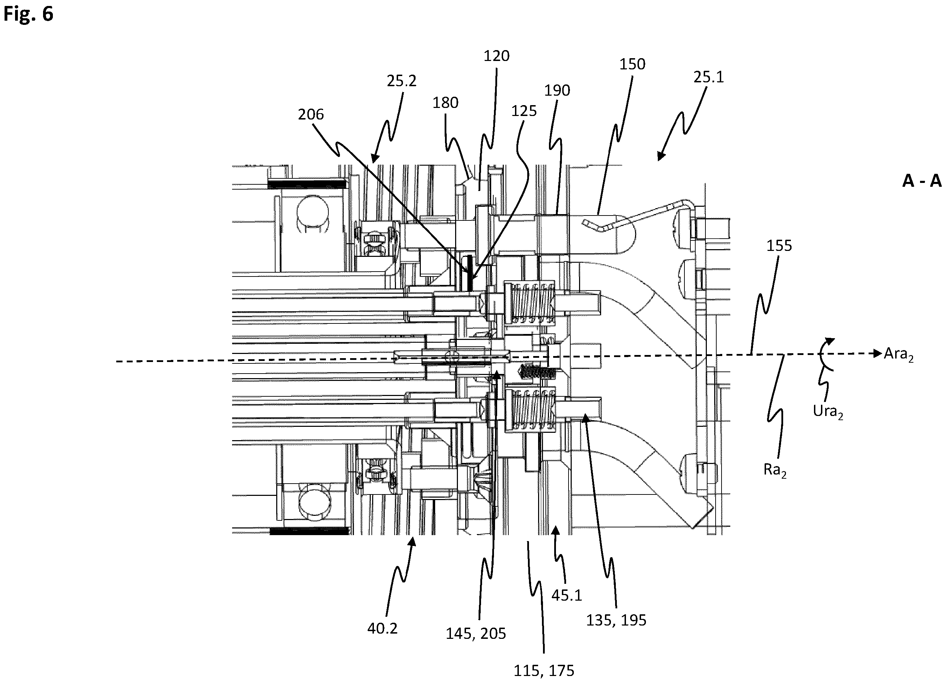

Figur 5 zeigt eine Seitenansicht auf zwei aktive Armmodule des in Figur 1 gezeigten Roboterarms und Figur 6 zeigt einen in Figur 5 markierten Ausschnitt einer Schnittansicht entlang einer in Figur 5 gezeigten Schnittebene A-A durch das erste aktive Armmodul 25.1 und das an dem ersten aktiven Armmodul 25.1 montierte zweite aktive Armmodul 25.2. Aus Übersichtlichkeitsgründen wird in Figur 6 auf die Markierung der geschnittenen Flächen mittels Schraffur verzichtet.

Die Kopplung der ersten Anschlussseite 40 mit der zweiten Anschlussseite 45 wird anhand der Kopplung der ersten Anschlussseite 40.2 des zweiten aktiven Armmoduls 25.2 mit der zweiten Anschlussseite 45.1 des ersten aktiven Armmoduls 25.1 beispielhaft erläutert. Die Kopplung der weiteren ersten bis vierten Anschlussseiten 40, 45 der anderen in Figur 1 gezeigten aktiven Armmodule 25 und passiven Armmodule 30 erfolgt identisch.

In montiertem Zustand greift der Anschlussabschnitt 120 in die Vertiefung 180 ein. Dabei sind die zweite Stirnseite 125 und der Grund 206 der Vertiefung 180 in Axialrichtung Ara₂ aneinandergepresst.

In montiertem Zustand kontaktiert die erste Kontakteinrichtung 145 die zweite Kontakteinrichtung 205, sodass eine Datenübertragung zwischen den beiden Kontakteinrichtungen 145, 205 beispielsweise mittels des optischen Signals sichergestellt ist. Ebenso kontaktiert die erste Leistungskontakteinrichtung die zweite Leistungskontakteinrichtung 195. Des Weiteren greifen die erste Fluidkontakteinrichtung und die zweite Fluidkontakteinrichtung ineinander ein und stellen eine fluiddichte Verbindung bereit. Zur Orientierung in Umfangsrichtung Ura₂ greift der Stift 150 in die Zentrieraufnahme 190 ein, sodass in der Montage, wenn die zweite Anschlussseite 45.1 des ersten aktiven Armmoduls 25.1 und die erste Anschlussseite 40.2 des zweiten aktiven Armmoduls 25.2 montiert werden, die Ausrichtung der ersten Anschlussseite 40.2 relativ zu der zweiten Anschlussseite 45.1 in Umfangsrichtung vordefiniert ist und dadurch eine Beschädigung der ersten und zweiten Kontakteinrichtung 145, 205, der ersten und zweiten Fluidkontakteinrichtung und der ersten und zweiten Leistungskontakteinrichtung 135, 195 vermieden wird.

Ferner greifen die erste Stirnverzahnung und die zweite Stirnverzahnung (in Figur 6 nicht dargestellt) derart ineinander ein, dass die erste Anschlussseite 40 und die zweite Anschlussseite 45 drehmomentschlüssig miteinander verbunden sind. In montiertem Zustand überlappen die Anschlussachse 155 und die zweite Rotationsachse Ra₂.

Durch die Verbindung der ersten Anschlussseite 40.2 des zweiten aktiven Armmoduls 25.2 mit dem ersten aktiven Armmodul 25.1 wird sowohl das zweite aktive Armmodul 25.2 am ersten aktiven Armmodul 25.1 mechanisch befestigt als auch eine Verbindung zur Übertragung des Fluids, des optischen und/oder elektrischen Signals zur Datenübertragung und zur Übertragung elektrischer Leistung über die erste und zweite Anschlussseite 40.2, 45.1 hinweg bereitgestellt.

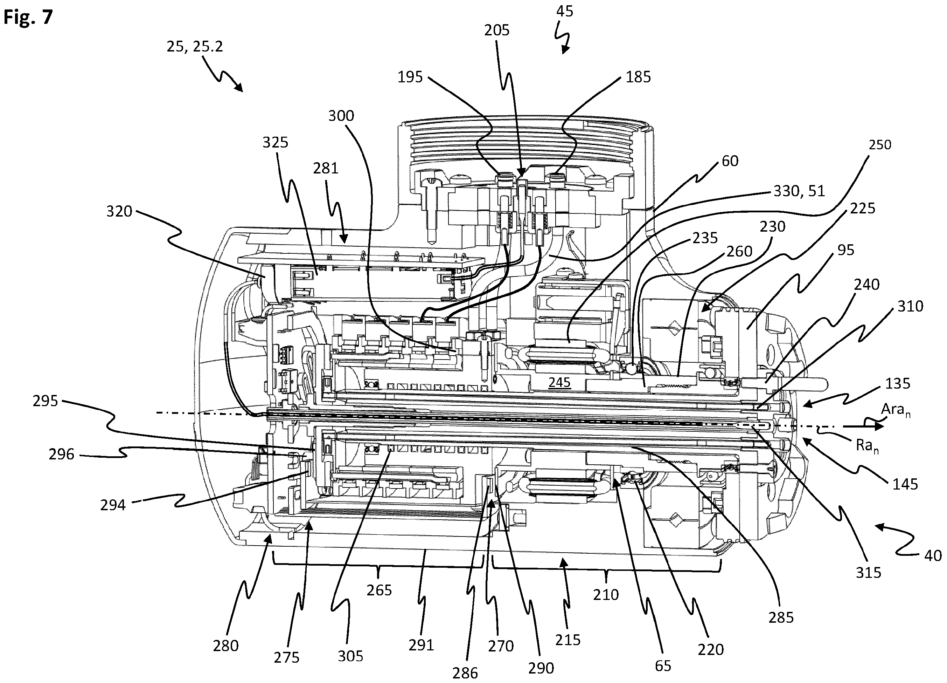

Figur 7 zeigt eine Schnittansicht durch das in den Figuren 1 bis 5 gezeigte aktive Armmodul 25. Aus Übersichtlichkeitsgründen wird in Figur 7 auf die Markierung der geschnittenen Flächen mittels Schraffur verzichtet.

Das aktive Armmodul 25 kann beispielsweise das in Figur 1 gezeigte zweite aktive Armmodul 25.2 sein. Neben der ersten Anschlussseite 40 und der zweiten Anschlussseite 45 sowie dem ersten Gehäuse 60 weist das aktive Armmodul 25 die Antriebseinrichtung 210 auf, die sich in Axialrichtung Araₙ bezogen auf die Rotationsachse Raₙ an die erste Anschlussseite 40 anschließt.

Das erste Gehäuse 60 kann ein- oder mehrteilig ausgebildet und beispielsweise aus einem Gussteil gefertigt sein und ist dazu ausgebildet, mechanisch Kräfte zwischen der ersten Anschlussseite 40 und der zweiten Anschlussseite 45 zu übertragen und die im ersten Gehäuseinnenraum 65 angeordneten Komponenten des ersten aktiven Armmoduls 25 vor Verschmutzung und/oder elektromagnetischen Einflüssen zu schützen.

Die Antriebseinrichtung 210 weist einen Antriebsmotor 215, eine Lageranordnung 220 und ein Getriebe 225 auf. In axialer Richtung ist das Getriebe 225 zwischen dem Antriebsmotor 215 und der ersten Anschlussseite 40 angeordnet. Das Getriebe 225 weist eine erste Eingangsseite 230, gegebenenfalls eine zweite Eingangsseite 235, und eine Ausgangsseite 240 auf. Das Getriebe 225 kann beispielsweise ein Planetengetriebe und/oder ein Exzentergetriebe, insbesondere ein Zykloidgetriebe und/oder ein Spannungswellengetriebe aufweisen.

Vorzugsweise ist das Getriebe 225 derart ausgebildet, dass ein Drehmoment, eingeleitet über die erste Anschlussseite 40 in die Ausgangsseite 240, nicht oder nur geringfügig an den Antriebsmotor 215 übertragen wird und die erste Eingangsseite 230 nicht in Rotation versetzt. Von besonderem Vorteil ist, wenn das Getriebe 225 selbsthemmend ausgebildet ist. Das Drehmoment kann beispielsweise über die zweite Eingangsseite 235 am ersten Gehäuse 60 abgestützt werden.

Der Antriebsmotor 215 weist beispielhaft eine elektrische Maschine auf, insbesondere einen bürstenlosen Elektromotor, wobei der Antriebsmotor 215 einen Rotor 245 und einen Stator 250 aufweist. Der Stator 250 ist drehfest mit dem ersten Gehäuse 60 verbunden. Der Stator 250 weist Wicklungen auf, die ein um die Rotationsachse Raₙ wirkendes drehendes elektromagnetisches Feld ausbilden, um den beispielsweise mit Permanentmagneten besetzten Rotor 245 anzutreiben.

Radial innenseitig zu dem Rotor 245 weist die Antriebseinrichtung 210 eine erste Hohlwelle 260 auf. Die erste Hohlwelle 260 ist ebenso zumindest abschnittsweise radial innenseitig zu dem Getriebe 225 angeordnet. Dabei ist an einer Axialseite die erste Hohlwelle 260 mit dem Rotor 245 und an einer anderen Seite ist die erste Hohlwelle 260 drehmomentschlüssig mit der ersten Eingangsseite 230 des Getriebes 225 drehmomentschlüssig verbunden. Die erste Hohlwelle 260 kann auch als schnelle Welle bezeichnet werden, denn im Betrieb des aktiven Armmoduls 25 rotiert die erste Hohlwelle 260 mit einer Motordrehzahl des Rotors 245.

Die Lageranordnung 220 lagert die erste Hohlwelle 260 drehbar um die Rotationsachse Raₙ. Die zweite Eingangsseite 235 ist drehfest mit dem ersten Gehäuse 60 verbunden. Das Getriebe 225 ist ausgebildet, eine Antriebsdrehzahl des Rotors 245 um wenigstens ein Übersetzungsverhältnis von 1:30 bis vorzugsweise 1:5000, insbesondere von 1:50 bis 1:200, zu einer Abtriebsdrehzahl zu übersetzen. Die Ausgangsseite 240 des Getriebes 225 ist drehfest mit der ersten Anschlussseite 40 verbunden. Dadurch treibt im Betrieb der Antriebseinrichtung 210 die Antriebseinrichtung 210 die erste Anschlussseite 40 an. Die erste Anschlussseite 40 dreht im Betrieb mit der Abtriebsdrehzahl.

Axial auf einer der ersten Anschlussseite 40 gegenüberliegenden Seite weist das aktive Armmodul 25 eine Übergabeeinrichtung 265 auf. Axial zwischen dem Antriebsmotor 215 und der Übergabeeinrichtung 265 weist das aktive Armmodul 25 eine erste Sensoreinrichtung 270 auf. Axial auf einer dem Antriebsmotor 215 abgewandten Seite der Übergabeeinrichtung 265 ist ferner eine erste Steuereinrichtung 280 angeordnet. Des Weiteren weist das aktive Armmodul 25 im ersten Gehäuseinnenraum einen Umsetzer 281 auf. Der Umsetzer 281 und die erste Steuereinrichtung 280 können miteinander datentechnisch verbunden sein.

Die erste Steuereinrichtung 280 ist elektrisch mit dem Antriebsmotor 215 verbunden und ausgebildet, den Antriebsmotor 215 zu steuern und/oder zu regeln. Eine zweite Sensoreinrichtung 275 des aktiven Armmoduls 25, die im Allgemeinen auch nur als Sensoreinrichtung 275 bezeichnet wird, ist axial zwischen der Übergabeeinrichtung 265 und der Steuereinrichtung 280 angeordnet.

Die erste Sensoreinrichtung 270 kann als optischer Drehgeber oder als magnetischer Drehgeber ausgebildet sein und weist wenigstens einen ersten Sensor 286 und ein erstes Signalelement 290 auf, wobei das erste Signalelement 290 drehfest mit der ersten Hohlwelle 260 verbunden ist und somit im Betrieb um die Rotationsachse Raₙ rotiert. Der erste Sensor 286 ist drehfest mit dem ersten Gehäuse 60 gekoppelt. Der erste Sensor 286 erfasst das erste Signalelement 290 zur Erfassung einer Drehzahl und/oder einer Position der ersten Hohlwelle 260 relativ zum ersten Gehäuse 60. Der erste Sensor 286 ist elektrisch über eine erste Verbindung 291 mit der ersten Steuereinrichtung 280 verbunden. Der erste Sensor 286 stellt der ersten Steuereinrichtung 280 eine zur Position und/oder Drehzahl korrelierendes erstes Positionssignal mit einer ersten Information über die erste Verbindung 291 bereit, die die erste Steuereinrichtung 280 erfasst. Das erste Signalelement 290 kann scheibenförmig ausgebildet sein und eine vordefinierte Erfassungsstruktur zur Erfassung durch den ersten Sensor 286 aufweisen.

Zusätzlich weist das aktive Armmodul 25 eine zweite Hohlwelle 285 auf, wobei sich die zweite Hohlwelle 285 im Wesentlichen über einen Großteil der axialen Breite im ersten Gehäuseinnenraum 65 erstreckt. An einem Ende ist die zweite Hohlwelle 285 mit der ersten Anschlussseite 40 drehfest verbunden. Die zweite Hohlwelle 285 und die Anschlussplatte 95 können einstückig und materialeinheitlich gefertigt sein. Die zweite Hohlwelle 285 ist innenseitig der ersten Hohlwelle 260 angeordnet und durchgreift die erste Hohlwelle 260. Die Lageranordnung 220 lagert die zweite Hohlwelle 285 drehbar gegenüber der ersten Hohlwelle 260 um die Rotationsachse Raₙ. Die zweite Hohlwelle 285 ist dabei axial länger ausgebildet als die erste Hohlwelle 260. Die zweite Hohlwelle 285 durchgreift ferner die Übergabeeinrichtung 265 und die erste Sensoreinrichtung 270 im Wesentlichen vollständig. Die zweite Hohlwelle 285 rotiert im Betrieb des aktiven Armmoduls 25, insbesondere der Antriebseinrichtung 210, mit der Abtriebsdrehzahl.

Die zweite Sensoreinrichtung 275 ist unterschiedlich zur ersten Sensoreinrichtung 270 ausgebildet und weist einen zweiten Sensor 294 und ein zweites Signalelement 295 auf, wobei das zweite Signalelement 295 scheibenartig ausgebildet und mit der zweiten Hohlwelle 285 drehfest verbunden ist. Der zweite Sensor 294 ist mittels einer zweiten Verbindung 296 elektrisch mit der ersten Steuereinrichtung 280 verbunden. Der zweite Sensor 294 erfasst das zweite Signalelement 295 zur Erfassung einer Drehzahl und/oder einer Position der zweiten Hohlwelle 285 relativ zum ersten Gehäuse 60. Der zweite Sensor 294 stellt der ersten Steuereinrichtung 280 eine zur Position und/oder Drehzahl der zweiten Hohlwelle 285 korrelierendes zweites Positionssignal (das im Allgemeinen auch als Positionssignal bezeichnet wird) mit einer zweiten Information über die zweite Verbindung 296 bereit, die die erste Steuereinrichtung 280 erfasst.

Die erste Steuereinrichtung 280 ist ausgebildet, eine Position der zweiten Hohlwelle 285 auf Grundlage der zweiten Information (bereitgestellt mittels des zweiten Positionssignals) zu bestimmen. Die erste Information berücksichtigt die erste Steuereinrichtung 280 bei einer Steuerung/Regelung des Antriebsmotors 215. Dadurch kann die erste Steuereinrichtung 280 besonders präzise die erste Anschlussseite 40 relativ zum ersten Gehäuse 60 bewegen. Dies ist insbesondere von Vorteil, da die Rotation um die Rotationsachse Raₙ nicht mechanisch limitiert ist und somit keine mechanischen Anschläge zur Justierung vorgesehen sind.

Die 265 weist einen drehfest mit dem ersten Gehäuse 60 verbundenen Abnehmer 300 und einen um die Rotorachse rotierbar Raₙ gelagerten Übergaberotor 305 auf. Durch die zweite Hohlwelle 285 ist der Übergaberotor 305 drehfest mit der ersten Anschlussseite 40 mechanisch und elektrisch über eine dritte elektrische Verbindung 310 mit der ersten Leistungskontakteinrichtung 135 verbunden. Die dritte Verbindung 310 ist elektrisch gegenüber der zweiten Hohlwelle 285 isoliert ausgebildet. Der Übergaberotor 305 ist ferner elektrisch mit dem Abnehmer 300 verbunden. Der Abnehmer 300 und der Übergaberotor 305 können beispielsweise wenigstens eine Schleifringeinrichtung aufweisen. Der Abnehmer 300 ist elektrisch mit der ersten Steuereinrichtung 280 und der zweiten Leistungskontakteinrichtung 195 verbunden. Dadurch ist die erste Leistungskontakteinrichtung 135 elektrisch mit der zweiten Leistungskontakteinrichtung 195 und mit der ersten Steuereinrichtung 280 elektrisch zur Übertragung von elektrischer Leistung verbunden. Die Steuereinrichtung 280 ist ausgangsseitig mit dem Antriebsmotor 215 elektrisch verbunden.

Des Weiteren ist in der zweiten Hohlwelle 285 wenigstens ein Fluidkanal (in Figur 7 verdeckt) angeordnet, wobei der Fluidkanal die erste Fluidkontakteinrichtung (in Figur 7 ebenfalls verdeckt) mit dem Übergaberotor 305 fluidisch verbindet. Zusätzlich kann der Übergaberotor 305 auch eine Fluidverbindung zu dem Abnehmer 300 bereitstellen. Die zweite Fluidkontakteinrichtung 185 ist fluidisch, beispielsweise über ein Schlauchteil 330, mit dem Abnehmer 300 verbunden. Dadurch kann das Fluid 51 über den in der zweiten Hohlwelle 285 angeordneten Fluidkanal sowie den Übergaberotor 305 und den Abnehmer 300 sowie dem Schlauchteil 330 zwischen der ersten Fluidkontakteinrichtung und der zweiten Fluidkontakteinrichtung 185 ausgetauscht werden.

Konzentrisch ist in der zweiten Hohlwelle 285 ein erster Lichtleiter 315 angeordnet, der entlang der Rotationsachse Raₙ geführt ist und die erste Kontakteinrichtung mit Umsetzer 281 verbindet. Die erste Kontakteinrichtung ist dabei als Drehübergabe ausgebildet. Der erste Lichtwellenleiter 315 ist im Betrieb des aktiven Armmoduls 25 drehfest zu dem ersten Gehäuse angeordnet. Der Umsetzer 281 ist derart ausgebildet, ein über die erste optische Kontakteinrichtung hinweg in den ersten Lichtleiter 315 eingeleitetes optisches (Daten-)Signal zu erfassen und sowohl in ein elektrisches Datensignal umzusetzen und der ersten Steuereinrichtung 280 als auch ein Signal über denselben Weg zu senden. Die erste Steuereinrichtung 280 ist mit dem Umsetzer 281 datentechnisch elektrisch verbunden.

Im Folgenden wird die Figur 7 im Zusammenhang mit Figur 1 erläutert und entsprechend auf beide Figuren referenziert eingegangen.

Im Betrieb des Industrieroboters 10 wird über die Roboterbasis 15 das Fluid 51, das optische Signal zur Übermittlung von Dateninformationen (insbesondere Steuerinformationen und/oder Sicherheitsinformation) am Datennetzwerk 53 und die elektrische Leistung von der elektrischen Energiequelle 52 bereitgestellt und über die erste Anschlussseite 40.1 in das erste aktive Armmodul 25.1 geleitet. Sowohl das Fluid 51, die elektrische Leistung und das optische Signal werden über das erste aktive Armmodul 25.1 an die zweite Anschlussseite 45.1 des ersten aktiven Armmoduls 25.1 übertragen. Über die zweite Anschlussseite 45.1 des ersten aktiven Armmoduls 25.1 und die erste Anschlussseite 40.2 des zweiten aktiven Armmoduls 25.2 wird das Fluid 51, das optische Signal und die elektrische Leistung in das zweite aktive Armmodul 25.2 eingeleitet.

Ferner wird über die erste Leistungskontakteinrichtung 135 von der ersten Anschlussseite 40.2 des zweiten aktiven Armmoduls 25.2 die elektrische Leistung über die dritte elektrische Verbindung 310 zu der Übergabeeinrichtung 265 geleitet, wo über den Abnehmer 300 von dem Übergaberotor 305 die elektrische Leistung abgegriffen wird. Durch die elektrische Verbindung der ersten Steuereinrichtung 280 eingangsseitig mit der Übergabeeinrichtung 265 ist die erste Steuereinrichtung 280 mit elektrischer Energie versorgt. Die erste Steuereinrichtung 280 steuert auf Grundlage der über das elektrische Datensignal bereitgestellten Information und der ermittelten Position der ersten Anschlussseite 40.1 des ersten aktiven Armmoduls 25.1 die Antriebseinrichtung 210, insbesondere den Antriebsmotor 215, an. Bei Aktivierung des Antriebsmotors 215 verdreht der Antriebsmotor 215 die erste Anschlussseite 40.2 des zweiten aktiven Armmoduls 25.2 um die zweite Rotationsachse Ra₂ und verdreht dabei das erste Gehäuse 60 des zweiten aktiven Armmoduls 25.2 gegenüber dem ersten aktiven Armmodul 25.1, insbesondere dem ersten Gehäuse 60 des ersten aktiven Armmoduls 25.1.

Durch die in Figur 7 erläuterte Ausgestaltung ist die Verdrehung des zweiten aktiven Armmoduls 25.2 gegenüber dem ersten aktiven Armmodul 25.1 nicht limitiert. Ferner wird durch die in Figur 7 erläuterte Ausgestaltung das Fluid über das zweite aktive Armmodul 25.2 hin zur zweiten Anschlussseite 45.2 des zweiten aktiven Armmoduls 25.2 im ersten Gehäuse 60 des zweiten aktiven Armmoduls 25.2 weitergeleitet.

Ebenso wird innenseitig im ersten Gehäuse 60 die elektrische Energie an die zweite elektrische Kontakteinrichtung 195 weitergeführt. Der Umsetzer 281 setzt das erfasste elektrische Datensignal und/oder optischen (Daten-) Signal in ein weiteres optisches (Daten-) Signal um, das mittels eines zweiten Lichtwellenleiters 325 an die zweite Kontakteinrichtung 205 übertragen wird.

Verdreht sich das zweite aktive Armmodul 25.2 gegenüber dem ersten aktiven Armmodul 25.1, so wird über die mechanische Ankopplung der zweiten Anschlussseite 45.2 des zweiten aktiven Armmoduls 25.2 die auf der zur Roboterbasis 15 abgewandten Seite des zweiten aktiven Armmoduls 25.2 angeordneten dritten bis sechsten aktiven Armmodule 25.3 bis 25.6 sowie das erste und zweite passive Armmodul 30.1 und 30.2 mit verschwenkt. Die bezüglich des ersten und zweiten aktiven Armmoduls 25.1 und 25.2 erläuterte Kopplung und Durchführung des Fluids 51, der elektrischen Leistung und des optischen Signals als Datensignal erfolgt analog auch bei den dritten bis sechsten aktiven Armmodulen 25.3 bis 25.6.

Am sechsten aktiven Armmodul 25.6 wird das Fluid 51, das optische Signal und die elektrische Leistung an der ersten Anschlussseite 40.6 des sechsten aktiven Armmoduls 25.6 an den Endeffektor übergeben. Der Endeffektor kann beispielsweise über das Fluid 51 betrieben werden. So kann beispielsweise der Endeffektor einen pneumatischen Greifer (in Figur 1 nicht dargestellt) aufweisen. Ebenso kann mittels der über den Roboterarm 20 von der Roboterbasis 15 an den Endeffektor übertragenen elektrischen Leistung der Endeffektor zumindest teilweise mit elektrischer Leistung versorgt werden.

Ferner wird eine Highspeed-Datenübertragung zwischen der Roboterbasis 15 und dem Endeffektor über die aktiven und passiven Armmodule 25, 30 realisiert. Eine erzielbare Datenrate über die ersten und zweiten Kontakteinrichtungen 145, 205 bzw. über die aktiven und passiven Armmodule 25, 30 beträgt dabei wenigstens 1 Gigabit und ist insbesondere geeignet, mittels eines EtherCAT-Standards betrieben zu werden. Ferner wird durch die innenseitige Führung der Lichtleiter 315, 325 in dem ersten Gehäuse 60 sichergestellt, dass diese besonders empfindlichen Komponenten nicht beschädigt werden, sodass dadurch eine robuste und im industriellen Umfeld zuverlässige Funktionsfähigkeit des Industrieroboters 10 bei der Datenübertragung zwischen der Roboterbasis 15 und dem Endeffektor sichergestellt ist. Ferner wird auch durch die oben beschriebene Ausgestaltung eine Echtzeitfähigkeit über EtherCAT sichergestellt. Ebenso ist die oben beschriebene Lösung besonders kostengünstig und platzsparend.

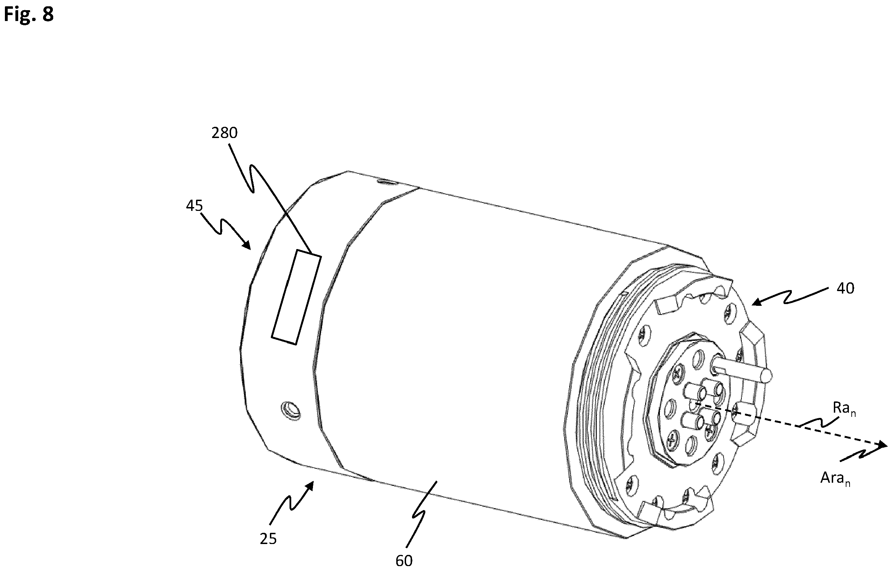

Figur 8 zeigt eine perspektivische Darstellung eines aktiven Armmoduls 25 gemäß einer zweiten Ausführungsform.

Das aktive Armmodul 25 ist im Wesentlichen identisch zu den in den Figuren 1 bis 5 gezeigten aktiven Armmodulen ausgebildet. Abweichend dazu ist das aktive Armmodul 25 in Figur 8 als I-Modul ausgebildet, sodass das erste Gehäuse 60 sich entlang der Rotationsachse Raₙ im Wesentlichen geradlinig erstreckt. Das erste Gehäuse 60 ist beispielhaft röhrenförmig, insbesondere hohlzylindrisch ausgebildet.

Die erste Anschlussseite 40 ist in einer ersten Rotationsebene und die zweite Anschlussseite 45 ist in Axialrichtung Araₙ versetzt in einer zweiten Rotationsebene angeordnet. Die zweite Anschlussseite 45 schließt sich somit in Axialrichtung Araₙ an die erste Steuereinrichtung 280 an. Die erste Anschlussseite 40 ist um die Rotationsachse Raₙ rotierbar, während hingegen, wie in den Figuren 1 bis 7 bereits erläutert, die zweite Anschlussseite 45 drehfest mit dem ersten Gehäuse 60 des aktiven Armmoduls 25 verbunden ist. Der Betrieb des in Figur 8 erläuterten aktiven Armmoduls 25 erfolgt ebenso wie in den Figuren 1 und 7 im Zusammenhang mit dem dort gezeigten J-förmig ausgebildeten aktivem Armmodul 25 erläutert.

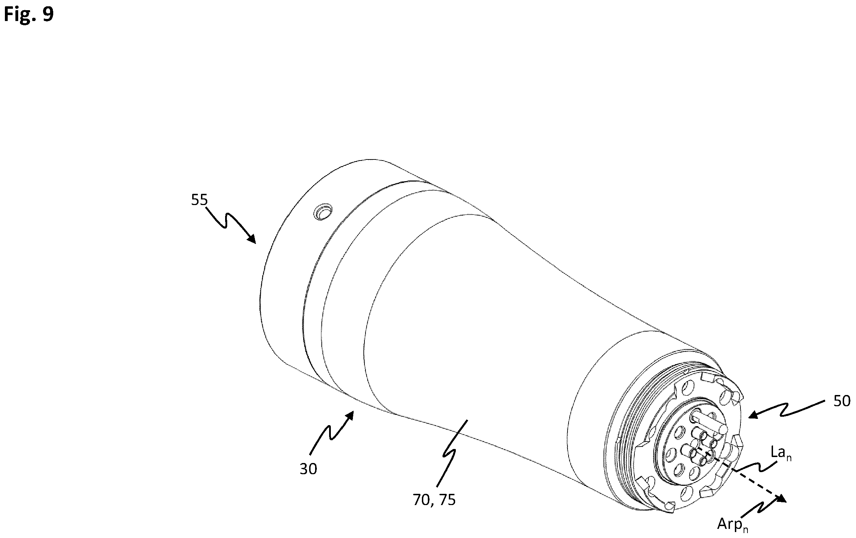

Figur 9 zeigt eine perspektivische Darstellung des in Figur 1 gezeigten passiven Armmoduls 30 gemäß einer ersten Ausführungsform.

Das in Figur 9 gezeigte beispielhafte passive Armmodul 30 des Modulbaukastens ist im Wesentlichen identisch zu dem in Figur 8 gezeigten aktiven Armmodul ausgebildet. Die in Figur 9 gezeigte Ausgestaltung des passiven Armmoduls 30 wird in Figur 1 beispielsweise als zweites passives Armmodul 30.2 eingesetzt.

Das passive Armmodul 30 weist, wie in Figur 1 bereits erläutert, die dritte Anschlussseite 50, die vierte Anschlussseite 55 und das zweite Gehäuses 70 auf. Die dritte Anschlussseite 50 und die vierte Anschlussseite 55 sind jeweils mit dem zweiten Gehäuse 70 drehfest verbunden. In der Ausführungsform ist beispielhaft die dritte Anschlussseite 50 identisch zur ersten Anschlussseite des aktiven Armmoduls (detailliert in Figur 3 dargestellt) und die vierte Anschlussseite 55 identisch zur zweiten Anschlussseite des aktiven Armmoduls (detailliert in Figur 4 dargestellt) ausgebildet.

Das zweite Gehäuse 70 ist hohlkörperartig ausgebildet und verjüngt sich von der vierten Anschlussseite 55 hin zur dritten Anschlussseite 50 und begrenzt den zweiten Gehäuseinnenraum 75. Gegenüber dem in Figur 8 gezeigten aktiven Armmodul wird beim passiven Armmodul 30 sowohl auf die erste Steuereinrichtung als auch auf die Antriebseinrichtung und die Übergabeeinrichtung verzichtet. Im zweiten Gehäuseinnenraum 75 kann eine Fluidleitung zur fluidischen Verbindung der dritten Anschlussseite 50 mit der vierten Anschlussseite 55 sowie wenigstens ein elektrisches Kabel zur elektrischen Verbindung der dritten Anschlussseite 50 mit der vierten Anschlussseite 55 und/oder ein weiterer Lichtleiter zur optischen Verbindung der dritten Anschlussseite 50 mit der vierten Anschlussseite 55 verlaufen.

In montiertem Zustand des Industrieroboters 10 (wie in Figur 1 gezeigt) werden über die dritte Anschlussseite 50 und die vierte Anschlussseite 55 hinweg das optische Signal, die elektrische Leistung und das Fluid zwischen beispielsweise dem vierten aktiven Armmodul 25.4 und dem fünften aktiven Armmodul 25.5 durch das passive zweite Armmodul 30.2 ausgetauscht.

Das in Figur 1 gezeigte erste passive Armmodul 30.1 bildet eine zweite Ausführungsform des passiven Armmoduls 30 aus und ist gegenüber der in Figur 9 gezeigten ersten Ausführungsform des passiven Armmoduls 30 dahingehend abgewandelt, dass die vierte Anschlussseite 55 und die dritte Anschlussseite 50 identisch zueinander und identisch zu der ersten Anschlussseite des aktiven Armmoduls ausgebildet sind.

Die identische Ausgestaltung der dritten Anschlussseite 50 und der vierten Anschlussseite 55 kann auch dahingehend nur bauarttypisch derart identisch ausgebildet sein, dass das passive Armmodul 30 als Adapter zwischen zwei Baugruppen des Modulbaukastens dient und somit in ihrer geometrischen Dimensionierung der dritten und vierten Anschlussseite 50, 55 beispielsweise die vierte Anschlussseite 55 größer als die dritte Anschlussseite 50 gewählt ist.

In einer dritten Ausführungsform des passiven Armmoduls 30 ist das passive Armmodul 30 im Wesentlichen identisch zur ersten Ausführungsform ausgebildet und kann zusätzlich auch die Adapterfunktion übernehmen. Dabei kann die dritte Anschlussseite 50 beispielsweise zum Anschließen der dritten Anschlussseite 50 an die zweite Anschlussseite von aktiven Armmodulen aus der ersten Baugruppe ausgebildet sein und die vierte Anschlussseite 55 kann derart dimensioniert sein, dass sie an der ersten Anschlussseite des aktiven Armmoduls aus der zweiten Baugruppe anschließbar ist.

In einer vierten Ausführungsform des passiven Armmoduls 30, die im Wesentlichen identisch zu der ersten Ausführungsform des in Figur 9 gezeigten passiven Armmoduls 30 ist, können die dritte Anschlussseite 50 und die vierte Anschlussseite 55 korrespondierend zueinander ausgebildet sein, wobei an der dritten Anschlussseite 50 die erste Anschlussseite des aktiven Armmoduls und an der vierten Anschlussseite 55 die zweite Anschlussseite des aktiven Armmoduls anschließbar ist. Dadurch ist beispielhaft die dritte Anschlussseite 50 identisch zur zweiten Anschlussseite und die vierte Anschlussseite identisch zur ersten Anschlussseite ausgebildet.

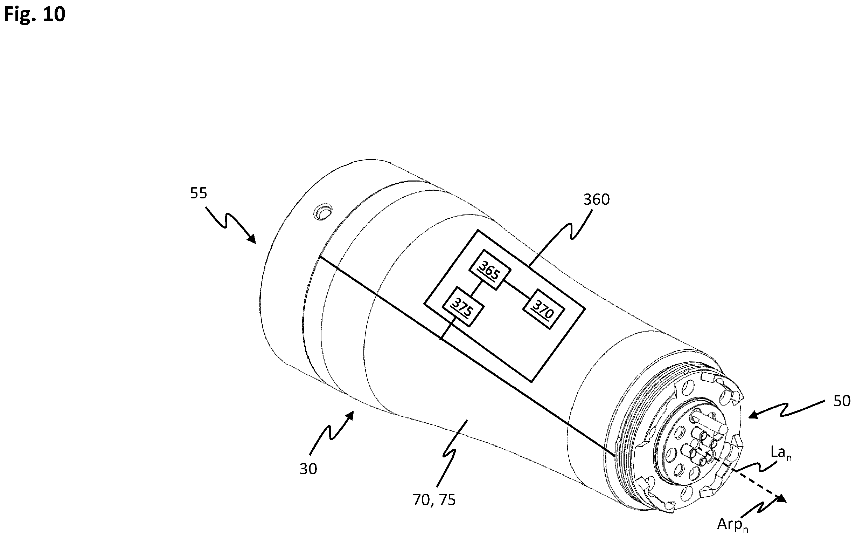

Figur 10 zeigt eine perspektivische Darstellung eines passiven Armmoduls 30 gemäß einer fünften Ausführungsform.

Das passive Armmodul 30 ist im Wesentlichen identisch zu der ersten Ausführungsform des in Figur 9 gezeigten passiven Armmoduls 30 ausgebildet. Im Folgenden wird ausschließlich auf die Unterschiede des in Figur 10 gezeigten passiven Armmoduls 30 gegenüber dem in Figur 9 gezeigten passiven Armmodul eingegangen.

In dem zweiten Gehäuseinnenraum 75 weist das in Figur 10 gezeigte passive Armmodul 30 ein Steuergerät 360 auf, wobei das Steuergerät 360 über die dritte und/oder vierte Anschlussseite 50, 55 mit elektrischer Leistung versorgt wird und datentechnisch mit den weiteren aktiven und passiven Armmodulen und/oder dem Datennetzwerk verbunden ist.

Das Steuergerät 360 weist eine zweite Steuereinrichtung 365, einen mit der zweiten Steuereinrichtung 365 verbundenen Datenspeicher 370 und eine mit der zweiten Steuereinrichtung 365 verbundene Schnittstelle 375 auf, wobei die Schnittstelle 375 elektrisch und/oder optisch mit der dritten Anschlussseite 50 und/oder mit der vierten Anschlussseite 55 verbunden ist.

In dem Datenspeicher 370 kann ein vordefiniertes Steuerprogramm, insbesondere ein computerimplementierter Algorithmus abgespeichert sein. Insbesondere kann das Steuergerät 360 als Industrie-PC oder Funktionsklemme, insbesondere I/O-Klemme ausgebildet sein. Die zweite Steuereinrichtung 365 des Steuergeräts 360 ist ausgebildet, auf Grundlage des vordefinierten Steuerprogramms ein Steuersignal zu ermitteln und über die Schnittstelle 375 das Steuersignal beispielsweise als optisches Signal an die dritte Anschlussseite 50 und/oder an die vierte Anschlussseite 55 bereitzustellen.

Durch die Anordnung des Steuergeräts 360 im zweiten Gehäuseinnenraum 75 kann der Industrieroboter besonders kompakt ausgebildet sein. Insbesondere kann auf zusätzliche Schaltschränke verzichtet werden. Von besonderem Vorteil ist hierbei, wenn das Steuergerät 360 an der der Roboterbasis zugewandten Seite des Roboterarms angeordnet ist.

Ferner wäre eine Kombination mit dem in Figur 10 gezeigten passiven Armmodul 30 und dem in Figur 1 gezeigten ersten passiven Armmodul 30.1 denkbar, bei der das erste passive Armmodul 30.1 beispielsweise das Steuergerät aufweist.

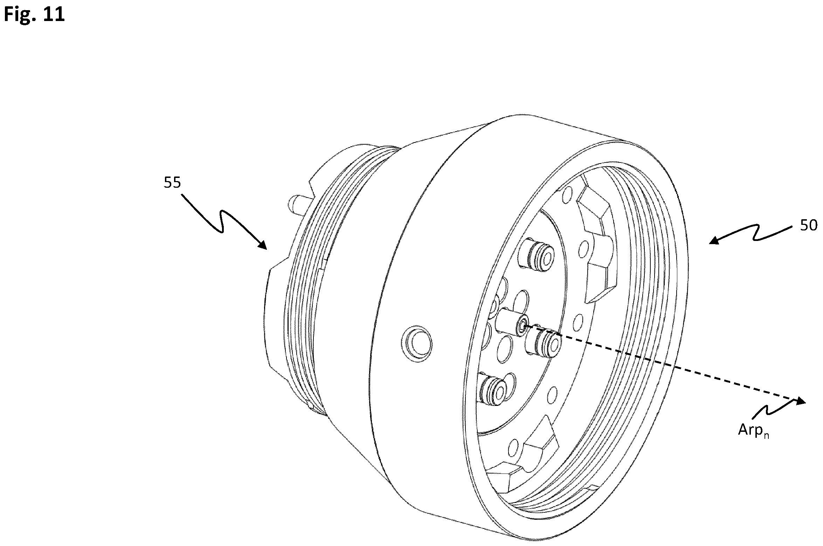

Figur 11 zeigt eine perspektivische Darstellung eines passiven Armmoduls 30 gemäß einer sechsten Ausführungsform.

Das passive Armmodul 30 ist im Wesentlichen identisch zu dem in Figur 9 gezeigten passiven Armmodul 30 ausgebildet. Im Folgenden wird ausschließlich auf die Unterschiede des in Figur 11 gezeigten passiven Armmoduls 30 gegenüber dem in Figur 9 gezeigten passiven Armmodul 30 eingegangen.

In Längsrichtung Arpₙ ist das passive Armmodul 30 kürzer ausgebildet als das in Figur 9 gezeigte passive Armmodul 30. Die vierte Anschlussseite 55 ist ausgebildet, mit einer zweiten Anschlussseite von aktiven Armmodulen aus der zweiten Baugruppe und die dritte Anschlussseite 50 ist ausgebildet, mit einer ersten Anschlussseite von aktiven Armmodulen aus einer Baugruppe, die kleiner ist als die erste Baugruppe, beispielsweise der dritten Baugruppe, angeschlossen zu werden. Dadurch übernimmt das in Figur 11 gezeigte passive Armmodul 30 die Adapterfunktion. Dabei kann beispielsweise in Figur 1 die vierte Anschlussseite 55.2 des zweiten passiven Armmoduls 30.2 mit der zweiten Anschlussseite 45.5 des fünften aktiven Armmoduls 25.5 verbunden sein. Die dritte Anschlussseite 50.2 des zweiten passiven Armmoduls 30.2 ist dabei mit der ersten Anschlussseite 40.4 des vierten aktiven Armmoduls 25.4 verbunden.

Dabei wird über das auch als Adapterelement ausgebildete in Figur 11 gezeigte passive Armmodul 30 hinweg die fluidische Verbindung zur Übertragung des Fluids zwischen dem vierten aktiven Armmodul 25.4 (vgl. Figur 1) (zugehörig zur zweiten Baugruppe) und dem fünften aktiven Armmodul 25.5 (vgl. Figur 1) (zugehörig zur dritten Baugruppe) sichergestellt. Ferner wird neben einer mechanischen Verbindung und Übertragung von Kräften auch eine Übertragung des optischen Signals zur Datenverbindung des fünften aktiven Armmoduls 25.5 mit dem vierten aktiven Armmodul 25.4 sowie eine elektrische Verbindung zur elektrischen Leistungsübertragung über das zweite passive Armmodul 30.2 (vgl. Figur 1) sichergestellt.

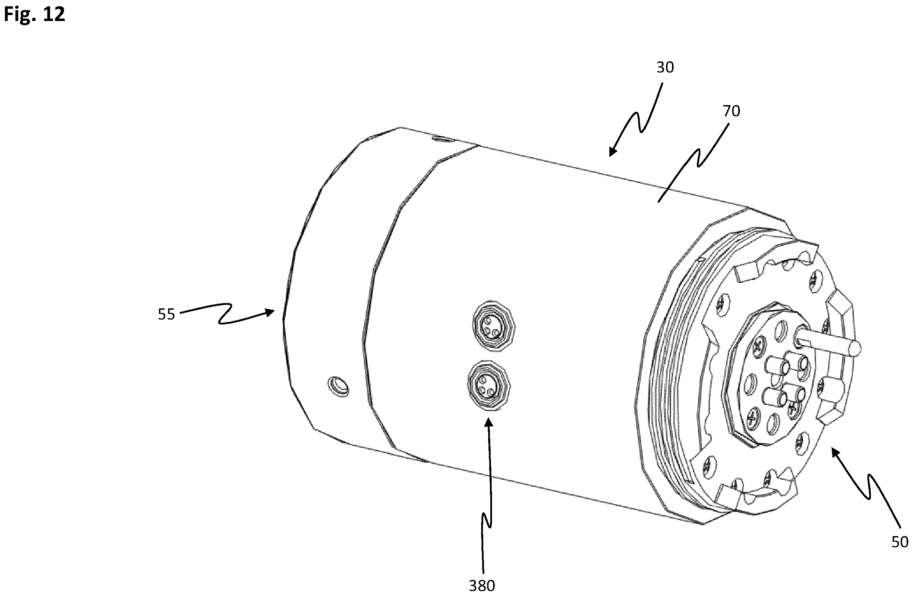

Figur 12 zeigt eine perspektivische Darstellung eines passiven Armmoduls 30 gemäß einer siebten Ausführungsform.

Das passive Armmodul 30 ist im Wesentlichen identisch zu dem in Figur 9 erläuterten passiven Armmodul 30 ausgebildet. Im Folgenden wird nur auf die Unterschiede des in Figur 12 passiven Armmoduls 30 gegenüber der ersten Ausführungsform des in Figur 9 gezeigten passiven Armmoduls eingegangen.

Zusätzlich ist außenseitig am zweiten Gehäuse 70 beispielhaft eine dritte Leistungskontakteinrichtung 380 angeordnet. Die dritte Leistungskontakteinrichtung 380 ist elektrisch mit der ersten Leistungskontakteinrichtung und/oder der zweiten Leistungskontakteinrichtung verbunden. Die dritte Leistungskontakteinrichtung 380 kann beispielsweise dazu dienen, zusätzliche elektrische Energie in den Roboterarm einzuspeisen. Auch kann für weitere Peripheriegeräte beispielsweise elektrische Energie/Leistung über die dritte Leistungskontakteinrichtung 380 zur Leistungsversorgung des Peripheriegeräts bereitgestellt werden.

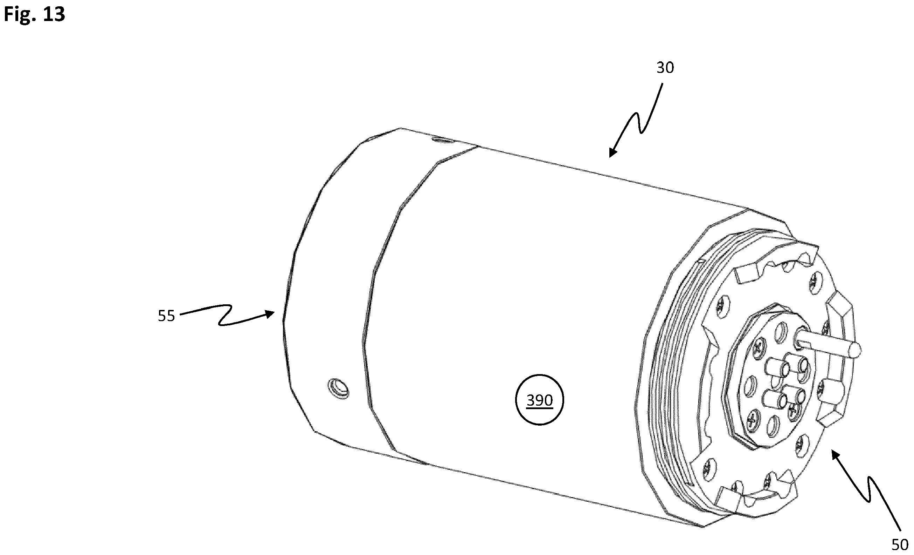

Figur 13 zeigt eine perspektivische Darstellung eines passiven Armmoduls 30 gemäß einer achten Ausführungsform.

Das in Figur 13 gezeigte passive Armmodul 30 ist im Wesentlichen identisch zu der in Figur 9 gezeigten ersten Ausführungsform des passiven Armmoduls ausgebildet. Im Folgenden wird nur auf die Unterschiede des in Figur 13 gezeigten passiven Armmoduls 30 gegenüber der ersten Ausführungsform des in Figur 9 gezeigten passiven Armmoduls eingegangen.

Außenseitig ist am zweiten Gehäuse 70 eine dritte Kontakteinrichtung 390 angeordnet. Die dritte Kontakteinrichtung 390 ist datentechnisch mit dem Umsetzer verbunden. Dadurch kann über die dritte Kontakteinrichtung 390 ein zusätzliches weiteres optische Signal oder ein elektrisches Datensignal seitlich aus dem passiven Armmodul 30 ausgespeist oder über die dritte Kontakteinrichtung 390 ein optisches Signal oder ein elektrisches Datensignal mit einer Dateninformation in das passive Armmodul 30 eingespeist werden und beispielsweise das Datennetzwerk mit dem Roboterarm verbunden werden.

Dadurch kann beispielsweise ein als Kamera ausgebildetes Peripheriegerät datentechnisch über das in Figur 13 gezeigte passive Armmodul 30 an den Industrieroboter angeschlossen werden. Besonders von Vorteil ist hierbei, wenn das in Figur 13 gezeigte passive Armmodul 30 besonders nahe am Montageort der Kamera am Industrieroboter angeordnet ist, sodass ein außerhalb des Industrieroboters geführter dritter Lichtwellenleiter, der an der dritten Kontakteinrichtung 390 angeschlossen ist, besonders kurz gehalten werden kann.

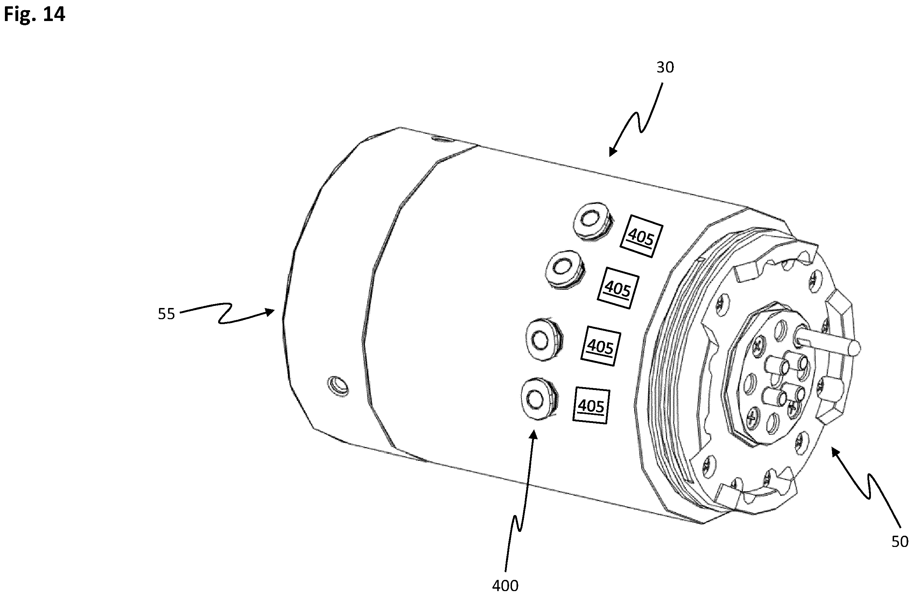

Figur 14 zeigt eine perspektivische Darstellung eines passiven Armmoduls 30 gemäß einer neunten Ausführungsform.

Das passive Armmodul 30 ist im Wesentlichen identisch zu dem in Figur 9 erläuterten passiven Armmodul 30 ausgebildet. Im Folgenden wird nur auf die Unterschiede des in Figur 14 gezeigten passiven Armmoduls 30 gegenüber der ersten Ausführungsform des in Figur 9 gezeigten passiven Armmoduls eingegangen.

Zusätzlich weist das in Figur 14 gezeigte passive Armmodul 30 wenigstens eine dritte Fluidkontakteinrichtung 400 auf. In Figur 14 weist das passive Armmodul 30 beispielhaft mehrere dritte Fluidkontakteinrichtungen 400 auf. Die dritte Fluidkontakteinrichtung 400 ist umfangsseitig am zweiten Gehäuse 70 angeordnet. Zusätzlich kann das in Figur 14 gezeigte passive Armmodul 30 für jede dritte Fluidkontakteinrichtung 400 ein Magnetventil 405 aufweisen, wobei das Magnetventil 405 mit elektrischer Energie über die dritte und/oder vierte Anschlussseite 50, 55 versorgt werden kann.

Fluidisch ist das Magnetventil 405 zwischen der ersten und/oder zweiten Fluidkontakteinrichtung und der dritten Fluidkontakteinrichtung 400 angeordnet. Das Magnetventil 405 weist wenigstens eine Offenstellung und eine Schließstellung auf, wobei in der Schließstellung die dritte Fluidkontakteinrichtung 400 fluidisch von der ersten und/oder zweiten Fluidkontakteinrichtung der dritten oder vierten Anschlussseite 50, 55 getrennt ist.

In der Offenstellung ist die dritte Fluidkontakteinrichtung 400 fluidisch mit der ersten und/oder zweiten Fluidkontakteinrichtung der dritten und/oder vierten Anschlussseite 50, 55 verbunden. Das Magnetventil 405 kann ferner datentechnisch mit der ersten und/oder zweiten Kontakteinrichtung der dritten und/oder vierten Anschlussseite 50,55 verbunden sein, sodass das Magnetventil 405 mittels des optischen Signals angesteuert werden kann.

Die dritte Fluidkontakteinrichtung 400 kann fluidisch mittels einer in Figur 14 nicht dargestellten Leitung mit dem Endeffektor verbunden sein und/oder das Fluid in das passive Armmodul 30 eingespeist oder ausgespeist werden.

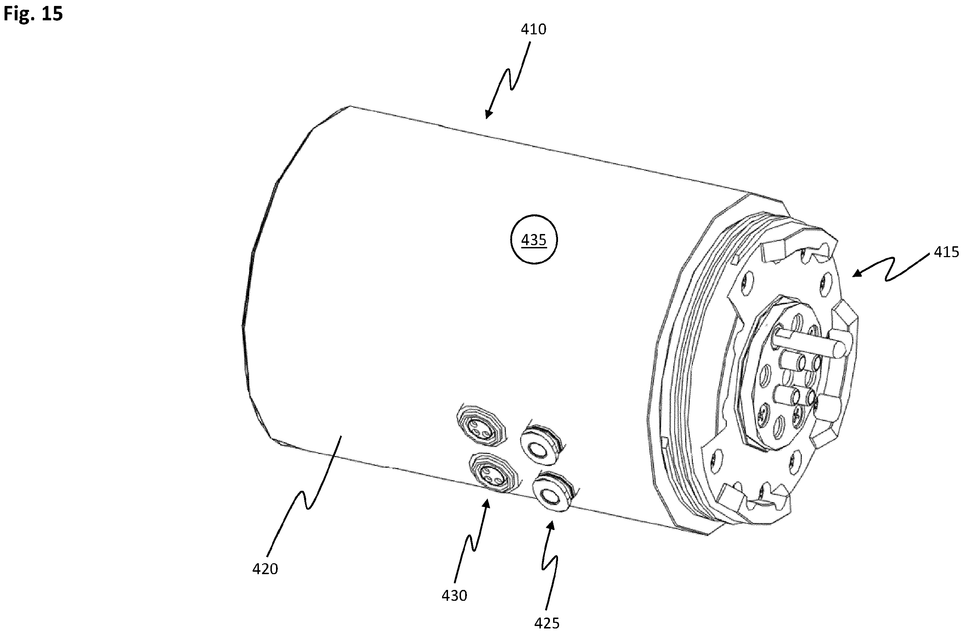

Figur 15 zeigt eine perspektivische Darstellung eines Endmoduls 410 gemäß einer ersten Ausführungsform.

Zwar ist das in Figur 15 gezeigte Endmodul 410 nicht bei dem in Figur 1 gezeigten Industrieroboter 10 verbaut, jedoch ist der in Figur 1 gezeigte Industrieroboter 10 nur eine beispielhafte Ausgestaltung. So kann bei einer anderen Ausgestaltung des Industrieroboters 10 das in Figur 15 gezeigte Endmodul 410 verbaut sein.

Das Endmodul 410 ist im Wesentlichen identisch zu der ersten Ausführungsform des in Figur 9 erläuterten passiven Armmoduls 30 ausgebildet. Im Folgenden wird nur auf die Unterschiede des in Figur 15 gezeigten Endmoduls 410 gegenüber der ersten Ausführungsform des in Figur 9 gezeigten passiven Armmoduls eingegangen.

Das Endmodul 410 weist anstatt der dritten und vierten Anschlussseite eine Endanschlussseite 415 auf. Die Endanschlussseite 415 kann komplementär, vorzugsweise korrespondierend, zur ersten und/oder zweiten und/oder dritten und/oder vierten Anschlussseite ausgebildet sein. Die Endanschlussseite 415 stellt wie die Anschlussseite(n) sowohl eine mechanische als auch eine elektrische, datentechnische, vorzugsweise optische, und fluidische Verbindung zu dem an dem Endmodul 410 anschließbaren aktiven Armmodul oder passiven Armmodul bereit.

Die Endanschlussseite 415 ist senkrecht zu der Längsachse angeordnet. Das Endmodul 410 weist ferner ein Endgehäuse 420 auf, wobei das Endgehäuse 420 beispielhaft becherförmig ausgebildet ist. Die Endanschlussseite 415 ist drehfest mit dem Endgehäuse 420 verbunden. Durch die korrespondierende Ausgestaltung der Endanschlussseite 415 zu wenigstens der ersten und/oder der zweiten und/oder der dritten und/oder der vierten Anschlussseite kann die Endanschlussseite 415 mit dem passiven Armmodul oder dem aktiven Armmodul verbunden werden.

Stirnseitig gegenüberliegend zu der Endanschlussseite 415 oder wie in Figur 15 gezeigt umfangsseitig kann das Endmodul 410 eine vierte Fluidkontakteinrichtung 425, eine im Allgemeinen auch als weitere Leistungskontakteinrichtung 430 bezeichnete vierte Leistungskontakteinrichtung 430 und eine vierte Kontakteinrichtung 435 aufweisen. Beispielsweise kann die Endanschlussseite 415 identisch zur ersten Anschlussseite ausgebildet sein. Die vierte Fluidkontakteinrichtung 425 ist fluidisch mit der ersten Fluidkontakteinrichtung der Endanschlussseite 415 verbunden, beispielsweise mittels einer fluidischen Leitung, insbesondere eines Schlauches. Der Schlauch ist hierbei in einem Endgehäuseinnenraum des Endgehäuses 420 angeordnet. Ebenso kann im Endgehäuseinnenraum ein vierter Lichtwellenleiter zur optischen Verbindung der ersten Kontakteinrichtung mit der vierten Kontakteinrichtung 435 angeordnet sein. An der vierten Kontakteinrichtung 435 wird ein optisches Datensignal bereitgestellt. Dadurch kann ein als Steuersignal ausgebildetes Datensignal über das Endmodul 410 in den Roboterarm 15 eingespeist werden. Auch kann die vierte Kontakteinrichtung 435 zusätzlich oder alternativ als Ausgang ausbildet sein. Auch kann der weitere Umsetzer als Analog-Digitalwandler ausgebildet sein.

Zusätzlich kann das Endmodul 410 einen weiteren nicht dargestellten Umsetzer aufweisen, wobei der weitere Umsetzer datentechnisch elektrisch oder optisch mit der vierten Kontakteinrichtung 435 verbunden und ausgebildet ist, ein über die vierte Kontakteinrichtung 435 eingespeistes (optisches oder elektrisches) Datensignal zur Bereitstellung an der Endanschlussseite 415 umsetzen.

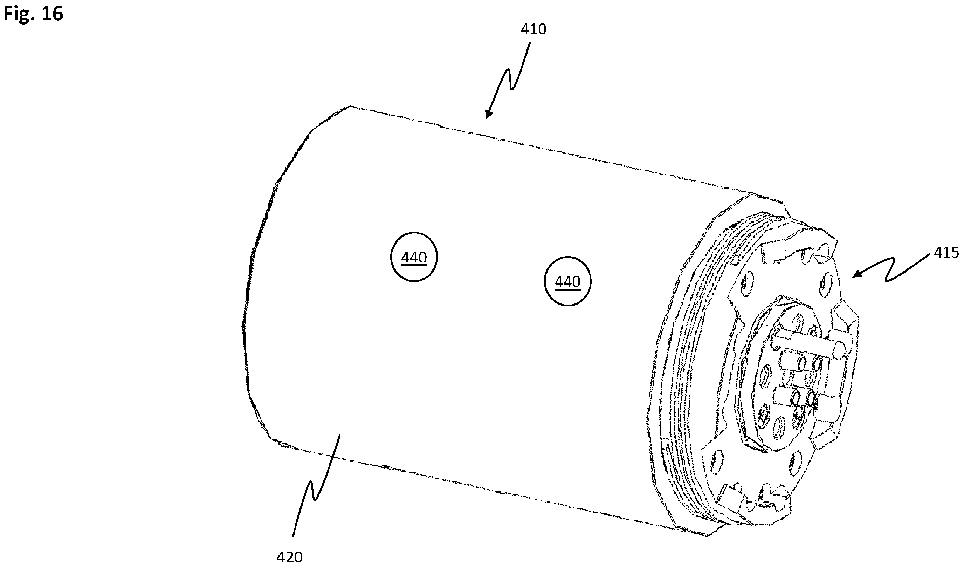

Zur Verbindung der Endanschlussseite 415 mit der vierten Leistungskontakteinrichtung 430 kann in dem Endgehäuseinnenraum auch eine elektrische Leitung angeordnet sein. Figur 16 zeigt eine perspektivische Darstellung eines Endmoduls 410 gemäß einer zweiten Ausführungsform.

Das Endmodul 410 ist im Wesentlichen identisch zu dem in Figur 15 gezeigten Endmodul 410, wobei jedoch auf die in Figur 15 gezeigte vierte Fluidkontakteinrichtung, die vierte Kontakteinrichtung und die vierte optische Kontakteinrichtung verzichtet wird. Selbstverständlich können die vierte Fluidkontakteinrichtung und/oder die vierte Kontakteinrichtung und/oder die vierte optische Kontakteinrichtung am Endgehäuse 420 befestigt sein.

Zusätzlich weist das Endmodul 410 eine Eingabeeinheit 440 auf. Die Eingabeeinheit 440 kann einen oder mehrere Taster aufweisen. Die Eingabeeinheit 440 ist datentechnisch mit der ersten optischen Kontakteinrichtung an der Endanschlussseite 415 verbunden. Die Eingabeeinheit 440 stellt auf Grundlage der Eingabe eine korrelierende Information mittels des optischen Signals bereit, das an die Endanschlussseite 415 übertragen wird. Dadurch kann das optische Signal über die Endanschlussseite 415 hinweg an die weiteren aktiven und/oder passiven Armmodule weitergeleitet werden und zur Steuerung des Roboterarms dienen.

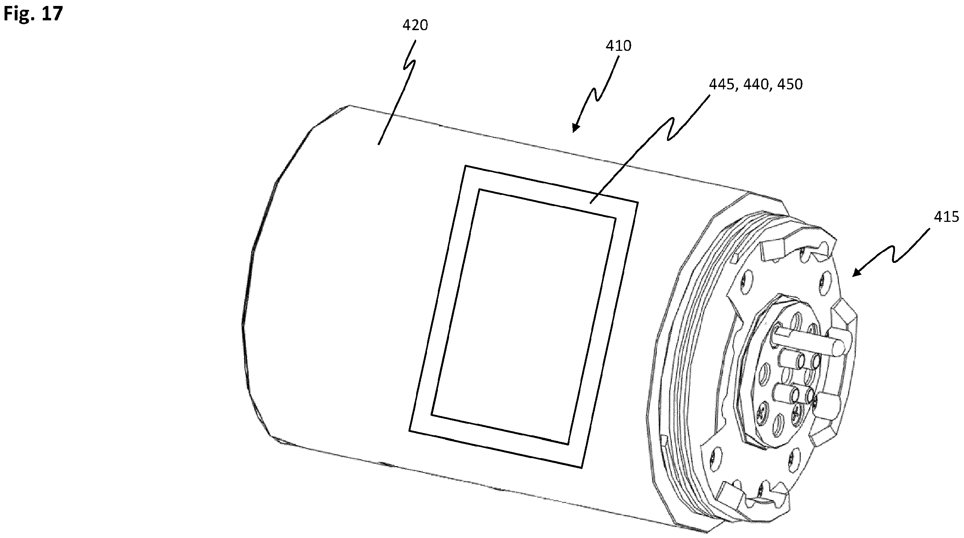

Figur 17 zeigt eine perspektivische Darstellung auf ein Endmodul 410 gemäß einer dritten Ausführungsform.

Das Endmodul 410 ist im Wesentlichen identisch zu dem in Figur 16 erläuterten Endmodul 410 ausgebildet, wobei das Endmodul 410 zusätzlich eine Ausgabeeinheit 445 aufweist, die in der Ausführungsform als Bildschirm ausgebildet ist. Die Eingabeeinheit und die Ausgabeeinheit 440, 445 können auch kombiniert zu einem berührungssensitiven Bildschirm 450 zusammengefasst sein (wie in Figur 17 dargestellt).

Zusätzlich kann zwischen der Endanschlussseite 415 und dem berührungssensitiven Bildschirm 450 im Endgehäuse 420 das Steuergerät, insbesondere ein als Industrie-PC ausgebildetes Steuergerät, integriert sein.

Die Ein- und Ausgabeeinheit 440, 445, insbesondere der berührungssensitive Bildschirm 450, sind datentechnisch und leistungstechnisch mit der Endanschlussseite 415 verbunden und ausgebildet, sowohl das optische Signal zu erfassen als auch auszuwerten. Die erste Fluidkontakteinrichtung der Endanschlussseite 415 kann deaktiviert sein.

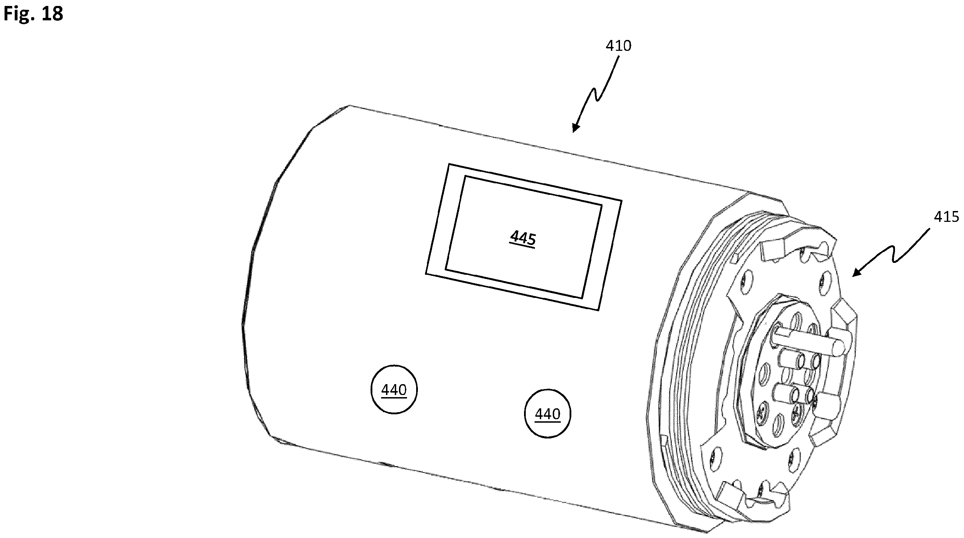

Figur 18 zeigt ein Endmodul 410 gemäß einer vierten Ausführungsform.

Das Endmodul 410 ist im Wesentlichen identisch zu dem in Figur 17 gezeigten Endmodul 410 ausgebildet. Im Folgenden wird nur auf die Unterschiede des in Figur 18 gezeigten Endmoduls 410 gegenüber dem in Figur 17 gezeigten Endmodul eingegangen. Die Ausgabeeinheit 445 ist als Display ausgebildet und die Eingabeeinheit 440 als Taster ausgebildet und räumlich nebeneinander angeordnet.

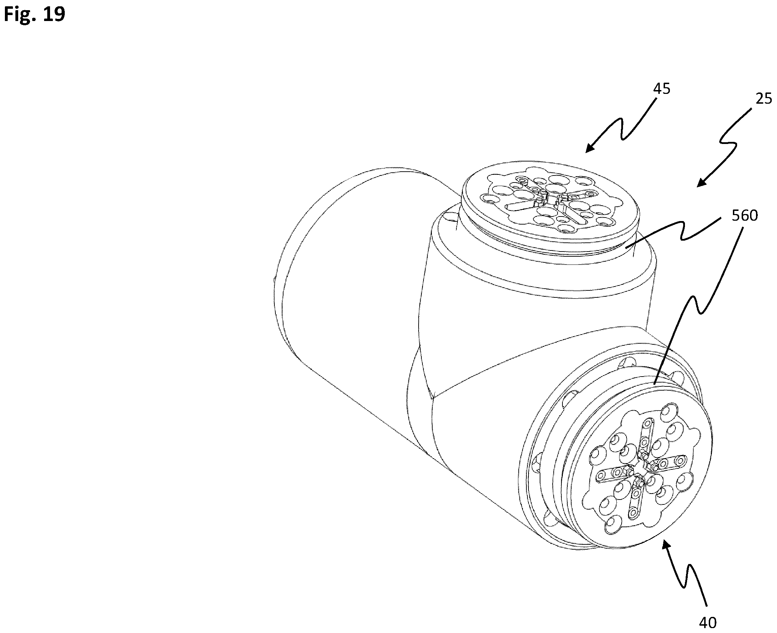

Figur 19 zeigt eine perspektivische Darstellung eines aktiven Armmoduls 25 gemäß einer dritten Ausführungsform.

Das aktive Armmodul 25 ist im Wesentlichen identisch zu dem in den Figuren 1 bis 5 erläuterten aktiven Armmodul ausgebildet. Im Folgenden wird nur auf die Unterschiede des in Figur 19 gezeigten aktiven Armmoduls 25 gegenüber dem in den Figuren 1 bis 6 gezeigten aktiven Armmodul eingegangen.

Die erste Anschlussseite 40 und die zweite Anschlussseite 45 des aktiven Armmoduls 25 gemäß der dritten Ausführungsform sind identisch ausgebildet. Ferner wird an der ersten Anschlussseite 40 auf das Außengewinde und an der zweiten Anschlussseite 45 auf das Innengewinde verzichtet. Statt des Gewindes ist an der äußeren zweiten Umfangsseite 105 der ersten Anschlussseite 40 und der zweiten Anschlussseite 45 jeweils eine umlaufende Nut 560 angeordnet. Die Nut 560 kann V-förmig ausgebildet sein.

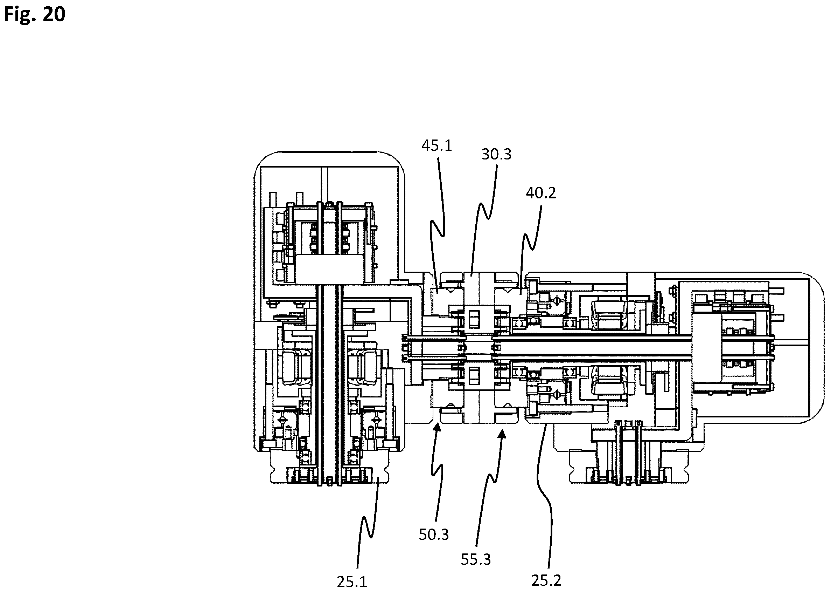

Figur 20 zeigt einen Längsschnitt durch das erste aktive Armmodul 25.1 und das zweite aktive Armmodul 25.2 jeweils gemäß der dritten Ausführungsform in montiertem Zustand.

Zur Verbindung des ersten aktiven Armmoduls 25.1 mit dem zweiten aktiven Armmodul 25.2 ist ein drittes passives Armmodul 30.3 zwischen dem ersten aktiven Armmodul 25.1 und dem zweiten aktiven Armmodul 25.2 angeordnet, wobei das dritte passive Armmodul 30.3 eine identisch zueinander ausgebildete dritte und vierte Anschlussseite 50.3 und 55.3 aufweist. Die dritte Anschlussseite 50.3 und vierte Anschlussseite 55.3 des dritten passiven Armmoduls 30.3 sind korrespondierend zu der ersten Anschlussseite 40.2 des zweiten aktiven Armmoduls 25.2 und der zweiten Anschlussseite 45.1 des ersten aktiven Armmoduls 25.1 ausgebildet. Die dritte Anschlussseite 50.3 des dritten passiven Armmoduls 30.3 ist mit der zweiten Anschlussseite 45.1 des ersten aktiven Armmoduls 25.1 und die vierte Anschlussseite 55.3 des dritten passiven Armmoduls 30.3 ist mit der ersten Anschlussseite 40.2 des zweiten aktiven Armmoduls 25.2 verbunden. Das dritte passive Armmodul 30.3 verbindet fluidisch, mechanisch, optisch und elektrisch das erste aktive Armmodul 25.1 mit dem zweiten aktiven Armmodul 25.2. Dabei greift außenseitig das dritte passive Armmodul 30.3 in die Nut an der ersten bzw. zweiten Anschlussseite 40.2, 45.1 der jeweiligen aktiven Armmodule 25.1, 25.2 ein.

Auch diese Ausgestaltung ist geeignet, um einen Roboterarm modular aufzubauen und kostengünstig sowie schnell zu montieren und/oder demontieren.

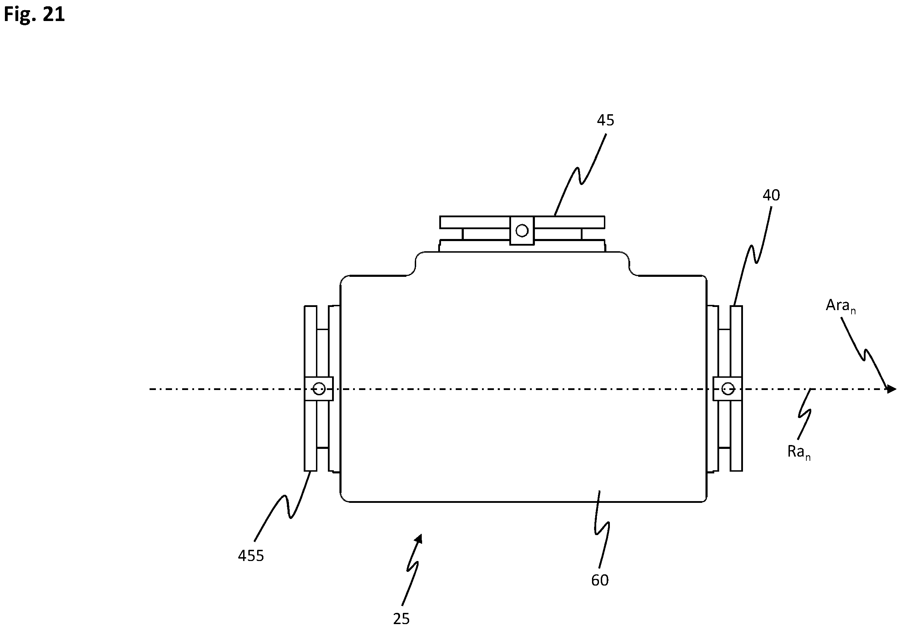

Figur 21 zeigt eine Seitenansicht auf ein aktives Armmodul 25 gemäß einer vierten Ausführungsform.

Das aktive Armmodul 25, das in Figur 21 dargestellt ist, ist im Wesentlichen identisch zu dem in den Figuren 1 bis 7 erläuterten aktiven Armmodul ausgebildet. Im Folgenden wird ausschließlich auf die Unterschiede des in Figur 21 gezeigten aktiven Armmoduls 25 gegenüber dem in den Figuren 1 bis 7 gezeigten aktiven Armmodul eingegangen.

Das aktive Armmodul 25, das in Figur 21 dargestellt ist, weist neben der ersten Anschlussseite 40 und der zweiten Anschlussseite 45 eine fünfte Anschlussseite 455 auf, wobei die fünfte Anschlussseite 455 identisch zu der zweiten Anschlussseite 45 ausgebildet ist. In Axialrichtung bezogen auf die Rotationsachse Raₙ ist die fünfte Anschlussseite 455 axial gegenüberliegend zur ersten Anschlussseite 40 angeordnet. Dadurch weist in der Seitenansicht das aktive Armmodul 25 eine im Wesentlichen T-förmige Ausgestaltung auf. Die fünfte Anschlussseite 445 ist drehfest mit dem ersten Gehäuse 60 verbunden.

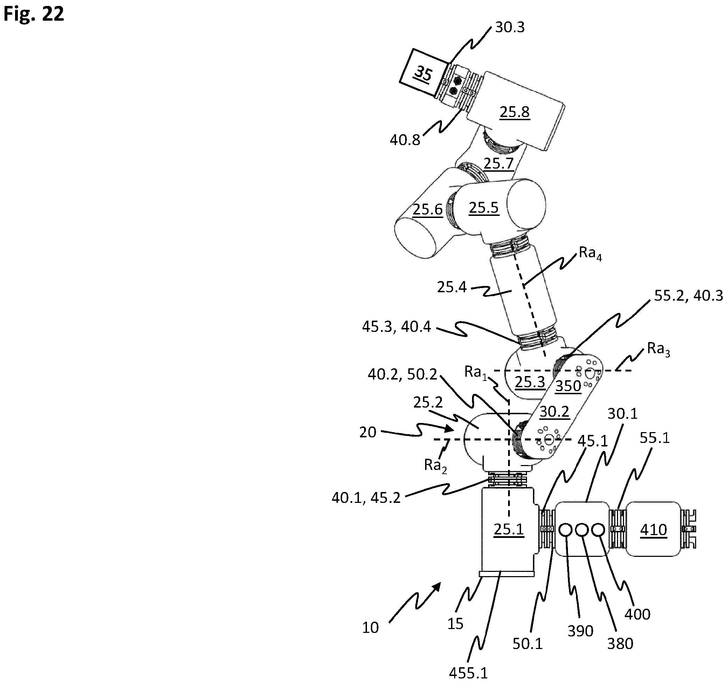

Figur 22 zeigt einen Industrieroboter 10 gemäß einer zweiten Ausführungsform.

Der Industrieroboter 10 ist im Wesentlichen identisch zu dem in Figur 1 gezeigten Industrieroboter 10 ausgebildet, wobei die in den Figuren 2 bis 21 erläuterten Armmodule 25, 30 und Endmodule 410 verbaut sind.

Dabei ist das erste aktive Armmodul 25.1 mittels der fünften Anschlussseite 455.1 mechanisch mit der Roboterbasis 15 verbunden. An der zweiten Anschlussseite 45.1 ist das erste aktive Armmodul 25.1 mit einer dritten Anschlussseite 50.1 eines ersten passiven Armmoduls 30.1 verbunden. Seitlich sind am ersten passiven Armmodul 30.1 die dritte Kontakteinrichtung 390, die dritte Leistungskontakteinrichtung 380 und die dritte Fluidkontakteinrichtung 400 angeordnet. Die dritte Leistungskontakteinrichtung 380 dient zur Verbindung des Industrieroboters 10 mit der elektrischen Energiequelle. Die dritte Kontakteinrichtung 390 dient zur Anbindung an ein Feldbussystem oder das Datennetzwerk zur Steuerung des Industrieroboters 10. Über die dritte Fluidkontakteinrichtung 400 kann das Fluid in den Industrieroboter 10 eingespeist werden.

Auf einer zur dritten Anschlussseite 50.1 des ersten passiven Armmoduls 30.1 abgewandten Seite ist die vierte Anschlussseite 55.1 des ersten passiven Armmoduls 30.1 mit einem Endmodul 410, wie es beispielsweise in Figur 17 und 18 erläutert ist, verbunden.

Auf der zur Roboterbasis 15 abgewandten Seite ist die erste Anschlussseite 40.1 des ersten aktiven Armmoduls 25.1 mit der zweiten Anschlussseite 45.2 des zweiten aktiven Armmoduls 25.2 verbunden. Im Betrieb des Industrieroboters 10 kann somit das zweite aktive Armmodul 25.2 um die erste Rotationsachse Rai, die senkrecht zur Roboterbasis 15 verläuft, durch das erste aktive Armmodul 25.1 gedreht werden. Die erste Anschlussseite 40.2 des zweiten aktiven Armmoduls 25.2 ist mit der dritten Anschlussseite 50.2 des zweiten passiven Armmoduls 30.2 verbunden. Gegenüberliegend ist die vierte Anschlussseite 55.2 des zweiten passiven Armmoduls 30.2 mit der ersten Anschlussseite 40.3 des dritten aktiven Armmoduls 25.3 verbunden.

Das zweite passive Armmodul 30.2 ist gegenüber zu den Figuren 8 bis 14 dahingehend abgewandelt, dass die dritte und vierte Anschlussseite 50.2, 55.2 seitlich und nicht stirnseitig angrenzend jeweils an das Ende des zweiten Gehäuses 70 angeordnet ist.

Die zweite Anschlussseite 45.3 des dritten aktiven Armmoduls 25.3 ist mit der ersten Anschlussseite 40.4 des vierten aktiven Armmoduls 25.4 verbunden. Das zweite und dritte aktive Armmodul 25.2, 25.3 sind als J-Modul ausgebildet. Das vierte aktive Armmodul 25.4 ist als I-Modul ausgebildet (vgl. Figur 8) und erstreckt sich im Wesentlichen entlang einer vierten Rotationsachse Ra₄ des vierten aktiven Armmoduls 25. Anschließend an das vierte aktive Armmodul 25.4 sind ein fünftes bis achtes aktives Armmodul 25.5. 25.6, 25.7 und 25.8 miteinander hintereinander verbunden, wobei sich an die erste Anschlussseite 40.8 des achten aktiven Armmoduls 25.8 ein drittes passives Armmodul 30.3 anschließt, an dem auf der zum achten aktiven Armmodul 25.8 abgewandten Seite der Endeffektor angeordnet ist. Das dritte passive Armmodul 30.3 kann beispielsweise wie in Figur 12 erläutert ausgebildet sein, wobei es derart ausgebildet ist, dass zusätzlich für ein Peripheriegerät ein Datenanschluss, beispielsweise in Form einer weiteren Kontakteinrichtung zur Bereitstellung des optischen Signals, über das dritte passive Armmodul 30.3 zur Verfügung gestellt wird.

Durch diese Ausgestaltung kann ein 8-Achs-Industrieroboter 10 besonders einfach und kostengünstig durch die Kombination verschiedener Module aus dem Modulbaukasten zusammengestellt werden. Auch kann durch die Kombination der verschiedenen in den Figuren 2 bis 22 erläuterten Module sowohl die Montage als auch die Steuerung besonders einfach und kostengünstig durchgeführt werden.

### Bezugszeichenliste

- 10: Industrieroboter
- 15: Roboterbasis
- 20: Roboterarm
- 25: aktives Armmodul
25.1 erstes aktives Armmodul
25.2 zweites aktives Armmodul
25.3 drittes aktives Armmodul
25.4 viertes aktives Armmodul
25.5 fünftes aktives Armmodul
25.6 sechstes aktives Armmodul
25.7 siebtes aktives Armmodul
25.8 achtes aktives Armmodul

- 30: passives Armmodul
30.1 erstes passives Armmodul
30.2 zweites passives Armmodul
30.3 drittes passives Armmodul

- 35: Endeffektor
- 40: erste Anschlussseite
40.1 erste Anschlussseite des ersten aktiven Armmoduls
40.2 erste Anschlussseite des zweiten aktiven Armmoduls
40.3 erste Anschlussseite des dritten aktiven Armmoduls
40.4 erste Anschlussseite des vierten aktiven Armmoduls
40.5 erste Anschlussseite des fünften aktiven Armmoduls
40.6 erste Anschlussseite des sechsten aktiven Armmoduls
40.8 erste Anschlussseite des achten aktiven Armmoduls

- 45: zweite Anschlussseite
45.1 zweite Anschlussseite des ersten aktiven Armmoduls
45.2 zweite Anschlussseite des zweiten aktiven Armmoduls
45.3 zweite Anschlussseite des dritten aktiven Armmoduls
45.4 zweite Anschlussseite des vierten aktiven Armmoduls
45.5 zweite Anschlussseite des fünften aktiven Armmoduls
45.6 zweite Anschlussseite des sechsten aktiven Armmoduls

- 50: dritte Anschlussseite
50.1 dritte Anschlussseite des ersten passiven Armmoduls
50.2 dritte Anschlussseite des zweiten passiven Armmoduls
50.3 dritte Anschlussseite des dritten passiven Armmoduls

- 51: Fluid
- 52: elektrische Energiequelle
- 53: Datennetzwerk
- 55: vierte Anschlussseite
55.1 vierte Anschlussseite des ersten passiven Armmoduls
55.2 vierte Anschlussseite des zweiten passiven Armmoduls
55.3 vierte Anschlussseite des dritten passiven Armmoduls

- 60: erstes Gehäuse
- 65: erster Gehäuseinnenraum
- 70: zweites Gehäuse
- 75: zweiter Gehäuseinnenraum
- 80: erster Gehäuseabschnitt
- 85: zweiter Gehäuseabschnitt
- 90: Seitenfläche
- 95: Anschlussplatte
- 100: erste Stirnseite
- 105: zweite Umfangsseite
- 110: Außengewinde
- 115: erste Stirnverzahnung
- 120: Anschlussabschnitt
- 125: zweite Stirnseite
- 130: erste Fluidkontakteinrichtung
- 135: erste Leistungskontakteinrichtung
- 140: erstes Leistungskontaktelement
- 145: erste Kontakteinrichtung
- 150: Stift
- 155: Anschlussachse
- 160: Befestigungsring
- 165: Aufnahme
- 170: Innengewinde
- 171: dritte Stirnseite
- 175: zweite Stirnverzahnung
- 180: Vertiefung
- 185: zweite Fluidkontakteinrichtung
- 190: Zentrieraufnahme
- 195: zweite Leistungskontakteinrichtung
- 200: zweites Kontaktelement
- 205: zweite Kontakteinrichtung
- 206: Grund
- 210: Antriebseinrichtung
- 215: Antriebsmotor
- 220: Lageranordnung
- 225: Getriebe
- 230: erste Eingangsseite
- 235: zweite Eingangsseite
- 240: Ausgangsseite
- 245: Rotor
- 250: Stator
- 260: erste Hohlwelle
- 265: erste Übergabeeinrichtung
- 270: erste Sensoreinrichtung
- 275: zweite Sensoreinrichtung
- 280: erste Steuereinrichtung
- 281: Umsetzer
- 285: zweite Hohlwelle
- 286: erster Sensor
- 290: erstes Signalelement
- 291: erste Verbindung
- 294: zweiter Sensor
- 295: zweites Signalelement
- 296: zweite Verbindung
- 300: Abnehmer
- 305: Übergaberoter
- 310: dritte Verbindung
- 315: erster Lichtwellenleiter
- 320: (optische) zweite Übergabeeinrichtung
- 325: zweiter Lichtwellenleiter
- 330: Schlauchteil
- 70: zweites Gehäuse
- 355: zweiter Gehäuseinnenraum
- 360: Steuergerät
- 365: zweite Steuereinrichtung
- 370: Datenspeicher
- 375: Schnittstelle
- 380: dritte Leistungskontakteinrichtung
- 385: drittes Kontaktelement
- 390: dritte Kontakteinrichtung
- 400: dritte Fluidkontakteinrichtung
- 405: Magnetventil
- 410: Endmodul
- 415: Endanschlussseite
- 420: Endgehäuse
- 425: vierte Fluidkontakteinrichtung
- 430: vierte Leistungskontakteinrichtung
- 435: vierte Kontakteinrichtung
- 440: Eingabeeinheit
- 445: Ausgabeeinheit
- 450: berührungssensitiver Bildschirm
- 455: fünfte Anschlussseite
- 455.1: fünfte Anschlussseite des ersten Antriebsmoduls
- 460: Nut

## Patentansprüche

1. Aktives Armmodul (25) für einen Roboterarm (20) eines modularen Industrieroboters (10),
- aufweisend ein erstes Gehäuse (60), eine erste Anschlussseite (40), eine zu der ersten Anschlussseite (40) versetzt angeordnete zweite Anschlussseite (45) und eine Antriebseinrichtung (210),
- wobei die erste Anschlussseite (40) rotierbar um eine Rotationsachse (Raₙ) gegenüber dem ersten Gehäuse (60) gelagert und mit der Antriebseinrichtung (210) drehmomentschlüssig verbunden ist,
wobei die zweite Anschlussseite (45) drehfest mit dem ersten Gehäuse (60) verbunden und bezogen auf eine Anschlussachse (155) orientiert ist, die senkrecht zu der Rotationsachse (Raₙ) ausgerichtet ist und in einer Rotationsebene der Rotationsachse (Raₙ) verläuft,
- wobei die Antriebseinrichtung (210) in dem ersten Gehäuse (60) angeordnet und ausgebildet ist, die erste Anschlussseite (40) relativ gegenüber dem ersten Gehäuse (60) steuerbar um die Rotationsachse (Raₙ) zu verdrehen,
- wobei an der ersten und/oder der zweiten Anschlussseite (40, 45) ein weiteres Modul (25, 30, 410) des Roboterarms (20) anschließbar ist,
- wobei im ersten Gehäuse (60) Mittel zur fluidischen, elektrischen und datentechnischen Verbindung der ersten Anschlussseite (40) mit der zweiten Anschlussseite (45) angeordnet sind, die die erste Anschlussseite (40) optisch und/oder elektrisch und/oder leistungselektrisch und/oder fluidisch mit der zweiten Anschlussseite (45) verbinden, so dass über die erste Anschlussseite (40) und/oder über die zweite Anschlussseite (45) hinweg ein optisches Signal und/oder ein elektrisches Signal und/oder eine elektrische Leistung und/oder ein Fluid (51) mit dem weiteren Modul (25, 30, 410) austauschbar ist,
- wobei in axialer Richtung angrenzend an die erste Anschlussseite (40) die Antriebseinrichtung (210) angeordnet ist, wobei die Antriebseinrichtung (210) einen Stator (250) und einen Rotor (245) umfasst, wobei der Rotor (245) drehmomentschlüssig mit der ersten Anschlussseite (40) verbunden und rotierbar um die Rotationsachse (Raₙ) gelagert ist, wobei der Stator (250) umfangsseitig drehfest mit dem ersten Gehäuse (60) verbunden ist,
- wobei die Antriebseinrichtung (210) ein Getriebe (225) aufweist, das axial bezogen auf die Rotationsachse (Raₙ) zwischen dem Rotor (245) und der ersten Anschlussseite (40) angeordnet ist und wenigstens eine erste Eingangsseite (230) und eine Ausgangsseite (240) aufweist, wobei die erste Eingangsseite (230) mit dem Rotor (245) und die Ausgangsseite (240) mit der ersten Anschlussseite (40) jeweils drehmomentschlüssig verbunden sind, wobei das Getriebe (225) ausgebildet ist, eine Antriebsdrehzahl von der ersten Eingangsseite (230) zu einer Abtriebsdrehzahl an der Ausgangsseite (240) zu reduzieren,
- wobei die Antriebseinrichtung (210) eine erste Hohlwelle (260), eine zweite Hohlwelle (285) und eine Lageranordnung (220) aufweist, wobei die erste Hohlwelle (260) und die zweite Hohlwelle (285) rotierbar um die Rotationsachse (Raₙ) durch die Lageranordnung (220) gelagert sind, wobei die erste Hohlwelle (260) die zweite Hohlwelle (285) aufnimmt und die Lageranordnung (220) die erste Hohlwelle (260) gegenüber der zweiten Hohlwelle (285) rotierbar lagert, wobei die erste Hohlwelle (260) den Rotor (245) drehfest mit der ersten Eingangsseite (230) des Getriebes (225) verbindet, wobei die zweite Hohlwelle (285) die Ausgangsseite (240) des Getriebes (225) mit der ersten Anschlussseite (40) verbindet,
- wobei in axialer Richtung auf der der ersten Anschlussseite (40) abgewandten Seite eine Übergabeeinrichtung (265) angeordnet ist, die einen drehfest mit dem ersten Gehäuse (60) verbundenen Abnehmer (300) und einen rotierbar um die Rotationsachse (Raₙ) gelagerten Übergaberotor (305) aufweist, wobei der Abnehmer (300) und der Übergaberotor (305) elektrisch und fluidisch miteinander gekoppelt sind,
- wobei die zweite Hohlwelle (285) axial länger als die erste Hohlwelle (260) ausgebildet ist und die Übergabeeinrichtung (265) durchgreift, wobei der Übergaberotor (305) durch die zweite Hohlwelle (285) drehfest mit der ersten Anschlussseite (40) verbunden ist, wobei der Übergaberotor (305) durch die zweite Hohlwelle (285) elektrisch mit einer ersten Leistungskontakteinrichtung (135) der ersten Anschlussseite (40) und fluidisch über einen Fluidkanal mit einer erste Fluidkontakteinrichtung (130) der ersten Anschlussseite (40) verbunden ist, wobei der Abnehmer (300) elektrisch mit einer zweiten Leistungskontakteinrichtung (195) der zweiten Anschlussseite (45) und fluidisch mit einer zweiten Fluidkontakteinrichtung (185) der zweiten Anschlussseite (45) verbunden ist

2. Aktives Armmodul (25) nach Anspruch 1,
- aufweisend eine im ersten Gehäuse (60) angeordnete erste Steuereinrichtung (280) zur Steuerung der Antriebseinrichtung (210),
- wobei die erste Anschlussseite (40) wenigstens eine erste Kontakteinrichtung (145) und die zweite Anschlussseite (45) eine zweite Kontakteinrichtung (205) zur Datenübertragung aufweist,
- wobei die erste Kontakteinrichtung (145) zur Übertragung des elektrischen Signals und/oder des optischen Signals mit der zweiten Kontakteinrichtung (205) datentechnisch verbunden ist,
- wobei die erste Steuereinrichtung (280) mit der ersten Kontakteinrichtung (145) und/oder der zweiten Kontakteinrichtung (205) datentechnisch verbunden ist,
- wobei die erste Steuereinrichtung (280) ausgebildet ist, auf Grundlage des optischen und/oder elektrischen Signals die Antriebseinrichtung (210) zu steuern,
- wobei vorzugsweise die erste Kontakteinrichtung (145) und die zweite Kontakteinrichtung (205) korrespondierend zueinander ausgebildet sind.

3. Aktives Armmodul (25) nach einem der vorhergehenden Ansprüche,
- wobei die erste Anschlussseite (40) eine erste Fluidkontakteinrichtung (130) und die zweite Anschlussseite (45) eine zweite Fluidkontakteinrichtung (185) aufweist,
- wobei die erste Fluidkontakteinrichtung (130) fluidisch mit der zweiten Fluidkontakteinrichtung (185) verbunden ist, wobei über die erste Fluidkontakteinrichtung (130) und die zweite Fluidkontakteinrichtung (185) hinweg das Fluid (51) übertragbar ist,
- wobei vorzugsweise die erste Fluidkontakteinrichtung (130) und die zweite Fluidkontakteinrichtung (185) korrespondierend zueinander ausgebildet sind.

4. Aktives Armmodul (25) nach einem der vorhergehenden Ansprüche,
- wobei die erste Anschlussseite (40) eine erste Leistungskontakteinrichtung (135) sowie eine Anschlussplatte (95), und die zweite Anschlussseite (45) eine zweite Leistungskontakteinrichtung (195) aufweist,
- wobei die erste Leistungskontakteinrichtung (135) und/oder die zweite Leistungskontakteinrichtung (195) mit einer elektrischen Energiequelle (52) zur Leistungsversorgung der Antriebseinrichtung (210) verbindbar ist,
- wobei die Anschlussplatte (95) zur mechanischen Befestigung eines weiteren Moduls (25, 30, 410) ausgebildet ist und sich zumindest abschnittsweise in einer Radialebene zur Rotationsachse (Raₙ) erstreckt,
- wobei die Anschlussplatte (95) rotierbar um die Rotationsachse (Raₙ) gelagert ist und die erste Leistungskontakteinrichtung (135) an der Anschlussplatte (95) mechanisch befestigt ist,
- wobei die erste Leistungskontakteinrichtung (135) elektrisch zur Übertragung der elektrischen Leistung mit der zweiten Leistungskontakteinrichtung (195) verbunden ist,
- wobei vorzugsweise die erste Leistungskontakteinrichtung (135) und die zweite Leistungskontakteinrichtung (195) korrespondierend zueinander ausgebildet sind.

5. Aktives Armmodul (25) nach Anspruch 4, wobei die erste Steuereinrichtung (280) mit der ersten Leistungskontakteinrichtung (135) und/oder der zweiten Leistungskontakteinrichtung (195) elektrisch eingangsseitig und ausgangsseitig mit dem Antriebseinrichtung (210) verbunden ist.

6. Aktives Armmodul (25) nach einem der vorhergehenden Ansprüche, aufweisend eine Sensoreinrichtung (275),
- wobei die Sensoreinrichtung (275) wenigstens einen Sensor (294) und ein Signalelement (295) umfasst,
- wobei das Signalelement (295) drehfest mit der ersten Anschlussseite (40) verbunden ist und der Sensor (294) ausgebildet ist, das Signalelement (295) zu erfassen und auf Grundlage einer erfassten Position des Signalelements (295) ein Positionssignal bereitzustellen,
- wobei vorzugsweise die Sensoreinrichtung (275) axial auf einer der ersten Anschlussseite (40) abgewandten Seite der Antriebseinrichtung (210) angeordnet ist.

7. Aktives Armmodul (25) nach einem der vorhergehenden Ansprüche,
- wobei das erste Gehäuse (60) zumindest abschnittsweise röhrenförmig ausgebildet ist,
- wobei vorzugsweise von der zweiten Anschlussseite (45) hin zu der ersten Anschlussseite (40) sich das erste Gehäuse (60) verjüngt.

8. Aktives Armmodul (25) nach einem der vorhergehenden Ansprüche,
- wobei das Getriebe (225) eine zweite Eingangsseite (235) aufweist,
- wobei die zweite Eingangsseite (235) drehfest mit dem ersten Gehäuse (60) verbunden ist,
- und/oder
- wobei das Getriebe (225) wenigstens ein Planetengetriebe und/oder ein Exzentergetriebe, insbesondere ein Zykloidgetriebe und/oder ein Spannungswellengetriebe, aufweist.

9. Industrieroboter (10) aufweisend eine Roboterbasis (15) und einen Roboterarm (20), wobei der Roboterarm (20) modular aufgebaut ist und eine Mehrzahl von Armmodulen (18) aufweist, wobei für jede Rotationsachse ein aktives Armmodul (25) nach einem der Ansprüche 1 bis 8 vorgesehen ist,
- wobei ein erstes Armmodul (18) des Roboterarms (20) mit der Roboterbasis (15) verbunden ist,
- wobei die Roboterbasis (15) ausgebildet ist, ein Fluid (51) und/oder ein optisches und/oder elektrisches Signal und/oder die elektrische Leistung mit dem ersten Armmodul (18) auszutauschen.

10. Industrieroboter (10) nach Anspruch 9, mit einem passives Armmodul (30) zur Kombination mit dem aktiven Armmodul (25),
- aufweisend ein sich entlang einer Längsachse (Laₙ) erstreckendes zweites Gehäuse (70) und jeweils stirnseitig am zweiten Gehäuse (70) angeordnet eine dritte Anschlussseite (50) und eine vierte Anschlussseite (55),
- wobei das zweite Gehäuse (70) die dritte Anschlussseite (50) mechanisch mit der vierten Anschlussseite (55) verbindet,
- wobei an der dritten Anschlussseite (50) und/oder an der vierten Anschlussseite (55) eine erste und/oder zweite Anschlussseite (40, 45) des aktiven Armmoduls (25) oder ein Endmodul (410) des Roboterarms (20) anschließbar ist,
- wobei über die dritte Anschlussseite (50) und/oder über die vierte Anschlussseite (55) hinweg ein optisches Signal und/oder ein elektrisches Signal und/oder elektrische Leistung und/oder ein Fluid (51) mit dem aktiven Armmodul (25) austauschbar ist, und die dritte Anschlussseite (50) optisch und/oder elektrisch und/oder leistungselektrisch und/oder fluidisch mit der vierten Anschlussseite (55) verbunden ist.

11. Industrieroboter (10) nach Anspruch 10,
- wobei beim passives Armmodul (30) die dritte Anschlussseite (50) und die vierte Anschlussseite (55) jeweils senkrecht zu der Längsachse (Laₙ) angeordnet sind,
- wobei das zweite Gehäuse (70) des passiven Armmoduls (30) hohlkörperartig ausgebildet ist und innenseitig in dem zweiten Gehäuse (70) wenigstens eine elektrische Leitung, ein Lichtwellenleiter und/oder eine fluidische Leitung und/oder ein Lichtwellenleiter zur Verbindung der dritten Anschlussseite (50) mit der vierten Anschlussseite (55) angeordnet ist.

12. Industrieroboter (10) nach einem der Ansprüche 9 bis 11, mit einem Endmodul (410), aufweisend eine Endanschlussseite (415) und ein Endgehäuse (420),
- wobei die Endanschlussseite (415) drehfest mit dem Endgehäuse (420) verbunden ist,
- wobei die Endanschlussseite (415) korrespondierend zu einer ersten Anschlussseite (40) und/ oder einer zweiten Anschlussseite (45) des aktiven Armmoduls (25) des Roboterarms (20) ausgebildet und mit der ersten Anschlussseite (40) und/ oder der zweiten Anschlussseite (45) verbindbar ist,
- und/oder
- wobei die Endanschlussseite (415) korrespondierend zu einer dritten und/oder vierten Anschlussseite (50, 55) eines passiven Armmoduls (30) ausgebildet und/oder mit der dritten und/oder der vierten Anschlussseite (50, 55) verbindbar ist,
- wobei über die Endanschlussseite (415) hinweg wenigstens ein elektrisches und/oder optisches Signal und/oder ein Fluid (51) und/oder elektrische Leistung mit dem passiven Armmodul (30) und/oder dem aktiven Armmodul (25) austauschbar ist.

## Claims

1. Active arm module (25) for a robot arm (20) of a modular industrial robot (10),
- having a first housing (60), a first connection side (40), a second connection side (45) arranged with an offset relative to the first connection side (40), and a drive device (210),
- wherein the first connection side (40) is mounted such that it can rotate with respect to the first housing (60) about an axis of rotation (Raₙ) and is connected to the drive device (210) in a torque-locking manner,
wherein the second connection side (45) is co-rotationally connected to the first housing (60) and is oriented relative to a connection axis (155) which is aligned at right angles to the axis of rotation (Raₙ) and extends in a plane of rotation of the axis of rotation (Raₙ),
- wherein the drive device (210) is arranged in the first housing (60) and is designed to rotate the first connection side (40) controllably relative to the first housing (60) about the axis of rotation (Raₙ),
- wherein a further module (25, 30, 410) of the robot arm (20) can be connected to the first and/or the second connection side (40, 45),
- wherein means for the fluidic, electric and data-based connection of the first connection side (40) to the second connection side (45) are arranged in the first housing (60), which connect the first connection side (40) optically and/or electrically and/or power-electrically and/or fluidically to the second connection side (45), so that an optical signal and/or an electrical signal and/or electrical power and/or a fluid (51) can be exchanged with the further module (25, 30, 410) via the first connection side (40) and/or via the second connection side (45),
- wherein the drive device (210) is arranged adjacent to the first connection side (40) in the axial direction; the drive device (210) comprises a stator (250) and a rotor (245); the rotor (245) is connected to the first connection side (40) in a torque-locking manner and is mounted such that it can rotate about the axis of rotation (Raₙ), the stator (250) being co-rotationally connected to the first housing (60) on the circumferential side,
- wherein the drive device (210) has a gear mechanism (225) which, relative to the axis of rotation (Raₙ), is arranged axially between the rotor (245) and the first connection side (40) and has at least a first input side (230) and an output side (240), wherein the first input side (230) is connected to the rotor (245) and the output side (240) is connected to the first connection side (40), in each case in a torque-locking manner,
wherein the gear mechanism (225) is designed to reduce a drive speed from the first input side (230) to an output drive speed on the output side (240),
- wherein the drive device (210) has a first hollow shaft (260), a second hollow shaft (285) and a bearing assembly (220); the first hollow shaft (260) and the second hollow shaft (285) are mounted by the bearing assembly (220) so as to be rotatable about the axis of rotation (Raₙ), wherein the first hollow shaft (260) accommodates the second hollow shaft (285) and the bearing assembly (220) supports the first hollow shaft (260) such that it can rotate with respect to the second hollow shaft (285); the first hollow shaft (260) connects the rotor (245) co-rotationally to the first input side (230) of the gear mechanism (225); the second hollow shaft (285) connects the output side (240) of the gear mechanism (225) to the first connection side (40),
- wherein, in the axial direction on the side facing away from the first connection side (40), there is arranged a transfer device (265), which has a pick-up (300) co-rotationally connected to the first housing (60) and a transfer rotor (305) mounted such that it can rotate about the axis of rotation (Raₙ), wherein the pick-up (300) and the transfer rotor (305) are electrically and fluidically coupled to each other,
- wherein the second hollow shaft (285) is designed to be axially longer than the first hollow shaft (260) and reaches through the transfer device (265), wherein the transfer rotor (305) is co-rotationally connected to the first connection side (40) by the second hollow shaft (285); the transfer rotor (305) is connected electrically to a first power contact device (135) of the first connection side (40) by the second hollow shaft (285) and fluidically via a fluid channel to a first fluid contact device (130) of the first connection side (40), wherein the pick-up (300) is connected electrically to a second power contact device (195) of the second connection side (45) and fluidically to a second fluid contact device (185) of the second connection side (45).

2. Active arm module (25) according to Claim 1,
- having a first control device (280) arranged in the first housing (60) for controlling the drive device (210),
- wherein the first connection side (40) has at least a first contact device (145) and the second connection side (45) has a second contact device (205) for data transmission,
- wherein the first contact device (145) has a data-based connection to the second contact device (205) for the transmission of the electrical signal and/or the optical signal,
- wherein the first control device (280) has a data-based connection to the first contact device (145) and/or the second contact device (205),
- wherein the first control device (280) is designed to control the drive device (210) on the basis of the optical and/or electrical signal,
- wherein the first contact device (145) and the second contact device (205) are preferably designed to correspond to each other.

3. Active arm module (25) according to one of the preceding claims,
- wherein the first connection side (40) has a first fluid contact device (130) and the second connection side (45) has a second fluid contact device (185),
- wherein the first fluid contact device (130) is fluidically connected to the second fluid contact device (185), wherein the fluid (51) can be transferred via the first fluid contact device (130) and the second fluid contact device (185),
- wherein the first fluid contact device (130) and the second fluid contact device (185) are preferably designed to correspond to each other.

4. Active arm module (25) according to one of the preceding claims,
- wherein the first connection side (40) has a first power contact device (135) and a connection plate (95), and the second connection side (45) has a second power contact device (195),
- wherein the first power contact device (135) and/or the second power contact device (195) can be connected to an electrical power source (52) for the power supply of the drive device (210),
- wherein the connection plate (95) is designed for the mechanical attachment of a further module (25, 30, 410) and extends at least partly in a radial plane to the axis of rotation (Raₙ),
- wherein the connection plate (95) is mounted such that it can rotate about the axis of rotation (Raₙ) and the first power contact device (135) is mechanically attached to the connection plate (95),
- wherein the first power contact device (135) is electrically connected to the second power contact device (195) for the transmission of the electrical power,
- wherein the first power contact device (135) and the second power contact device (195) are preferably designed to correspond to each other.

5. Active arm module (25) according to Claim 4, wherein the first control device (280) is electrically connected on the input side to the first power contact device (135) and/or the second power contact device (195), and on the output side to the drive device (210).

6. Active arm module (25) according to one of the preceding claims, having a sensor device (275),
- wherein the sensor device (275) comprises at least one sensor (294) and a signal element (295),
- wherein the signal element (295) is co-rotationally connected to the first connection side (40) and the sensor (294) is designed to detect the signal element (295) and to provide a position signal on the basis of a detected position of the signal element (295),
- wherein the sensor device (275) is preferably arranged axially on a side of the drive device (210) that faces away from the first connection side (40).

7. Active arm module (25) according to one of the preceding claims,
- wherein the first housing (60) is at least partly tubular,
- wherein the first housing (60) preferably tapers from the second connection side (45) towards the first connection side (40).

8. Active arm module (25) according to one of the preceding claims,
- wherein the gear mechanism (225) has a second input side (235),
- wherein the second input side (235) is co-rotationally connected to the first housing (60),
- and/or
- wherein the gear mechanism (225) has at least one planetary gear mechanism and/or an eccentric gear mechanism, in particular a cycloid gear mechanism and/or a harmonic gear mechanism.

9. Industrial robot (10) having a robot base (15) and a robot arm (20),
wherein the robot arm (20) is of modular construction and has a plurality of arm modules (18), wherein an active arm module (25) according to one of Claims 1 to 8 is provided for each axis of rotation,
- wherein a first arm module (18) of the robot arm (20) is connected to the robot base (15),
- wherein the robot base (15) is designed to exchange a fluid (51) and/or an optical and/or electrical signal and/or electrical power with the first arm module (18).

10. Industrial robot (10) according to Claim 9, having a passive arm module (30) for combination with the active arm module (25),
- having a second housing (70) extending along a longitudinal axis (Laₙ), and a third connection side (50) and a fourth connection side (55), each arranged on a front face of the second housing (70),
- wherein the second housing (70) connects the third connection side (50) mechanically to the fourth connection side (55),
- wherein a first and/or second connection side (40, 45) of the active arm module (25) or an end module (410) of the robot arm (20) can be connected to the third connection side (50) and/or to the fourth connection side (55),
- wherein an optical signal and/or an electrical signal and/or electrical power and/or a fluid (51) can be exchanged with the active arm module (25) via the third connection side (50) and/or via the fourth connection side (55), and the third connection side (50) is connected optically and/or electrically and/or power-electrically and/or fluidically to the fourth connection side (55).

11. Industrial robot (10) according to Claim 10,
- wherein, in the passive arm module (30), the third connection side (50) and the fourth connection side (55) are each arranged at right angles to the longitudinal axis (Laₙ),
- wherein the second housing (70) of the passive arm module (30) is designed in the manner of a hollow body and, in the inside, at least one electric line, an optical waveguide and/or a fluidic line and/or an optical waveguide for the connection of the third connection side (50) to the fourth connection side (55) is arranged in the second housing (70).

12. Industrial robot (10) according to one of Claims 9 to 11, having an end module (410), having an end connection side (415) and an end housing (420),
- wherein the end connection side (415) is co-rotationally connected to the end housing (420),
- wherein the end connection side (415) is designed to correspond to a first connection side (40) and/or a second connection side (45) of the active arm module (25) of the robot arm (20), and can be connected to the first connection side (40) and/or the second connection side (45),
- and/or
- wherein the end connection side (415) is designed to correspond to a third and/or fourth connection side (50, 55) of a passive arm module (30) and/or can be connected to the third and/or the fourth connection side (50, 55),
- wherein at least one electrical and/or optical signal and/or a fluid (51) and/or electrical power can be exchanged with the passive arm module (30) and/or the active arm module (25) via the end connection side (415).

## Revendications

1. Module de bras actif (25) pour un bras de robot (20) d'un robot industriel (10) modulaire,
- possédant un premier boîtier (60), un premier côté de raccordement (40), un deuxième côté de raccordement (45) disposé décalé par rapport au premier côté de raccordement (40) et un dispositif d'entraînement (210),
- le premier côté de raccordement (40) étant monté rotatif autour d'un axe de rotation (Raₙ) par rapport au premier boîtier (60) et étant relié avec transmission de couple avec le dispositif d'entraînement (210),
le deuxième côté de raccordement (45) étant relié en rotation solidaire avec le premier boîtier (60) et orienté par rapport à un axe de raccordement (155) qui est aligné perpendiculairement à l'axe de rotation (Raₙ) et suit un tracé dans un plan de rotation de l'axe de rotation (Raₙ),
- le dispositif d'entraînement (210) étant disposé dans le premier boîtier (60) et configuré pour faire tourner le premier côté de raccordement (40) par rapport au premier boîtier (60) de manière commandée autour de l'axe de rotation (Raₙ),
- un module supplémentaire (25, 30, 410) du bras de robot (20) pouvant être raccordé au premier et/ou au deuxième côté de raccordement (40, 45),
- des moyens de liaison fluidique, électrique et informatique du premier côté de raccordement (40) avec le deuxième côté de raccordement (45) étant disposés dans le premier boîtier (60), lesquels relient optiquement et/ou électriquement et/ou électriquement de puissance et/ou fluidiquement le premier côté de raccordement (40) au deuxième côté de raccordement (45), de sorte qu'un signal optique et/ou un signal électrique et/ou une puissance électrique et/ou un fluide (15) peut être échangé avec le module supplémentaire (25, 30, 410) par le biais du premier côté de raccordement (40) et/ou par le biais du deuxième côté de raccordement (45),
- le dispositif d'entraînement (210) étant disposé adjacent au premier côté de raccordement (40) dans la direction axiale, le dispositif d'entraînement (210) comportant un stator (250) et un rotor (245), le rotor (245) étant relié avec transmission de couple au premier côté de raccordement (40) et étant monté rotatif autour de l'axe de rotation (Raₙ), le stator (250) étant relié du côté périphérique en rotation solidaire avec le premier boîtier (60),
- le dispositif d'entraînement (210) possédant un engrenage (225) qui, en référence axiale, est disposé entre le rotor (245) et le premier côté de raccordement (40) et possède au moins un premier côté d'entrée (230) et un côté de sortie (240), le premier côté d'entrée (230) étant relié au rotor (245) et le côté de sortie (240) au premier côté de raccordement (40), respectivement avec transmission de couple,
l'engrenage (225) étant configuré pour réduire une vitesse de rotation d'entraînement du premier côté d'entrée (230) en une vitesse de rotation d'entraînement au niveau du côté de sortie (240),
- le dispositif d'entraînement (210) possédant un premier arbre creux (260), un deuxième arbre creux (285) et un arrangement de palier (220), le premier arbre creux (260) et le deuxième arbre creux (285) étant supportés par l'arrangement de palier (220) à rotation autour de l'axe de rotation (Raₙ), le premier arbre creux (260) accueillant le deuxième arbre creux (285) et l'arrangement de palier (220) supportant le premier arbre creux (260) à rotation par rapport au deuxième arbre creux (285), le premier arbre creux (260) reliant le rotor (245) en rotation solidaire au premier côté d'entrée (230) de l'engrenage (225), le deuxième arbre creux (285) reliant le côté de sortie (240) de l'engrenage (225) au premier côté de raccordement (40),
- un dispositif de transfert (265) étant disposé dans la direction axiale sur le côté à l'opposé du premier côté de raccordement (40), lequel possède un récepteur (300) relié en rotation solidaire avec le premier boîtier (60) et un rotor de transfert (305) monté rotatif autour de l'axe de rotation (Raₙ), le récepteur (300) et le rotor de transfert (305) étant couplés électriquement et fluidiquement l'un à l'autre,
- le deuxième arbre creux (285) étant configuré axialement plus long que le premier arbre creux (260) et traversant le dispositif de transfert (265), le rotor de transfert (305) étant relié en rotation solidaire au premier côté de raccordement (40) par le deuxième arbre creux (285), le rotor de transfert (305) étant relié électriquement par le deuxième arbre creux (285) à un premier dispositif de contact de puissance (135) du premier côté de raccordement (40) et fluidiquement, par le biais d'un canal de fluide, à un premier dispositif de contact fluidique (130) du premier côté de raccordement (40), le récepteur (300) étant relié électriquement à un deuxième dispositif de contact de puissance (195) du deuxième côté de raccordement (45) et fluidiquement à un deuxième dispositif de contact fluidique (185) du deuxième côté de raccordement (45).

2. Module de bras actif (25) selon la revendication 1,
- possédant un premier dispositif de commande (280) disposé dans le premier boîtier (60) et servant à commander le dispositif d'entraînement (210),
- le premier côté de raccordement (40) possédant au moins un premier dispositif de contact (145) et le deuxième côté de raccordement (45) un deuxième dispositif de contact (205) pour la transmission de données,
- le premier dispositif de contact (145) étant relié informatiquement au deuxième dispositif de contact (205) pour la transmission du signal électrique et/ou du signal optique,
- le premier dispositif de commande (280) étant relié informatiquement au premier dispositif de contact (145) et/ou au deuxième dispositif de contact (205),
- le premier dispositif de commande (280) étant configuré pour commander le dispositif d'entraînement (210) sur la base du signal optique et/ou électrique,
- le premier dispositif de contact (145) et le deuxième dispositif de contact (205) étant de préférence configurés en correspondance l'un à l'autre.

3. Module de bras actif (25) selon l'une des revendications précédentes,
- le premier côté de raccordement (40) possédant un premier dispositif de contact fluidique (130) et le deuxième côté de raccordement (45) possédant un deuxième dispositif de contact fluidique (185),
- le premier dispositif de contact fluidique (130) étant relié fluidiquement au deuxième dispositif de contact fluidique (185), le fluide (51) pouvant être transmis par le biais du premier dispositif de contact fluidique (130) et du deuxième dispositif de contact fluidique (185),
- le premier dispositif de contact fluidique (130) et le deuxième dispositif de contact fluidique (185) étant de préférence configurés en correspondance l'un à l'autre.

4. Module de bras actif (25) selon l'une des revendications précédentes,
- le premier côté de raccordement (40) possédant un premier dispositif de contact de puissance (135) ainsi qu'une plaque de raccordement (95) et le deuxième côté de raccordement (45) possédant un deuxième dispositif de contact de puissance (195),
- le premier dispositif de contact de puissance (135) et/ou le deuxième dispositif de contact de puissance (195) pouvant être reliés à une source d'énergie (52) pour l'alimentation en puissance du dispositif d'entraînement (210),
- la plaque de raccordement (95) étant configurée pour la fixation mécanique d'un module supplémentaire (25, 30, 410) et s'étendant au moins par certaines portions dans un plan radial par rapport à l'axe de rotation (Raₙ),
- la plaque de raccordement (95) étant montée rotative autour de l'axe de rotation (Raₙ) et le premier dispositif de contact de puissance (135) étant fixé mécaniquement à la plaque de raccordement (95),
- le premier dispositif de contact de puissance (135) étant relié électriquement au deuxième dispositif de contact de puissance (195) en vue de la transmission de la puissance électrique,
- le premier dispositif de contact de puissance (135) et le deuxième dispositif de contact de puissance (195) étant de préférence configurés en correspondance l'un à l'autre.

5. Module de bras actif (25) selon la revendication 4, le premier dispositif de commande (280) étant relié électriquement au premier dispositif de contact de puissance (135) et/ou au deuxième dispositif de contact de puissance (195) du côté de l'entrée et au dispositif d'entraînement (210) du côté de la sortie.

6. Module de bras actif (25) selon l'une des revendications précédentes, possédant un dispositif capteur (275),
- le dispositif capteur (275) comportant au moins un capteur (294) et un élément de signal (295),
- l'élément de signal (295) étant relié en rotation solidaire avec le premier côté de raccordement (40) et le capteur (294) étant configuré pour détecter l'élément de signal (295) et fournir un signal de position sur la base d'une position détectée de l'élément de signal (295),
- le dispositif capteur (275) étant de préférence disposé axialement sur un côté du dispositif d'entraînement (210) à l'opposé du premier côté de raccordement (40).

7. Module de bras actif (25) selon l'une des revendications précédentes,
- le premier boîtier (60) étant réalisé en forme de tube au moins dans certaines portions,
- le premier boîtier (60) se rétrécissant de préférence du deuxième côté de raccordement (45) vers le premier côté de raccordement (40).

8. Module de bras actif (25) selon l'une des revendications précédentes,
- l'engrenage (225) possédant un deuxième côté d'entrée (235),
- le deuxième côté d'entrée (235) étant relié en rotation solidaire avec le premier boîtier (60),
- et/ou
- l'engrenage (225) possédant au moins un engrenage planétaire et/ou un engrenage excentrique, notamment un engrenage cycloïde et/ou un engrenage à ondes de déformation.

9. Robot industriel (10) possédant une base de robot (15) et un bras de robot (20),
le bras de robot (20) étant de construction modulaire et possédant une pluralité de modules de bras (18), un module de bras actif (25) selon l'une des revendications 1 à 8 étant prévu pour chaque axe de rotation,
- un premier module de bras (18) du bras de robot (20) étant relié à la base de robot (15),
- la base de robot (15) étant configurée pour échanger un fluide (51) et/ou un signal optique et/ou électrique et/ou de la puissance électrique avec le premier module de bras (18).

10. Robot industriel (10) selon la revendication 9, comprenant un module de bras passif (30) destiné à être combiné avec le module de bras actif (25),
- possédant un deuxième boîtier (70) qui s'étend le long d'un axe longitudinal (Laₙ) et un troisième côté de raccordement (50) ainsi qu'un quatrième côté de raccordement (55), respectivement disposés côté frontal sur le deuxième boîtier (70),
- le deuxième boîtier (70) reliant mécaniquement le troisième côté de raccordement (50) au quatrième côté de raccordement (55),
- un premier et/ou deuxième côté de raccordement (40, 45) du module de bras actif (25) ou un module terminal (410) du bras de robot (20) pouvant être raccordé au troisième côté de raccordement (50) et/ou au quatrième côté de raccordement (55),
- un signal optique et/ou un signal électrique et/ou de la puissance électrique et/ou un fluide (51) pouvant être échangé avec le module de bras actif (25) par le biais du troisième côté de raccordement (50) et/ou du quatrième côté de raccordement (55), et le troisième côté de raccordement (50) étant relié optiquement et/ou électriquement et/ou électriquement de puissance et/ou fluidiquement au quatrième côté de raccordement (55).

11. Robot industriel (10) selon la revendication 10,
- sur le module de bras passif (30), le troisième côté de raccordement (50) et le quatrième côté de raccordement (55) étant respectivement disposés perpendiculairement à l'axe longitudinal (Laₙ),
- le deuxième boîtier (70) du module de bras passif (30) étant configuré à la manière d'un corps creux et au moins un câble électrique, une fibre optique et/ou une conduite fluidique et/ou une fibre optique destiné(e) à relier le troisième côté de raccordement (50) au quatrième côté de raccordement (55) étant disposé(e) du côté intérieur dans le deuxième boîtier (70).

12. Robot industriel (10) selon l'une des revendications 9 à 11, comprenant un module terminal (410), possédant un côté de raccordement terminal (415) et un boîtier terminal (420),
- le côté de raccordement terminal (415) étant relié en rotation solidaire avec le boîtier terminal (420),
- le côté de raccordement terminal (415) étant configuré en correspondance avec un premier côté de raccordement (40) et/ou un deuxième côté de raccordement (45) du module de bras actif (25) du bras de robot (20) et pouvant être relié au premier côté de raccordement (40) et/ou au deuxième côté de raccordement (45),
- et/ou
- le côté de raccordement terminal (415) étant configuré en correspondance avec un troisième et/ou un quatrième côté de raccordement (50, 55) d'un module de bras passif (30) et/ou pouvant être relié au troisième et/ou au quatrième côté de raccordement (50, 55),
- au moins un signal électrique et/ou optique et/ou un fluide (51) et/ou de la puissance électrique pouvant être échangé avec le module de bras passif (30) et/ou le module de bras actif (25) par le biais du côté de raccordement terminal (415).
